(19) Europäisches Patentamt

European Patent Office

Office européen des brevets

(11) **EP 1 505 580 A2**

(12) **EUROPEAN PATENT APPLICATION**

(43) Date of publication:
**09.02.2005 Bulletin 2005/06**

(51) Int Cl.⁷: **G11B 7/007**

(21) Application number: **04017512.7**

(22) Date of filing: **23.07.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **08.08.2003 JP 2003290698**

(71) Applicant: **Kabushiki Kaisha Toshiba
Tokyo 105-8001 (JP)**

(72) Inventors:
• **Ando, Hideo c/o Intellectual Property Division
Minato-ku Tokyo 105-8001 (JP)**
• **Ashida, Sumio c/o Intellectual Property Division
Minato-ku Tokyo 105-8001 (JP)**

(74) Representative: **Henkel, Feiler & Hänzel
Möhlstrasse 37
81675 München (DE)**

(54) **Information recording medium, method of recording information thereto, and information recording/reproducing apparatus**

(57) The present invention provides an information recording medium and an information recording method that can stably record and reproduce information to or from an information recording medium capable of recording and reproducing information to and from two recording layers from one side thereof and can eliminate an effect of a crosstalk. In the invention, premarks (different from initialization) are formed to each of first and second recording layers of an information recording medium (1) simultaneously with the initialization of the respective recording layers using an elliptical laser spot (33). With this operation, information can be stably reproduced from an information recording medium having at least two recording layers.

Moving direction of spot ⟵

31          33

**FIG. 5**

**Description**

The present invention relates to a structure of an information recording medium and a method of recording information thereto, and more particularly, to a structure of a single-sided two-recording-layer optical disk medium and a method of recording information thereto.

Optical disks of a music CD standard, and optical disks of a DVD (digital versatile disk) standard capable of recording images have become widespread as information recording media, that is, as optical disks that can record information using light beams.

As current DVD standards, there are a read-only DVD-ROM standard, write-once type DVD-R standard, rewritable type (about 1000 times) DVD-RW standard, and rewritable type (more than 10000 times) DVD-RAM standard.

Note that in the optical disks of the rewritable type DVD-RW standard and the DVD-RAM standard, it is required to initialize a recording layer (recording film), that is, a phase change layer.

To initialize the recording film, a method of using, for example, radiant heat from a lamp is proposed in Japanese Patent No. 2531245.

Further, to initialize the recording layer, a method of irradiating an elliptic beam onto the entire surface of an optical disk is proposed in Japanese Patent No. 2985295. The above publication describes that the recording film is continuously exposed with the elliptic beam.

However, the above-described Japanese Patent No. 2531254 only describes a method of applying radiant heat onto the entire surface of the disk and describes nothing as to a case where two or more recording layers (recording films) are employed.

In contrast, in Japanese Patent No. 2985295 described above, a laser beam is exposed in association with a time during which it passes through one point on a recording layer. However, since the laser beam is irradiated on the premise that it continuously exposes the recording layer so that the entire surface thereof is uniformly initialized, a case where two or more recording layers (recording films) are employed is not described in the publication.

Incidentally, in a DVD optical disk having two or more recording layers, a system for reading information recorded on two layers from one side of a reproduction-only type optical disk has become commercially practical. However, a recordable or rewritable type information recording medium, in which information is recorded to two or more recording layers from one side thereof or information is reproduced from an arbitrary recording layer, has not almost become commercially practical.

As a reason thereof, it is.contemplated that the reproduction-only optical disk (DVD-ROM/video) is less affected by an interlayer crosstalk by which any signal is reproduced from a remaining layer while information is reproduced from one layer on one side because recorded pits are previously formed on the entire surface of the disk in an embossed shape.

In contrast, when information recorded to an arbitrary layer is reproduced from one side of an optical disk on which two or more recording layers (films) are formed, recorded marks, which exist in a layer different from a layer from which information is intended to be reproduced, are not always arranged at positions that satisfy a certain condition and may be scattered. Accordingly, a problem arises in that the optical disk is greatly affected by an interlayer crosstalk. Further, in a recordable type information recording medium, address information for indicating the positions, at which recorded marks are formed on a recording layer, is previously recorded on the information recording medium. However, when the address is recorded in the shape of prepits, a problem arises in that the recording medium is also affected by . an interlayer crosstalk due to the positions of the prepits.

According to the present invention, there is provided an information recording medium having a first recording layer to which information can be recorded, and a second recording layer to which information, which is different from the information recorded to the first recording layer, can be recorded by a light beam that has passed through the first recording layer, comprising premarks acting as recorded marks recorded previously across at least two tracks arranged to the first and second recording layers, respectively.

According to the present invention, there is further provided an information recording medium comprising: at least one recording layer capable of recording information by a spot light formed by converging a light beam; guide grooves which are formed in the recording layer in a spiral shape and which guide the spot light to a predetermined position of the recording layer; transparent layers which are formed on a side of the recording layer to which the spot light is irradiated and on a side opposite the side to which the spot light is irradiated and through which the spot light can passes; and premarks formed at arbitrary positions at which the guide grooves are located adjacent to each other in a radial direction in a size not smaller than at least two guide grooves, the premarks setting, when a reproduction spot light is irradiated thereto, a level of a reflected light beam, which is changed according to the presence or absence of recorded information at the position to which the reproduction spot light is irradiated within a predetermined range.

According to the present invention, there is still further provided an information recording/reproducing apparatus comprising: an optical head which irradiates a spot light having a predetermined spot diameter to a disk-shaped information recording medium having a recording layer to which premarks are previously formed and obtains a reproduced signal from a light beam reflected from the recording layer; and a signal reproduction circuit which detects a wobble detection signal through a filter from the reproduced signal obtained from the recording layer of the information recording medium to which the premarks are previously formed by the optical head.

According to the present invention, there is still further provided an information recording method comprising: irradiating a first spot light to initialize recording layers and a second spot light to form premarks that set a level of a reflected light beam, which is changed according to the presence or absence of recorded information at a position of a reproducing spot light when it is reflected by a recording layer, within a predetermined range to a recording medium having at least two recording layers.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a schematic view explaining an information recording medium as an embodiment of the present invention;
FIG. 2 is a schematic view explaining an interlayer thickness of the information recording medium shown in FIG. 1;
FIGS. 3A to 3C are schematic views explaining a known information recording medium;
FIG. 4 is a schematic view explaining a method of forming a premark to the information recording medium shown in FIG. 1;
FIG. 5 is a schematic view explaining an example of a beam spot on a recording layer irradiated by a recording optical head for the premark explained in FIG. 4;
FIG. 6 is a schematic view explaining a method of forming a premark to the information recording medium shown in FIG. 1;
FIG. 7 is a schematic view explaining a forming method subsequent to the premark forming method shown in FIG. 6;
FIG. 8 is a schematic view explaining another applied example of the embodiment of the present invention;
FIGS. 9A to 9C are schematic views explaining an example in which data is recorded to the information recording medium to which the premark explained in FIGS. 1, 2, 3A to 3C, and 4 to 8 has been formed;
FIGS. 10A to 10C are schematic views explaining an interlayer crosstalk caused in a current ordinary information recording medium having a prepit region;
FIG. 11 is a schematic view explaining a state of a spot on a photo detector used in an optical head of an information recording/reproducing apparatus for recording information to a two-recording-layer information recording medium of the present invention and for reproducing information therefrom;
FIG. 12 is a schematic block diagram explaining a circuit for detecting a wobble detection signal in an information recording/reproducing apparatus and an information recording/reproducing method of the present invention;
FIGS. 13A to 13D are schematic views explaining the relationship between a recording format in a recordable type recording medium and a recording format in a reproduction-only information recording medium;
FIG. 14 is a schematic view showing a zone structure in a rewritable type information recording medium;
FIG. 15 is a schematic view explaining a wobble modulation system;
FIG. 16 is a schematic view explaining a wobble modulation system in recording using a land and a groove for explaining occurrence of an indefinite bit;
FIG. 17 is a schematic view explaining a gray code for reducing the frequency of occurrence of the indefinite bit;
FIG. 18 is a schematic view explaining a special track code for reducing the frequency of occurrence of the indefinite bit;
FIGS. 19A to 19E are schematic views explaining a wobble address format on a recording type information recording medium;
FIG. 20 is a schematic view explaining a bit modulation rule;
FIG. 21 is a schematic view explaining a layout of periodic wobble address position information (WAP);
FIG. 22 is a schematic view explaining a layout of an address field in the WAP;
FIG. 23 is a schematic view explaining binary/gray code conversion;
FIG. 24 is a schematic view explaining a wobble data unit (WDU) in a synchronized field;
FIG. 25 is a schematic view explaining a WDU in an address field;
FIG. 26 is a schematic view explaining a WDU in a unity field;
FIG. 27 is a schematic view explaining a WDU in an outside mark;
FIG. 28 is a schematic view explaining a WDU in an inside mark;
FIG. 29 is a schematic view explaining a signal from a servo calibration mark 1 (SMC1);
FIG. 30 is a schematic view explaining a signal from a servo calibration mark 2 (SMC2);
FIG. 31 is a schematic view explaining an output signal of a serve calibration mark;
FIG. 32 is a schematic view explaining SCD, and a difference between normalized SCM1 and SCM2;
FIG. 33 is a schematic view explaining a layout of physical segments of a first physical segment of a track;

EP 1 505 580 A2

FIGS. 34A to 34F are schematic views explaining a data recording method for rewritable data recorded on a rewritable type information recording medium;

FIG. 35 is a schematic view explaining a layout of a recording cluster;

FIG. 36 is a schematic view explaining a layout of linking;

FIG. 37 is a schematic view explaining an example of address information buried in a land track;

FIG. 38 is a schematic view explaining an example in which a land address is formed by changing a groove width;

FIG. 39 is a schematic view explaining how the odd number and the even number of a land track are detected by changing a groove width;

FIG. 40 is a schematic view explaining another example for arranging an indefinite bit in a groove region in recording using a land and a groove;

FIG. 41 is a schematic view explaining a method of setting track number information of a rewritable type information recording medium;

FIG. 42 is a schematic view explaining detection of a wobble in a land track;

FIG. 43 is a schematic view explaining the relationship between address values detected in a land and a track in groove wobbling;

FIG. 44 is a schematic view explaining the relationship between a track number detected by groove wobbling and data detected in a land/track;

FIGS. 45A to 45C are schematic views explaining a reproduction only two-layered system lead-in area;

FIG. 46 is a schematic view explaining the mechanical dimensions of a reproduction-only type/write-once type/ rewritable type disks that are in coincidence with those of a current DVD;

FIGS. 47A and 47B are schematic views explaining a data layout in a rewritable type information recording medium;

FIGS. 48A and 48B are schematic views explaining a method of setting an address number in a data area in the rewritable type information recording medium;

FIG. 49 is a schematic view explaining an example of a structure of an optical head used in an information reproducing apparatus or a information recording/reproducing apparatus;

FIG. 50 is a schematic view explaining an example of a structure of an information recording/reproducing apparatus;

FIG. 51 is a schematic block diagram explaining an internal structure of an information recording/reproducing unit (physical block) in an information reproducing apparatus for reproducing information from the information recording medium explained above with reference to FIGS. 1 and 2, 3A to 3C, 4 to 8, and 9A to 9C or in an information recording/reproducing apparatus for recording new information to the information recording medium explained above with reference to FIGS. 1 and 2, 3A to 3C, 4 to 8, and 9A to 9C;

FIG. 52 is a schematic view explaining the feature of the present invention and various advantageous effects resulting from the feature;

FIG. 53 is a schematic view explaining an example of a configuration of a data frame;

FIG. 54 is a schematic view explaining an example of a data structure in data ID;

FIG. 55 is a schematic view explaining an example of an arrangement of a scrambled frame;

FIG. 56 is a schematic view explaining an interleave of a parity row;

FIGS. 57A and 57B are schematic views explaining a recorded data region;

FIG. 58 is a schematic view explaining an example of the contents of a sync code;

FIG. 59 is a schematic.view explaining an example of a combined pattern of continuous sink codes (when it moves between sectors);

FIG. 60 is a schematic view explaining an example of a combined pattern of continuous sink codes (when it is arranged across a guard region);

FIG. 61 is a schematic view explaining the relation of a case, in which a combined pattern of sink codes, which is out of plan, is detected, to an abnormal phenomenon;

FIG. 62 is a schematic view explaining an example of a hierarchical structure of the same data to be recorded on an information recording medium regardless of a type (of reproduction-only type/write-once type/rewritable type information recording media);

FIG. 63 is a schematic view explaining a data density in respective regions in a rewritable type information recording medium; and

FIG. 64 is a schematic view explaining an example of an abnormal phenomenon determination and application processing method when a result of detection of a combined pattern of synchronized codes is different from an expected one.

Embodiments of the present invention will be explained below in detail with reference to the drawings.

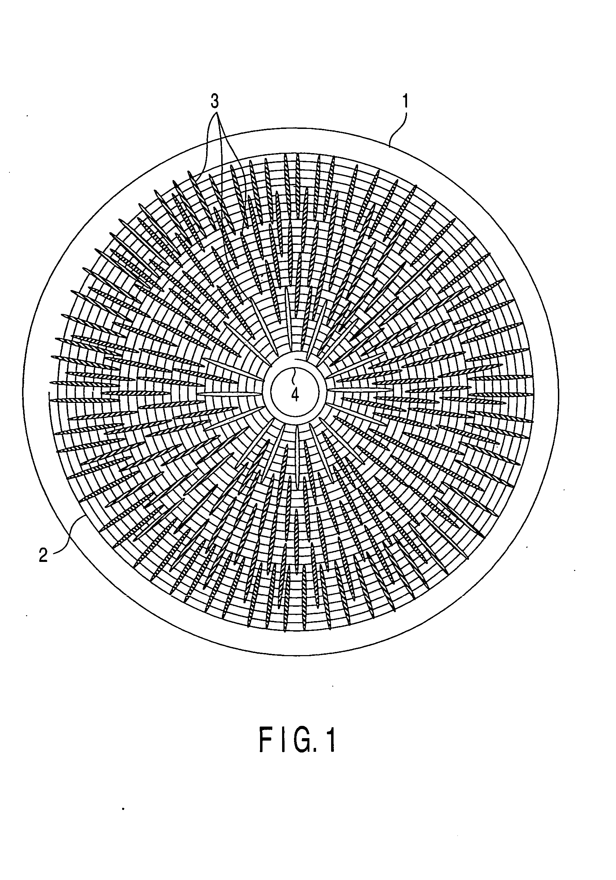

FIG. 1 explains an optical disk to which an embodiment of the present invention is applied.

As shown in FIG. 1, the optical disk, that is, an information recording medium 1 has such a structure that a track 2 is formed in a spiral or circular shape along a recording layer (recording surface or film), and recorded marks (user data) are formed along the track 2.

A feature of the present invention resides in that elliptic recorded marks, in which the long-axis direction of an ellipse extends in a radial direction, are recorded on one side of the information recording medium 1.

That is, as shown in FIG. 1, the recorded marks (hereinafter, referred to as "premarks") 3 that have been recorded previously have an elliptic shape extending in the radial direction of the information recording medium 1, and the long-axis direction of the ellipse is approximately aligned with the radial direction of the information recording medium 1.

The respective premarks (recorded marks that have been previously recorded) 3 are formed across two or more adjacent tracks 2 in the radial direction. The premarks 3 may be sequentially formed in a single track along the track. In this case, however, a time necessary to form the premarks 3 on the entire surface of the information recording medium 1 is increased.

A single-side two-recording-layer information recording medium has a problem in that an amount of effect of an interlayer crosstalk on the other layer is different depending on the presence or absence of a recording layer or on the presence or absence of recorded information.

Accordingly, a first feature of the present invention resides in that an interlayer crosstalk is eliminated by forming the premarks 3 to the respective recording layers of the information recording medium 1 in an approximately uniform density. The respective premarks 3 are formed in an arbitrary number or in an arbitrary density so as to have such a size that can provide a gap (density), in which at least one premark 3 exists, at least in a spot light formed by a reproducing light beam when the reproducing light beam is irradiated.

Further, a feature of the present invention resides in that the premarks 3 can be formed over the entire recording layer at a very high speed by forming them across adjacent tracks, that is, across at least two tracks 2 that are adjacent to each other in the radial direction of the information recording medium 1.

In the information recording medium 1 of the present invention shown in FIG. 1, the premarks 3 are formed in a slender shape having a long axis extending in the radial direction.

The premarks 3 are formed such that, when they make a round along the circumference of a circle along the same radius in the intermediate radius of the information recording medium 1 excluding the predetermined portions of the inner and outer radii thereof, the positions of at least two premarks are shifted from each other in the radial direction. That is, the premarks 3 are formed such that the centers of the long axes thereof are located along the track 2 formed in, for example, a spiral shape in the intermediate radius.

Further, the premarks 3 have such a feature that, when they make a round along the circumference of the circle along the same radius in the inner or outer radius of the information recording medium 1, that is, in the non-intermediate radius thereof, the positions of at least two different premarks are in coincidence with each other in the radial direction. In other words, the premarks 3 are formed such that the center of the long axis of every one of them intersects the track 2, which is formed in, for example, the spiral shape, at a different position thereof.

Note that, in the information recording medium (optical disk) 1 shown in FIG. 1, address information, which indicates positions on the information recording medium 1, is not formed in a known prepit address format, but formed by a wobble (wobble address will be explained below in detail).

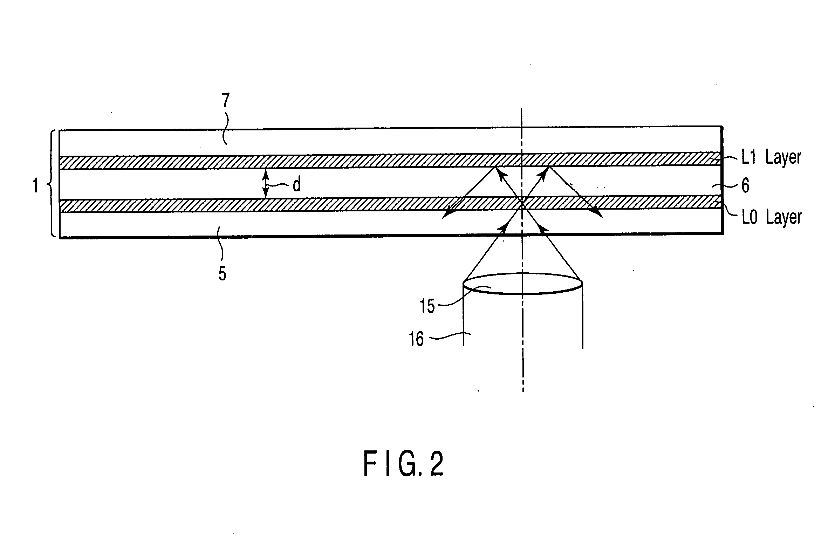

FIG. 2 shows an optical path of a reading laser beam 16 irradiated to a single-sided two-recording-layer information recording medium 1.

In FIG. 2, the reading laser beam 16, which has passed through an objective lens 15, passes through a transparent substrate 5 and is converged on a recording layer L0 as a (first) recording layer located near to the objective lens 15.

A part of the laser beam 16 passes through the recording layer L0, reaches a recording layer L1 on a supporting substrate 7, and is reflected by the recording layer L1, thereby it passes through the objective lens 15 again, and is incident on a photo detector in an optical head (which is not explained in detail).

Accordingly, an interlayer crosstalk is generated by the laser beam that is reflected by the recording layer L1 and incident on the photo detector while the information recorded on the recording layer L0 is being read (reproduced).

Further, when a position, in which a recorded mark is formed, and a position, in which no recorded mark is formed, exist at the positions of the reading laser beam 16 irradiated to the recording layer L1, an amount of a crosstalk is varied by the variation of the reflectance of the reflected laser beam. Likewise, the reflectance of the reading laser beam 16 in the position of the recording layer L1, in which a prepit header exists, is different from that in the position of the recording layer L1, in which only a groove exists and no prepit header exists, by which an interlayer crosstalk is affected.

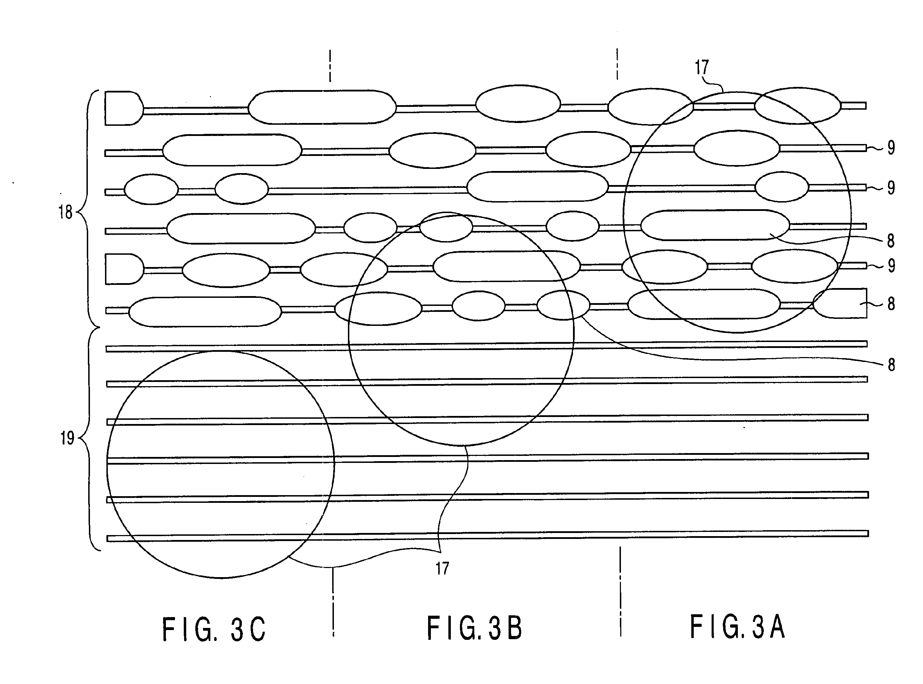

FIG. 3 shows a problem when information is reproduced from one side of a conventional two-recording-layer information recording medium.

As shown in FIG. 3, recorded marks 8 are formed in a recorded region 18, and no recorded mark 8 exists in an unrecorded region 19. Accordingly, a local amount of reflection of the reading laser beam 16 is different between a case in which the laser beam 16, which has been irradiated to the recording layer L1 as shown in FIG. 2., is irradiated to the recorded region 18 as shown in FIG. 3A, and a case in which it is irradiated to the unrecorded region 19 as shown in FIG. 3C, from which an effect of an interlayer crosstalk occurs between FIG. 3A and FIG. 3C.

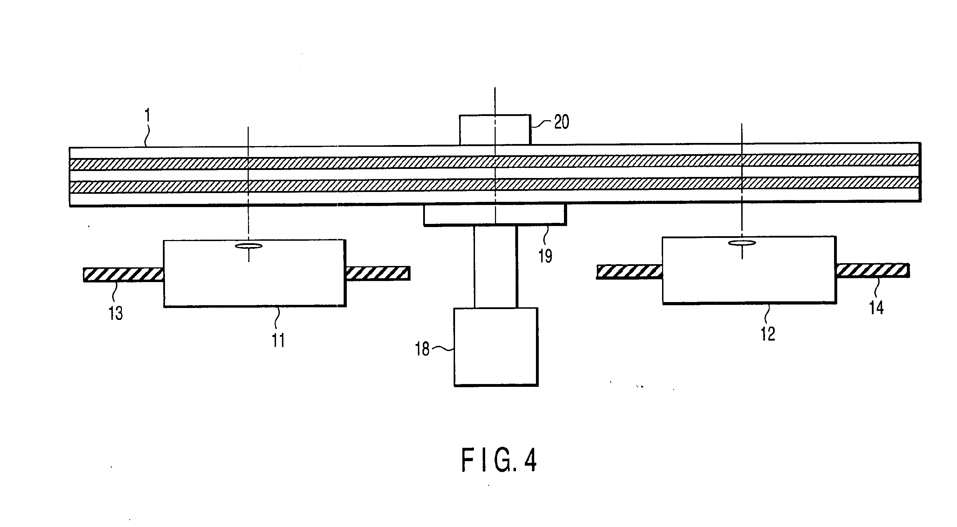

FIG. 4 shows a method of previously forming the recorded marks (premarks) 3 to the information recording medium of the present invention.

A recording layer is initialized by an initialization optical head 12 shown in FIG. 4 as disclosed in the patent documents 1 and 2 explained above. That is, when a phase-change type optical disk is used, phase-change recorded marks must be initialized.

When premarks 3 are formed by a premark forming optical head 11 shown by FIG. 4 simultaneously with the initialization of the phase-change recorded marks, the premarks 3 can be formed (at the same time) in a time approximately as long as a time necessary for the initialization executed by the initialization optical head 12 without an extra time.

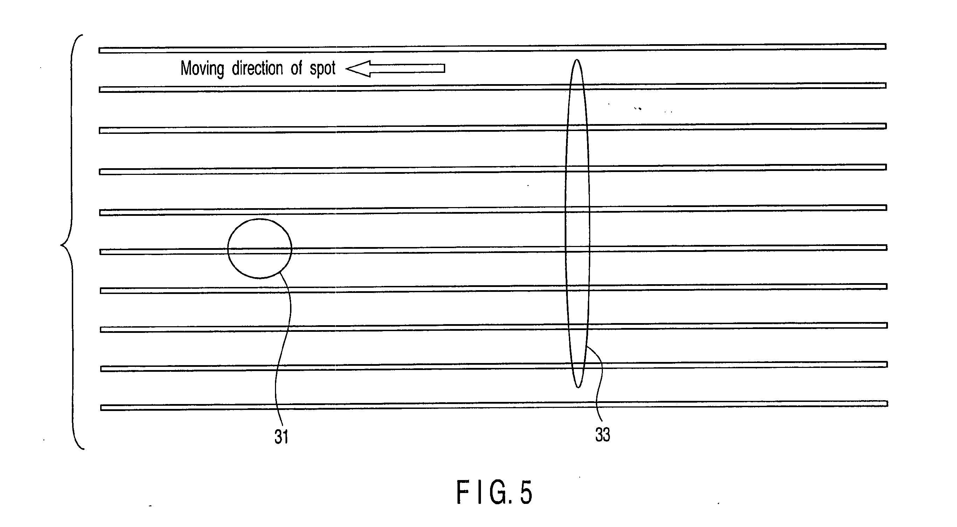

FIG. 5 shows a beam spot on the recording layer to which a laser beam is irradiated from the premark forming optical head 11 explained in FIG. 4.

As shown in FIG. 5, when an elliptic premark forming laser spot 33 is irradiated onto the recording layer at predetermine intervals by turning on pulses, the premarks 3 shown in FIG. 1 are formed substantially in the same time as the initializing time. Note that a laser spot 31, which executes focus and track control and detects the positions of the recorded marks, is formed prior to the formation of the elliptic premark forming laser spot 33. Further, it is needless to say that a speed, at which the recording layer of the information recording medium 1 is moved (rotated in a direction parallel to a plane direction) and the power, i.e. the light intensity of the laser spot 33 are a predetermined speed and power.

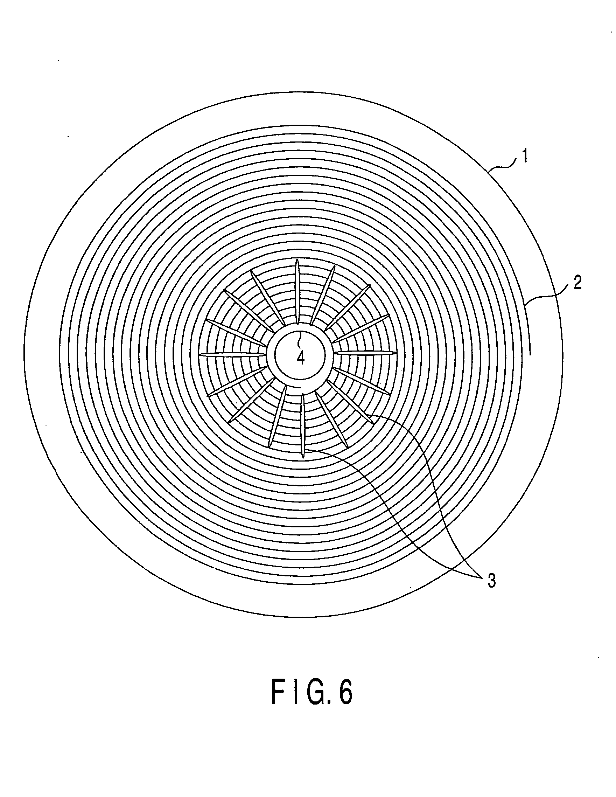

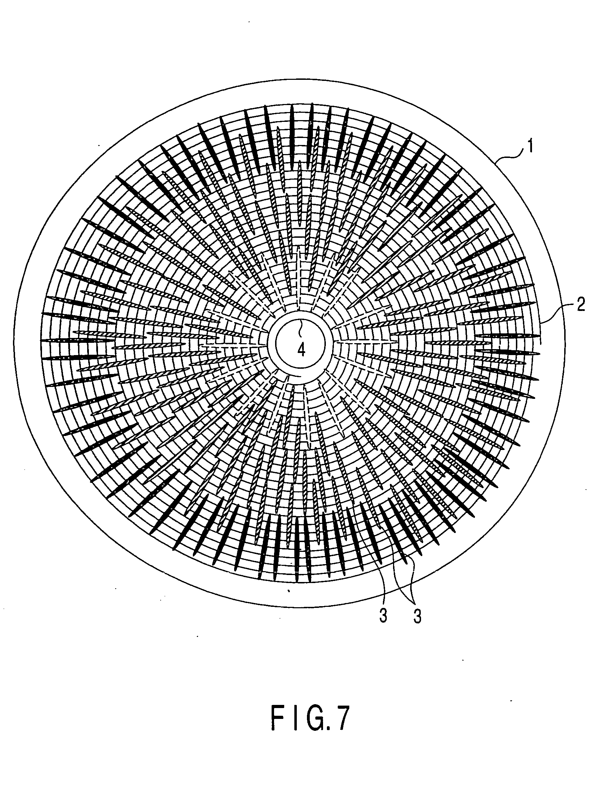

A method of forming the premarks to the information recording medium shown in FIG. 1 will be explained with reference to FIGS. 6 and 7.

As shown in FIGS. 6 and 7, the premarks 3 are formed on the information recording medium 1 by a recording apparatus, that is, by the premark forming optical head 11 shown in FIG. 4.

Note that, when the premarks 3 are formed over the entire surface of the information recording medium 1, they must be formed uniformly in an innermost radius and in an outermost radius (in a state that a radial position of the information recording medium 1 is not shifted from the positions of the premarks in the radial direction), that is, when the premarks 3 make around along the circumference of the circle, the positions of the premarks must be unchanged in the radial direction thereof at all times. In contrast, in the central radius excluding the innermost and outermost radii, the premarks 3 are formed so as to gradually shift with respect to an adjacent premark 3 (for example, a premark 3 located on an inner radius side) when they are viewed along the circle as the premark forming optical head 11 shown in FIG. 4 is moved outward (in the radial direction) along an optical head feed mechanism 13.

FIG. 6 explains an initially recorded state.

That is, in FIG. 4, the premark forming optical head 11 stays at a predetermined radial position and forms a round of premarks 3 on the innermost radius of the information recording medium 1 which is turned by the rotation of a turntable 19.

Subsequently, the premark forming optical head 11 is gradually moved in the radial direction and forms a plurality of premarks 3 such that the center positions of adjacent premarks 3 are shifted in the radial direction as shown in FIG. 7.

In contrast, the premark forming optical head 11 stops in the radial direction in the outermost radius and forms a round of premarks 3 to the outermost radius at the same radial position.

As described above, the premarks 3 are formed at approximately the uniform density over the entire region of the inner radius (innermost radius), outer radius (outermost radius) and central radius (between the inner and outer radii) of the first recording layer, i.e. the recording layer L0 simultaneously with the initialization of the recording layer.

When the premarks 3 have been recorded to the recording layer L0 at the time of initialization, the initializing laser spot is moved to a second recording layer, i.e. to the recording layer L1 and initializes it as well as the elliptic premark forming laser spot 33 and the laser spot laser spot 31 for executing the focus and track control and detecting the recorded mark positions are moved to the recording layer L1 at the same time, and the premarks 3 are formed by the laser spot 33.

The premark forming laser spot 33 stays at the same radial position and forms premarks 3 on the inner radius (innermost radius) and outer radius (outermost radius) of the recording layer L1 while the information recording medium 1 is turned once likewise the recording layer L0. Further, a plurality of premarks 3, each of which has a center position different from a radial position every round, are formed on the central radius between the inner radius (innermost radius) and outer radius (outermost radius) by appropriately controlling a speed at which the information recording medium 1 is turned and a recording power.

With the above operation, the premarks 3 are formed at approximately the same density over the entire region of the inner radius (innermost radius), outer radius (outermost radius) and central radius (between the inner and outer radii) of the second recording layer, i.e. the recording layer L1.

It is preferable to define the density of the premarks 3 such that the intensity of the laser beam reflected from an arbitrary recording layer has approximately the same magnitude over the entire region of the recording layers. Accordingly, the density of the premarks 3 is approximately 50% of an entire recording region in terms of an area ratio.

However, according to an experiment, the density may be about one-half 50% (one-fourth a total area) in terms of the area ratio in a track direction, and an excellent reproduced signal can be obtained even if the density is about one-third in terms of the area ratio in the radial direction. Further, it has been confirmed that even if the density is about one-fourth 50% (one-eighth the total area) in terms of the area ratio in the track direction, the dispersion of a reflected light beam, that is, the degree of unevenness of the amount of the reflected light beam is suppressed to a level at which a reproduced signal can be detected while an interlayer crosstalk increases. It has been found that even if the density is about one-fourth in terms of the area ratio in the radial direction, the unevenness of the amount of the reflected light has such a level that can be sufficiently endured by the reproduction of information.

The respective premarks 3 may be formed in any arbitrary number or at any arbitrary density as long as they have such a size as to provide intervals (density) to permit at least one premark 3 to exist in a spot light formed by a reproducing light beam when the reproducing light beam is irradiated.

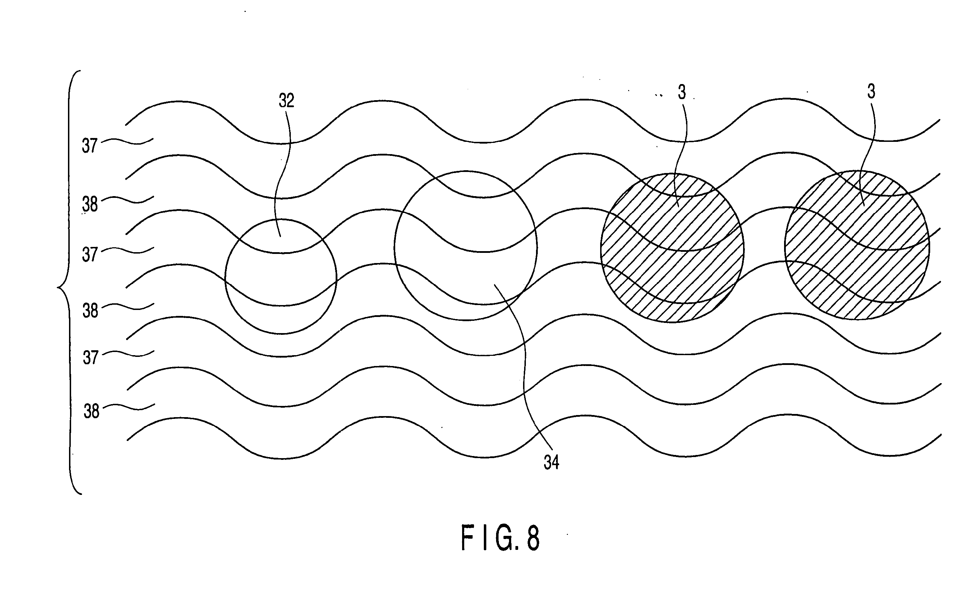

It is sufficient for the premarks 3 to have a radial length not shorter than at least two tracks as shown in FIG. 8, (since FIG. 8 explains an example of a recording medium having land/grooves, lands or grooves exist between tracks.).

The radial length of the premarks 3 is not defined only by a single premark, and a premark may partly or mostly overlap with an adjacent premark at an arbitrary position in the radial direction or in the track direction.

The premarks 3 are shown long in the radial direction (have a large long-axis to short-axis ratio) in FIG. 1. However, the premarks 3 may be formed approximately in a circular shape as shown in FIG. 8. They may also be formed in an elliptical shape which is formed by a plurality of approximately circular premarks partly overlapping with each other in the radial direction (they may be aligned radially).

Although almost all the premarks 3 shown in FIG. 1 (and FIGS. 6 and 7) are formed in a shape having a long-axis parallel to the radial direction, when they are formed in a shape across at least two tracks, any problem does not arise even if they are not in parallel with the radial direction.

Further, as to the shape of the premarks 3, the example of the premarks 3 having the elliptical or circular shape, in which the long-axes thereof are aligned with the radial direction, have been explained. However, it is needless to say that the premarks 3 may be formed in any shape as long as they can provide a predetermined area in at least the spot light formed by the reproduction light beam when it is irradiated.

FIG. 8 shows another application example of the embodiment of the present invention.

Although explained above with reference to FIG. 5, the premark forming laser spot 33 forms the elliptical premarks 3 using an elliptical light beam having a long-axis in the radial direction.

In contrast, a circular laser spot 34 is used in FIG. 8.

In FIG. 8, a single groove portion 37 and a single land portion 38 are arranged as a set, a large laser spot 34 across them is formed, and the premarks 3 are formed in the respective regions of the land portion 38 and the groove portion 37 at the same time.

According to the method, the premark 3 can be formed in the land portion 38 and in the land portion 38 at a time in contrast to a conventional method in which a premark 3 is formed while chasing a groove portion 37 and then a premark is formed while chasing a land portion 38. Accordingly, the premark 3 can be formed at a double speed.

It is needless to say that a laser spot 32 for reading a wobble address is used to execute the focus, track and wobble control also in the example of FIG. 8 in the same manner as in FIG. 5.

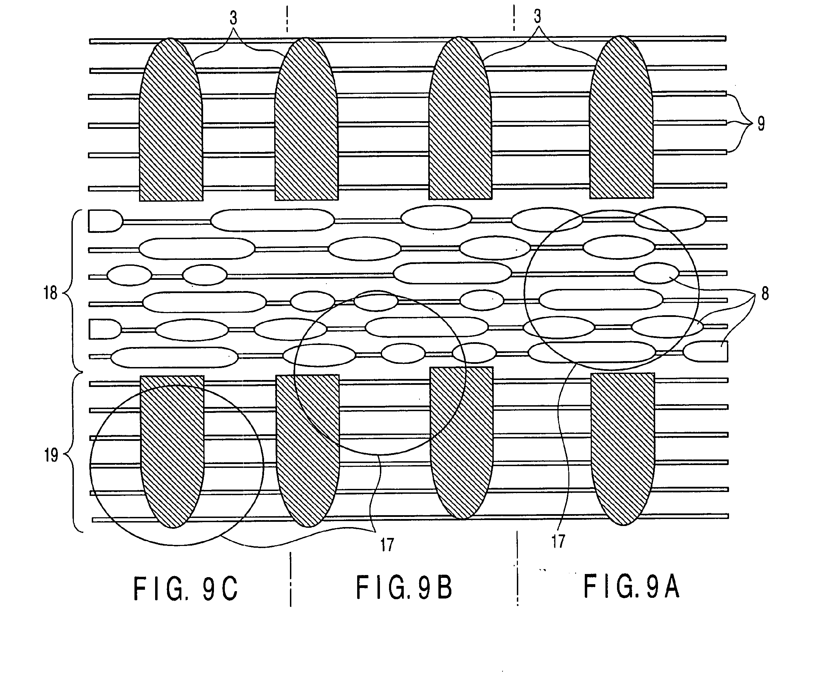

FIGS. 9A to 9C show an example that a user records user data at random to an information recording medium on which the premarks described with reference to FIGS. 1 to 8 have been formed.

As apparent from FIGS. 9A to 9C, recorded marks 8 (recorded user data) are formed between the premarks 3 along a track.

When the recorded marks 8 are formed, since new recorded marks 8 are basically formed while erasing previously recorded premarks 3 except a case where a special condition is provided, the premarks 3 are partly erased and disappear.

As a result, the density of distribution of the recorded marks 8 in the recorded region 18 is approximately in coincidence with the density of the premarks 3 in the unrecorded region 19. Accordingly, as shown in FIG. 9A, the reflectance when a laser spot 17 is irradiated to the recorded region is approximately the same as that when the laser spot 17 is formed in the unrecorded region 19, thereby the effect of an interlayer crosstalk is eliminated.

A feature that the effect of the interlayer crosstalk is reduced even if the recorded marks 8 are formed at any arbitrary position of the recording medium 1 can be obtained by the present invention because the premarks 3 are recorded over the entire surface of the recording medium 1. Further, there is provided a structure that is most suitable for recording the recorded marks 8 at any arbitrary position of the recording layer in an arbitrary width at random.

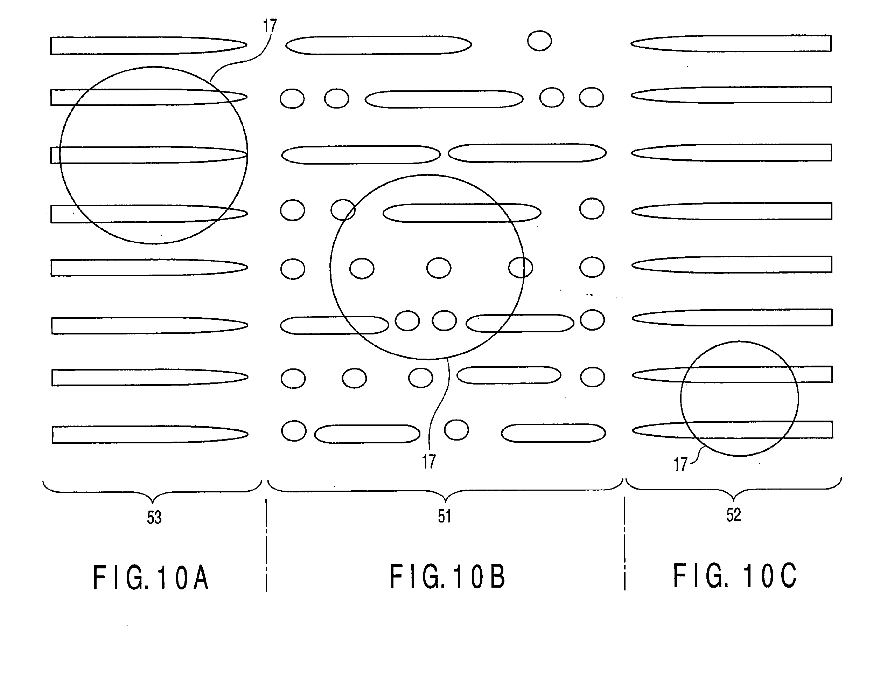

FIGS. 10A to 10C are schematic views for explaining an interlayer crosstalk that occurs in a currently-available information recording medium having a prepit region in order to compare it with the information recording medium of the present invention having the premarks and shown in FIG. 9.

As shown in FIGS. 10A to 10C, in the information recording medium having the prepit region 51, the amount of a reflected light beam when the laser spot 17 is irradiated to the prepit region 51 is different from that when the laser spot 17 is irradiated to a track region 52 or 53 that is a groove region. Accordingly, when a plurality of recording layers exit, an interlayer crosstalk occurs.

In contrast, the information recording medium of the present invention employs a method of recording addresses in wobbles of a track without using a prepit region as the address information of the track.

The present invention has a feature in that it is unlikely to be affected by an interlayer crosstalk even if it occurs because the address is recorded in the wobble and moreover the elliptic premarks 3, which have the long-axis aiming at the radial direction or a predetermined angle with respect to the radial direction, are previously formed, as explained with reference to FIGS. 1 to 7.

It should be noted that, even if the premarks 3 are formed on the entire recording surface, when the prepit region 51 is used together with them, an interlayer crosstalk occurs in the portion of the prepit region 51.

In contrast, even in an information recording medium that has no prepit region 51 and has wobble addresses formed over the entire circumference of the circle thereof, an interlayer crosstalk also occurs due to the difference between the unrecorded region 19 and the recorded region 18 when the premarks 3 explained above with respect to FIG. 3 are not formed.

The present invention can further reduce the effect of an interlayer crosstalk by simultaneously executing both the processings (forming no prepit region and forming the premarks) .

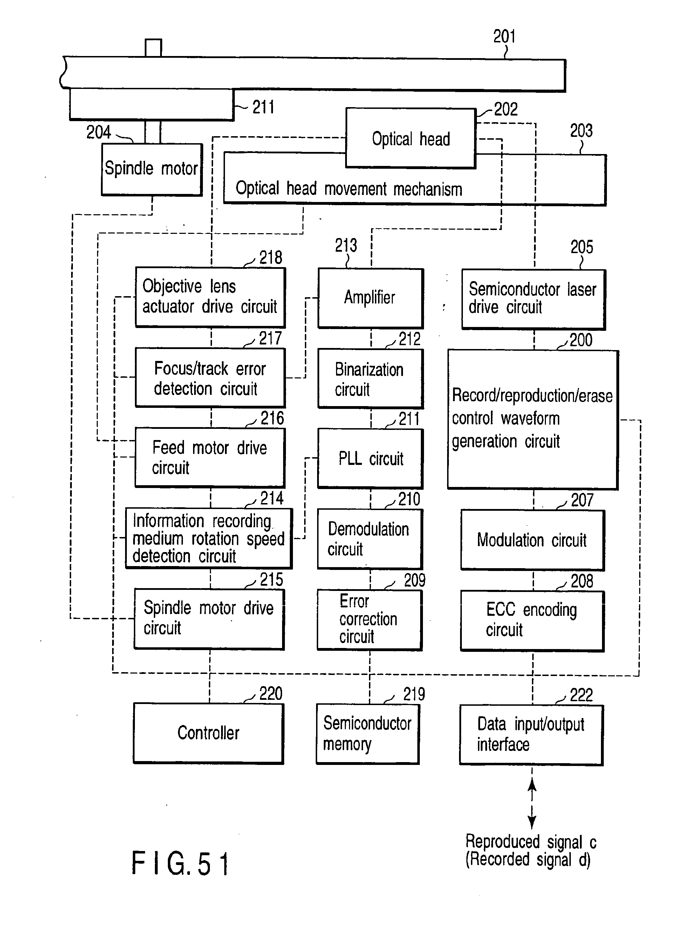

FIG. 51 is a schematic block diagram explaining an internal structure of an information recording/reproducing unit (physical block) 101 of an information reproducing apparatus for reproducing information from the information recording medium explained above with respect to FIGS. 1 to 7 and 9 or an information recording/reproducing apparatus for recording new information thereto.

<51A> Explanation of function of information recording/reproducing unit

51A-1] Basic function of information recording/reproducing unit

The information recording/reproducing unit executes processings of:

 a) recording new information to a predetermined position on an information recording medium (optical disk) 201 or rewriting it (including erasing of the information) using a converged spot; and
 b) reproducing recorded information from a predetermined position on the information recording medium (optical disk) 201 using the converged spot.

51A-2] Basic function achieving means of information recording/reproducing unit

The information recording/reproducing unit acting as means for achieving the basic function executes processings of:

 a) causing the converged spot to be traced (followed) along a track (not shown) on the information recording medium 201;
 b) switching recording, reproduction, and erasing of information by changing the amount of light beam of the converged spot irradiated onto the information recording medium 201; and
 c) converting a recording signal d supplied from the outside to an optimum signal for recording information at a high density and at a low error rate.

<51B> Structure of mechanical portion and operation of detecting portion

51B-1] Basic structure of optical head 202 and signal detection circuit

51B-1-1) Signal detection by optical head 202

An optical head 202 is fundamentally composed of a semiconductor laser element acting as a light source, a photo detector, and an objective lens, although they are not shown.

A laser beam emitted from the semiconductor laser element is converged on the information recording medium (optical disk) 201 through the objective lens. The laser beam, which has been reflected by a light reflection film or a light reflective recording film of the information recording medium (optical disk) 201, is photoelectrically converted by the photo detector.

A detection current obtained by the photo detector is subjected to current to voltage conversion by an amplifier 213 and made to a detection signal.

The detection signal is processed in a focus/track error detection circuit 217 or in a binarization circuit 212. In general, the photo detector is divided into a plurality of photo detecting regions and detects the change of the amounts of the light beam irradiated to the respective photo detecting regions individually.

The focus/track error detection circuit 217 determines a sum signal and a difference signal from the respective detection signals and detects focusing shift and track shift.

A signal on the information recording medium (optical disk) 201 is reproduced by detecting the amount of light beam reflected from the light reflection film or the light reflective recording film thereof.

51B-1-2) Method of detecting focusing shift

A method of optically detecting an amount of focusing shift includes the following anastigmatic aberration method and knife edge method, and any one of them is used in many cases.

a) Anastigmatic aberration method:

An anastigmatic aberration method is a method of arranging an optical element, which generates anastigmatic aberration (not shown), in a circuit for detecting the laser beam reflected by the light reflection film or the light reflective recording film of the information recording medium (optical disk) 201 and detecting the change of shape of the laser beam irradiated onto the photo detector. The photo detector has a photo detecting region divided into four detecting regions in a diagonal state, and the difference between the diagonal sums of the detection signal, which is obtained from the respective detecting regions, is determined in the focus/track error detection circuit 217 to thereby obtain a focusing error detection signal.

b) Knife edge method:

A knife edge method is a method of arranging a knife edge for asymmetrically shading a part of the laser beam reflected by the information recording medium 201, wherein the photo detecting region of the photo detector is divided into two detecting regions, and a focusing error detection signal is obtained by determining the difference between the detection signals obtained from the respective detecting regions.

51B-1-3) Method of detecting track shift

The information recording medium (optical disk) 201 includes a spiral or concentric track, and information is recorded on the track. Information is reproduced, recorded or erased by tracing a converged spot along the track. Accordingly, to stably trace the converged spot along the track, the relative positional shift between the track and the converged spot must be optically detected.

A track shift detection method generally includes a differential phase detection (DPD) method, a push-pull method, a twin-spot method, and the like, and any one of the methods is used.

a) Differential phase detection (DPD) method:

A differential phase detection method is a method of detecting the change of distribution of intensity of the laser beam, which has been reflected by the light reflection film or the light reflective recording film of the information recording medium (optical disk) 201, on the photo detector, and a track error detection signal is obtained by determining the difference between the diagonal sums of the detection signal obtained from the respective detecting regions using the photo detector whose photo detecting region is divided into four detecting regions.

b) Push-pull method:

A push-pull method is a method of detecting the change of distribution of intensity of the laser beam, which has been reflected by the information recording medium 201, onto the photo detector, and a track error detection signal is obtained by determining the difference between the signals obtained from the respective detecting regions by using a photo detector whose photo detecting region is divided into two detecting regions.

c) Twin-spot method:

A twin-spot method is a method of arranging a diffraction element or the like in a light transmission system between a semiconductor laser element and the information recording medium 201 so that a laser beam is divided into a plurality of wave surfaces and detecting the amount of change of the reflected light beam of primary positive and negative diffracted light beam irradiated on the information recording medium 201. In the method, light beam detecting regions, which individually detect the amount of reflected light beam of the primary positive light beam and the amount of reflected light beam of the primary negative light beam, are arranged independently of a photo detecting region for detecting a reproduced signal, and a track error detection signal is obtained by determining the difference between the respective detection signals.

51B-1-4) Structure of objective lens actuator

An objective lens (not shown), which converges a laser beam emitted from a semiconductor laser element on the information recording medium 201, has such a structure that it can be moved in two-axis directions in response to a current output from an objective lens actuator drive circuit 218.
The objective lens moves in the following two directions:

a) a direction vertical to the information recording medium 201 for correcting the focusing shift; and
b) a radial direction of the information recording medium 201 for connecting the track shift.

Although not shown, an objective lens moving mechanism is called an objective lens actuator. As a structure of the objective lens actuator, the following systems are often used.

a) Shaft sliding system:

A shaft sliding system is a system of moving a blade integrated with an objective lens along a center shaft, wherein the focusing shift is corrected by the movement of the blade in a direction along the center shaft, and the track shift is corrected by the rotational movement of the blade about the center shaft acting as a reference.

b) Four-wire system:

In a four-wire system, a blade integrated with an objective lens is coupled with a fixed system through four wires and moved in two-axis directions making use of the elastic deformation of the wires.
Any of the methods has such a structure that it includes a permanent magnet and a coil, and the blade is moved by supplying a current to the coil coupled with the blade.

51B-2] Rotation control system of information recording medium 201

The information recording medium (optical disk) 201 is mounted on a turntable 221 that is turned by the drive force of a spindle motor 204.
The number of revolutions of the information recording medium 201 is detected by a reproduction signal obtained from the information recording medium 201. That is, the detection signal (analog signal) of an output from the amplifier 213 is converted into a digital signal by the binarization circuit 212, and a constant cycle signal (reference clock signal) is generated from the signal by a PLL circuit 211. An information recording medium rotation speed detection circuit 214 detects the number of revolutions of the information recording medium 201 using the signal and outputs the value of the number of revolutions.
A table, which corresponds to the number of revolutions of the information recording medium 201 corresponding to a radial position thereon at which information is reproduced, recorded or erased on the information recording medium 201 is previously recorded in a semiconductor memory 219. When a reproducing position or a recording/erasing position is determined, a controller 220 sets a target number of revolutions of the information recording medium 201 with reference to the information of the semiconductor memory 219 and notifies a spindle motor drive circuit 215 of the set value.
The spindle motor drive circuit 215 determines a difference between the target number of revolutions and a signal (current number of revolutions) output from the information recording medium rotation speed detection circuit 214, supplies a drive current according to a result of the determined difference to the spindle motor 204, and controls the spindle motor 204 to make the number of revolutions thereof constant. A signal output from the information recording medium rotation speed detection circuit 214 is a pulse signal having a frequency corresponding to the number of revolutions of the information recording medium 201, and the spindle motor drive circuit 215 controls both the frequency and the pulse phase of the signal.

51B-3] Optical head moving mechanism

An optical head moving mechanism (feed motor) 203 is provided to move the optical head 202 in the radial direction of the information recording medium 201.

A rod-like guide shaft is often used as a guide mechanism for moving the optical head 202, and the optical head 202 is moved making use of the friction between the guide shaft and bushes attached to a part of the optical head 202. There is also a method of using a bearing whose friction is reduced using a rotational movement, in addition to the above method.

Although not shown, a drive force transmission method of moving the optical head 202 is such that a rotation motor with a pinion (rotation gear) is arranged to the fixed system, a track, which is a linear gear to be meshed with the pinion, is arranged on a side of the optical head 202, and a rotational motion of the rotation motor is converted into a linear motion of the optical head 202. As a driving force transmission method other than the above method, there may be used a liner motor system, in which a permanent magnet is arranged to the fixed system, and the optical head 202 is moved in a linear direction by supplying a current to a coil arranged to the optical head 202.

In any of the systems using the rotation motor and the linear motor, a drive force for moving the optical head 202 is basically generated by supplying a current to the feed motor. The drive current is supplied from a feed motor drive circuit 216.

<51C> Functions of respective control circuits

51C-1] Converged spot trace control

A circuit, which supplies a drive current to the objective lens actuator (not shown) in the optical head 202 according to a signal output from (detected by) the focus/track error detection circuit 217 to correct the focusing shift and the track shift, is the objective lens actuator drive circuit 218. The objective lens actuator drive circuit 218 has a phase compensation circuit arranged therein, which improves characteristics in conformity with the frequency characteristics of the objective lens actuator, to move the objective lens up to a high frequency region at a high speed.

The objective lens actuator drive circuit 218 executes the following processings in response to a command from the controller 220:

a) on/off processing of focusing/track shift correcting operation (focusing/track loop);

b) processing of moving the objective lens in the vertical direction (focusing direction) of the information recording medium 201 at a low speed (executed when the focusing/track loop is turned off); and

c) processing of moving a converged spot to an adjacent track by slightly moving it in the radial direction of the information recording medium 201 (direction in which a track is intersected) using a kick pulse.

51C-2] Amount of laser beam control

51C-2-1) Processing for switching between reproduction and recording/erasing

Switching between reproduction and recording/erasing is executed by changing the amount of light beam of a converged spot irradiated onto the information recording medium 201.

The following relationship is generally established with regard to an information recording medium using a phase change system.

[amount of light beam in recording] > [amount of light beam in erasing] > [amount of light beam in reproduction]

The following relationship is generally established regarding an information recording medium using a magneto-optical system.

[amount of light beam in recording]/[amount of light beam in erasing] > [amount of light beam in reproduction]

In the magneto-optical system, recording and erasing processings are controlled by changing the polarity of an external magnetic field (not shown) to be applied to the information recording medium 201 in recording and erasing.

When information is reproduced, a predetermined amount of a laser beam is continuously irradiated onto the information recording medium 201.

When new information is recorded, an amount of a pulse-like intermittent laser beam is added to the amount of the laser beam in the reproduction.

When the semiconductor laser element emits a laser beam pulse in a large amount, the light reflective recording film of the information recording medium 201 locally causes an optical change or a change in shape, thereby recorded marks are formed.

When information is overwritten on a region on which information has been recorded, the semiconductor laser element also emits a laser beam pulse.

When recorded information is erased, a constant amount of a laser beam which is larger than that when information is reproduced is continuously irradiated.

When information is continuously erased, an amount of a light beam to be irradiated is returned to an amount thereof in production every specific cycle such as every sector and the like, and information is reproduced in parallel with erasing processing.

Information is erased while confirming that the information is not erased from an erroneous track by intermittently reproducing the track number and address of a track from which the track is erased.

51C-2-2) Laser emission control

Although not shown, the optical head 202 has a photo detector arranged therein which detects an amount of laser beam emitted from the semiconductor laser element. A semiconductor laser drive circuit 205 determines a difference between an output from the photo detector thereof (detection signal of the amount of a laser beam emitted from the semiconductor laser element) and a light emission reference signal supplied from a recording/reproduction/erasing control waveform generation circuit 206 and feeds back a drive current to the semiconductor laser element based on a result of the determination.

<51D> Operations of control system of mechanism section

51D-1] Start control

When the information recording medium (optical disk) 201 is mounted on the turntable 221 and started, processing is executed according to the following sequences.

1) The target number of revolutions is transmitted from the controller 220 to the spindle motor drive circuit 215, and a drive current is supplied from the spindle motor drive circuit 215 to the spindle motor 204, thereby the spindle motor 204 starts rotation.

2) At the same time, a command (execution command) is sent from the controller 220 to the feed motor drive circuit 216 at predetermined timing, and a drive current is supplied from the feed motor drive circuit 216 to the optical head moving mechanism (feed motor) 203, thereby the optical head 202 is moved to an innermost radial position of the information recording medium 201. It is confirmed that the optical head 202 has reached a more inner radius beyond a region of the information recording medium 201 in which information is recorded.

3) When the number of revolutions of the spindle motor 204 has reached the target number of revolutions, the status thereof (condition report) is supplied to the controller 220.

4) A current is supplied from the semiconductor laser drive circuit 205 to the semiconductor laser element in the optical head 202 in conformity with a signal of an amount of a reproduction light beam supplied from controller 220 to the recording/reproduction/erasing control waveform generation circuit 206, thereby emission of a laser beam is started. Note that since an optimum amount of a laser beam to be irradiated in reproduction differs according to the type of information recording medium (optical disk) 201, the value of the smallest amount thereof is set when the information recording medium 201 is started.

5) The objective lens (not shown) in the optical head 202 is shifted to a position farthest from the information recording medium 201 in response to a command from the controller 220, and the objective lens actuator drive circuit 218 controls the objective lens so that the lens slowly approaches the information recording medium 201.

6) At the same time, an amount of focusing shift is monitored by the focus/track error detection circuit 217, and when the objective lens reaches a position adjacent to a focused position, the status of the objective lens is detected, and the controller 220 is notified of it.

7) On receiving the notification of the status, the controller 220 outputs a command for turning on a focusing loop to the objective lens actuator drive circuit 218.

8) The controller 220 outputs a command to the feed motor drive circuit 216 while turning on the focusing loop to thereby slowly move the optical head 202 in the outer radius direction of the information recording medium 201.

9) At the same time, the controller 220 monitors a reproduction signal from the optical head 202, and when the optical head 202 has reached a recorded region on the information recording medium 201, the controller 220 stops the movement of the optical head 202 and outputs a command for turning on the track loop to the objective lens actuator drive circuit 218.

10) The "optimum amount of a light beam in reproduction" and the "optimum amount of a light beam in recording/erasing" recorded in an inner radius of the information recording medium (optical disk) 201 are reproduced and the information thereof is recorded in the semiconductor memory 219 through the controller 220.

11) The controller 220 sends a signal in conformity with the "optimum amount of a light beam in reproduction" to the recording/reproduction/erasing control waveform generation circuit 206 and sets the amount of light emission of the semiconductor laser element in reproduction again.

12) An amount of light emission of the semiconductor laser element in recording/erasing is set in conformity with the "optimum amount of a light beam in recording/erasing" recorded in the information recording medium 201.

51D-2] Access control

51D-2-1) Reproduction of information as to position to be accessed on information recording medium 201

Information of the contents of information recorded in a particular position on the information recording medium 201 is different depending on a type of the information recording medium 201 and is generally recorded in the following region and the like of the information recording medium 201:

a) Directory management region: the information is recorded together in an inner radius region or in an outer radius region in the information recording medium 201, or

b) Navigation pack: the information is contained in a video object set (VOS) based on the data structure of a program stream (PS) of MPEG2, and information of the position, in which a next image is recorded, is recorded.

When it is desired to reproduce or to record/erase particular information, first, the information in the above region is reproduced, and a position to be accessed is determined from the information obtained therefrom.

51D-2-2) Rough access control

The controller 220 determines the radial position of a position to be accessed by a calculation and obtains a distance between the position and the current position of the optical head 202.

Speed curve information, which permits the optical head 202 to reach its destination in a shortest time, is previously recorded in the semiconductor memory 219. The controller 220 reads the above information and moves the optical head 202 by a predetermined distance based on the speed curve according to the following method.

After the track loop is turned off by issuing a command from the controller 220 to the objective lens actuator drive circuit 218, and movement of the optical head 202 is started by controlling the feed motor drive circuit 216.

When a converged spot intersects a track on the information recording medium 201, a track error detection signal is generated in the focus/track error detection circuit 217. A relative speed of the converged spot with respect to the information recording medium 201 can be detected using the track error detection signal.

The feed motor drive circuit 216 calculates a difference between the relative speed of the converged spot obtained from the focus/track error detection circuit 217 and target speed information sequentially sent from the controller 220 and moves the optical head 202 while feeding back a result of the calculation to the drive current to the optical head moving mechanism (feed motor) 203.

As described in "51B-3] optical head moving mechanism", a friction force is applied between the guide shaft and the bushes or the bearing at all times. Although a dynamic friction acts when the optical head 202 moves at a high speed, a static friction acts at the beginning of movement of the optical head 202 and just before it stops because it moves at a slow speed. Since a relative friction force increases at the time (in particular, just before it stops), an amplification ratio (gain) of the current supplied to the optical head moving mechanism (feed motor) 203 is increased in response to a command from the controller 220.

51D-2-3] Minute access control

When the optical head 202 reaches a target position, a command is sent from the controller 220 to the objective lens actuator drive circuit 218, thereby the track loop is turned on.

A converged spot traces the track on the information recording medium 201 along it and reproduces the address or the track number of the traced portion of the track.

The present position of the converged spot is determined from the address or the track number at the traced portion, the controller 220 calculates the number of error tracks from a target arrival position and notifies the objective lens actuator drive circuit 218 of the number of tracks necessary to the movement of the converged spot.

When a set of kick pulses is generated in the objective lens actuator drive circuit 218, the objective lens is slightly moved in the radial direction of the information recording medium 201, thereby the converged spot is moved to a next track.

After the track loop is temporarily stopped in the objective lens actuator drive circuit 218 and kick pulses are generated the number of times that are in conformity with the information from the controller 220, the track loop is turned on again.

After the completion of the minute access, the controller 220 reproduces the information (address or track number) of the position which is traced by the converged spot and confirms that a target track is being accessed.

51D-3] Continuous recording/reproduction/erasing control

As shown in FIG. 51, a track error detection signal output from the focus/track error detection circuit 217 is input to the feed motor drive circuit 216.

The controller 220 controls the track error detection signal such that it is not used in the feed motor drive circuit 216 when the "start control" and the "access control" are executed.

After it is confirmed that the converged spot has reached the target track by accessing it, a part of the track error detection signal is supplied as a drive current to the optical head moving mechanism (feed motor) 203 through the feed motor drive circuit 216 in response to a command from the controller 220. This control is continued while the reproduction or recording/erasing processing is continuously executed.

The information recording medium 201 is eccentrically mounted on the turntable 221 such that it is slightly decentered from the center position of the turntable 221. When a part of the track error detection signal is supplied as the drive current, the optical head 202 makes a minute movement in its entirety in conformity with the decentering.

Further, when the reproduction or recording/erasing processing is continuously executed for a long time, the position of the converged spot gradually moves in an outer or inner radius direction.

When a part of the track error detection signal is supplied as the drive current to the optical head moving mechanism (feed motor) 203, the optical head 202 gradually moves the outer or inner radius direction in conformity with the drive current.

As described above, a load on the objective lens actuator for correcting the track shift can be lightened, and the track loop can be stabilized.

51D-4] Finish control

When a series of the processings is completed and the operation is to be finished, processings are executed according to the following sequence:

1) the controller 220 issues a command for turning off the track loop to the objective lens actuator drive circuit 218;
2) the controller 220 issues a command for turning off the focusing loop to the objective lens actuator drive circuit 218;
3) the controller 220 issues a command for stopping the emission of the semiconductor laser element to the recording/reproduction/erasing control waveform generation circuit 206; and
4) the controller 220 notifies the spindle motor drive circuit 215 of "0" as a reference number of revolutions.

<51E> Flow of recorded signal/reproduced signal to information recording medium

51E-1] Signal format recorded to information recording medium 201

The information recording/reproducing unit (physical block) executes "addition of an error correcting function" and "signal conversion to recorded information (signal modulation/demodulation)" to the signals to be recorded on the information recording medium 201 as shown in FIG. 51 to satisfy the following requirements:

a) to permit correction of a recorded information error which is caused by a defect on the information recording medium 201;
b) to simplify a reproduction processing circuit by setting the direct current component of a reproduced signal to 0; and

c) to record information to the information recording medium 201 as densely as possible.

51E-2] Signal flow in recording

51E-2-1) Error correction code (ECC) addition processing

Information, which is desired to be recorded in the information recording medium 201, is input to a data input/output interface 222 as a recording signal d in a format of a raw signal. The recording signal d is.recorded in the semiconductor memory 219 as it is and then subjected to ECC addition processing in an ECC encoding circuit 208 as described below.

An embodiment of an ECC addition method using a product code will be explained below.

A row of a recorded code d is composed of 172 bytes, and 192 columns of the recorded codes are arranged and constitute one set of an ECC block. An inner code PI, which is composed of 10 bytes, is calculated every one row of 172 bytes with respect to the raw signals (recorded signals d) in the one set of the ECC block composed of 172 (rows) x 192 (columns) bytes and additionally recorded in the semiconductor memory 219. Further, an outer code PO, which is composed of 16 bytes, is calculated for every column in terms of bytes and additionally recorded in the semiconductor memory 219.

When the inner code PI and the outer code PO have been added, the ECC encoding circuit 208 reads signals each composed of 2366 bytes for one sector from the semiconductor memory 219 and transfers them to a modulation circuit 207.

51E-2-2) Signal modulation

To approach the direct current component (DSV: digital sum value) of a reproduced signal to "0" and to record information to the information recording medium 201 very densely, a signal format is converted in the modulation circuit 207 (signal modulation).

A conversion table that shows the relation between an original signal and a modulated signal is built in the modulation circuit 207 and in a demodulation circuit 210. A signal transferred from the ECC encoding circuit 208 is separated every plurality of bits according to a modulation system and converted into a different signal (code) with reference to the conversion table.

When, for example, 8/16 modulation (RLL (2, 10) code) is used as the modulation system, two types of conversion tables exist for reference, and the conversion tables are sequentially switched such that the direct current component (DSV: digital sum value) after modulation approaches to "0".

51E-2-3) Generation of recording waveform

When recorded marks are recorded to the information recording medium (optical disk) 201, there are ordinarily the following two types of recording systems:

a) mark length recording system; "1" exists at the leading and trailing end positions of a recorded mark, and

b) inter-mark recording system; the center position of a recorded mark is in coincidence with the position "1".

When the mark length recording system is employed, a long recorded mark must be formed.

In this case, when a recording light beam is continuously irradiated to the information recording medium 201 for a predetermined period of time, a recorded mark, which is formed in a "rain drop" shape with only the rear portion thereof having a large width, is formed by the heat accumulation effect of the light reflective recording film thereof.

To overcome this drawback, when a long recorded mark is to be formed, the recording light beam is divided into a plurality of pulses or a recording waveform is changed stepwise.

The recording waveform as described above is formed in the recording/reproduction/erasing control waveform generation circuit 206 in accordance with the recording signal sent from the modulation circuit 207 and transmitted to the semiconductor laser drive circuit 205.

51E-3] Signal flow in reproduction

51E-3-1) Binarization/PLL circuit

As described in "51B-1-1) Signal detection by optical head 202", a signal on the information recording medium (optical disk) 201 is reproduced by detecting an amount of change of the laser beam reflected from the light reflection film or the light reflective recording film thereof. A signal obtained by the amplifier 213 has an analog waveform. The binarization circuit 212 converts the signal into a binary digital signal composed of "1" and "0" using a comparator.

The PLL circuit 211 fetches a reference signal when information is reproduced from a reproduced signal obtained therefrom. The PLL circuit 211 has a built-in frequency variable oscillator. The PLL circuit 211 compares the frequency and phase of a pulse signal (reference clock) output from the oscillator and those of a signal output from the binarization circuit 212 and feeds back a result of comparison to the output of the oscillator.

51E-3-2) Demodulation of signal

The demodulation circuit 210 has a built-in conversion table that shows the relation between a modulated signal and a demodulated signal. The demodulation circuit 210 returns the signal to the original signal in conformity with the reference clock obtained in the PLL circuit 211 while referring to the conversion table. The returned (demodulated) signal is recorded in the semiconductor memory 219.

51E-3-3) Error correction processing

An error correction circuit 209 detects error positions of the signals stored in the semiconductor memory 219 using an inner code P1 and an outer code P0 sets up pointer flags of the error positions.

Thereafter, the error correction circuit 209 sequentially corrects the signals of the error positions in conformity with the error pointer flags while reading the signals from the semiconductor memory 219 transfers the signals to the data input/output interface 222 removing the inner and outer codes P1 and P0 therefrom.

A signal sent from the ECC encoding circuit 208 is output from the data input/output interface 222 as a reproduced signal c.

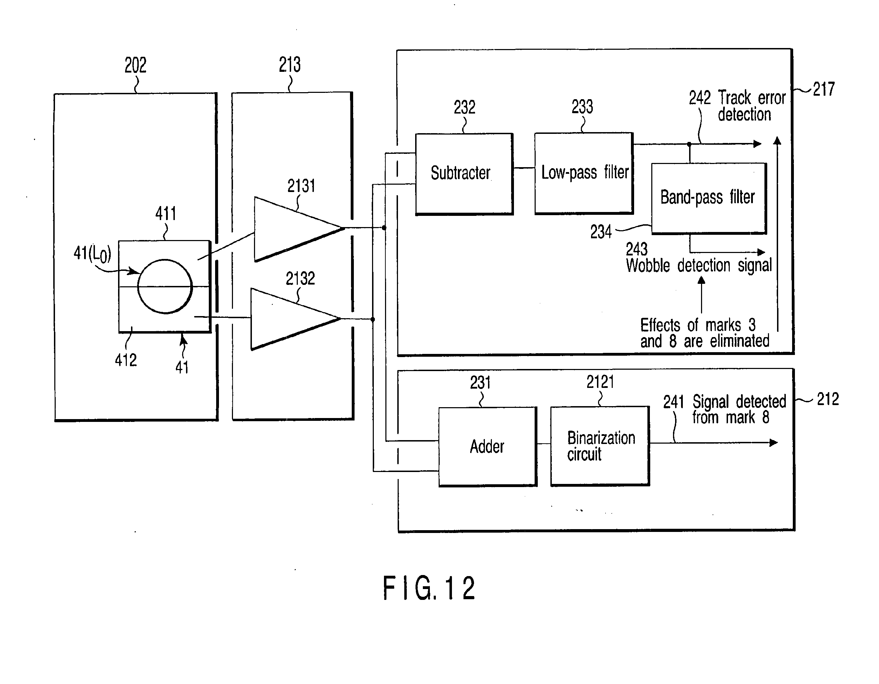

FIG. 12 is a schematic block diagram explaining a circuit for detecting a wobble detection signal in the information recording/reproducing apparatus and the information recording/reproducing method shown above with reference to FIG. 51.

A photo detector 41 is arranged at a predetermined position of the optical head 202 shown in FIG. 51.

The photo detector 41 is divided into light-detecting cells 411 and 412, and each of them detects an amount of a laser beam 41 that is irradiated to the first recording layer, i.e. the recording layer L0 of the information recording medium and reflected thereby.

An amount of change of the reflected laser beam 41 detected by the light-detecting cell 411 is converted into an electric signal by a first preamplifier 2131 built in the amplifier 213.

Likewise, an amount of change of the laser beam 41, which is detected by the light-detecting cell 412, is converted into an electric signal by a second preamplifier 2132.

The binarization circuit 212 includes an adder 231 and a binarization circuit 2121, and a signal obtained from the preamplifier 2131 is added to a signal obtained from the second preamplifier 2132 by the adder 231, and a result of addition is fetched as a detection signal 241 from the recorded marks 8 through the binarization circuit 2121.

The focus/track error detection circuit 217 detects a wobble detection signal.

The focus/track error detection circuit 217 includes a subtracter 232, a low-pass filter 233, a band-pass filter 234, and the like.

The subtracter 232 determines a difference between the signal obtained by the first preamplifier 2131, the difference is detected as a track error signal.

Note that since the effects of the signals of the premarks 3 and the recorded marks 8 are included in the original signal (signal input to the subtracter 232), they are eliminated by the low-pass filter 233.

A signal output from the low-pass filter 233 is fed back to an objective lens derive system of the optical head 202, for example, to the objective lens actuator drive circuit 218 as a track error detection signal 242.

The band-pass filter 234 extracts a wobble detection signal 243 from the signal output from the low-pass filter 233.

Since a wobble signal is subjected to wobble modulation in an approximately constant frequency and subjected to signal modulation by a phase modulation system, only a frequency component, which is in coincidence with a wobble frequency, is extracted from the band-pass filter 234, thereby the wobble detection signal 243 having a higher S/N ratio can be extracted.

An address position on the information recording medium 1 is detected by the extracted wobble detection signal 243 and utilized to access recording position control, and the like.

Since the effects of the premarks 3 and the recorded marks 8 are eliminated from the wobble detection signal 243, a wobble detection signal, which accurately corresponds to the wobbles of the information recording medium can be obtained.

Next, an optimum value of an interlayer distance d between the respective recording layers (recording films) of the information recording medium of the present invention will be explained with reference to FIG. 2.

In current DVD-ROMs/videos, an interlayer thickness d between the first recording layer L0 and the second recording layer L1 is set to $55 \pm 5$ μm. Further, a corresponding objective lens has a numerical aperture NA of 0.60.

In contrast, in the two-recording-layer information recording medium of the present invention, an objective lens has a numerical aperture NA set to 0.65 or more. In this case, since an interlayer resin material has spherical aberration that is inversely proportional to the fourth power of an NA value, the shortest interlayer thickness of the information recording medium of the present invention must be set smaller than the shortest interlayer thickness 40 μm (55 - 50 μm) of the current DVDs (the thickness of the interlayer resin material must be reduced) to eliminate the effect of the spherical aberration of the interlayer resin material. Note that the interlayer resin material preferably has a thickness of 10 to 38 μm and more preferably 20 to 30 μm. However, it is needless to say that the thickness d of the interlayer resin material is set depending on a numerical aperture NA of an objective lens, and a wavelength of a laser beam to be used.

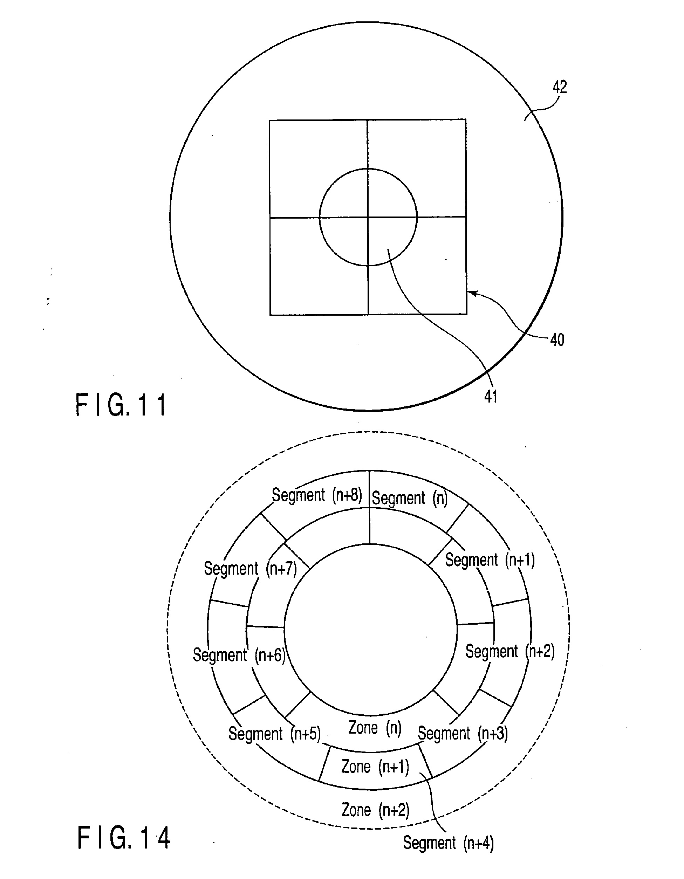

FIG. 11 explains a state of a spot on a photo detector 40 to be used in an optical head of an information recording/reproducing apparatus for recording information to the two-recording-layer information recording medium of the present invention and for reproducing information therefrom.

As shown in FIG. 11, when the reading laser beam 16, which has passed through the objective lens 15 explained before with reference to FIG. 2, is converged on the recording layer L0, the laser beam reflected from the recording layer L0 forms a spot 41 having an area smaller than that of the photo detector 40. In contrast, the laser beam reflected by the recording layer L1 forms a spot 42 having an area comparatively larger than that of the photo detector 40.

It is needless to say that a larger amount of the spot 42 of the laser beam, which is reflected by the recording layer L1 and protrude from the area of the photo detector 40, further reduces the effect of an interlayer crosstalk.

However, according to a simulation, an interlayer having a thickness equal to or less than 10 μm more reduces a difference between the area of the photo detector 40 and the spot of the laser beam 42 reflected by the recording layer L1, thereby a degree of protrusion of the spot 42 from the photo detector 40 can be reduced. Accordingly, the effect of the interlayer crosstalk is increased.

As a result, the interlayer thickness d in this embodiment is preferably 10 μm or more. It has been found in a more detailed calculation that the effect of the interlayer crosstalk can be further reduced by setting the interlayer thickness d to 15 μm or more. Thus, the interlayer thickness d in the information recording medium of the present invention is preferably in the range from 10 μm to 40 μm or in the range from 15 μm to 40 μm. Note that these values (interlayer thickness) d are in coincidence with the above explanation based on FIG. 2.

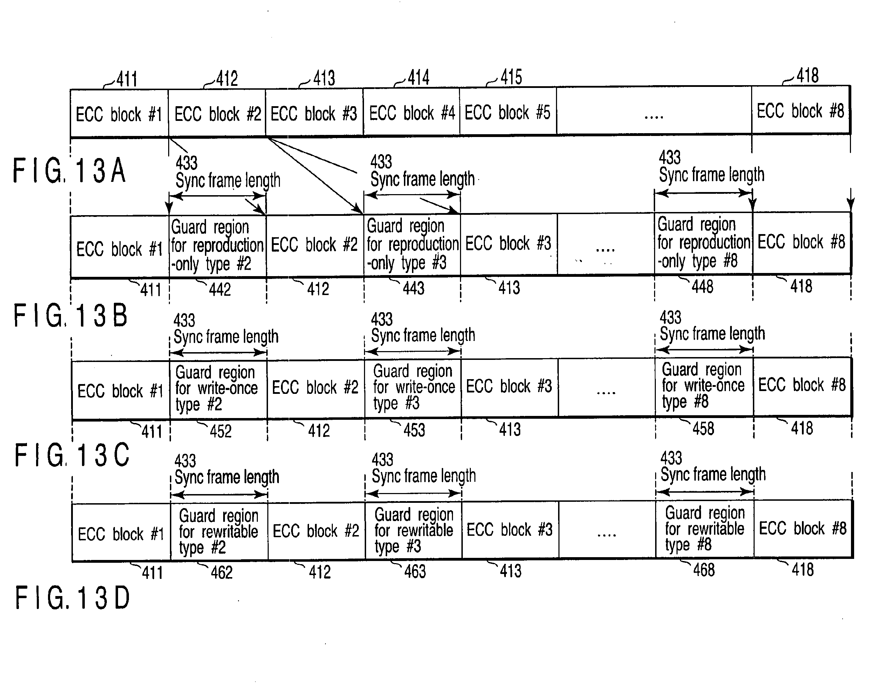

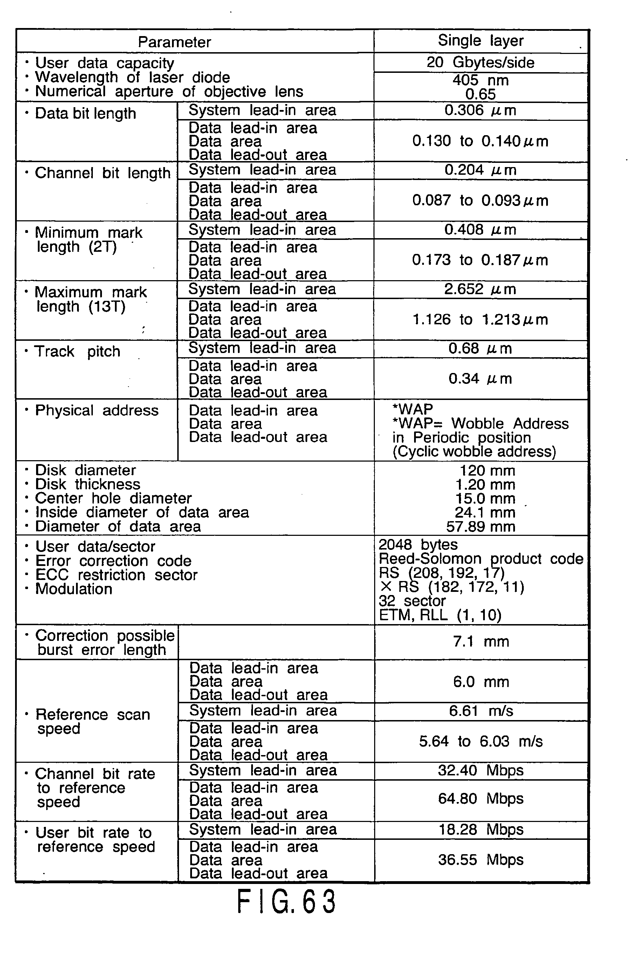

Various features of the information recording medium of the present invention and the information recording/ reproducing apparatus and the information recording/reproducing method of the present invention will be sequentially explained with reference to FIGS. 13 to 50 and FIGS. 53 to FIG. 64.

When a recorded data region starts, a sync code SYO is in State 1.

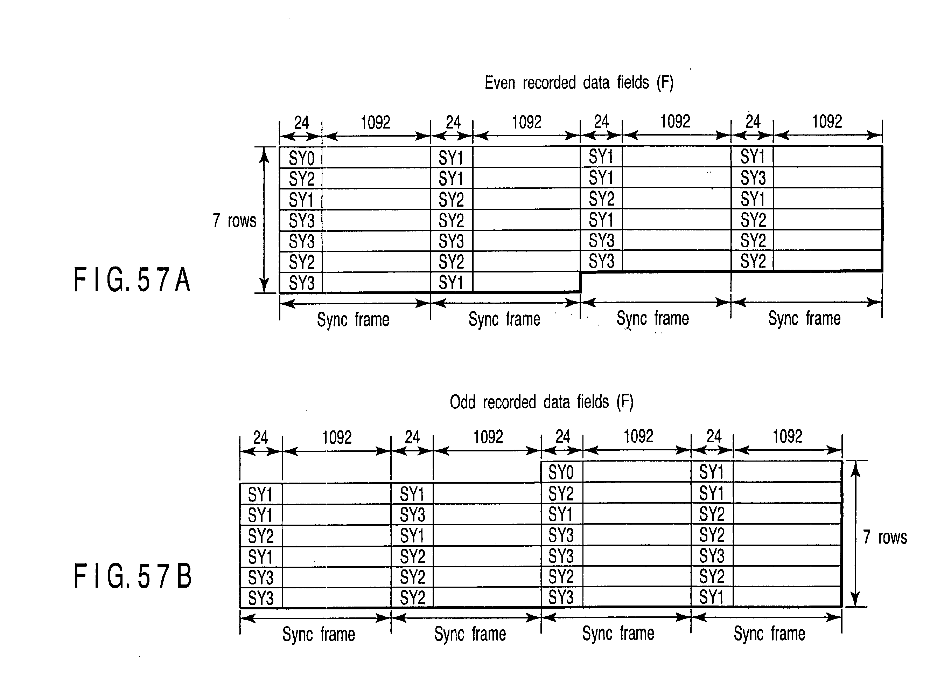

The recorded data region is 13 sets x 2 sync frames as shown in FIG. 57. A single recorded data region having a 29016 channel bit length is equivalent to 2418 bytes before modulation.

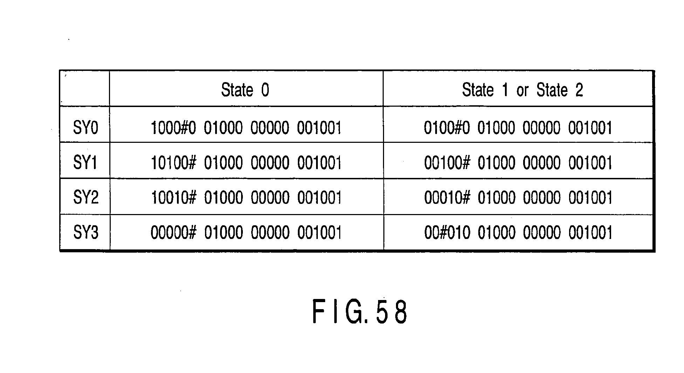

SY0 to SY3 in FIG. 57 denote sync codes and selected from the codes shown in FIG. 58. Note that, in FIG. 57, numerals 24 and 1092 show a channel bit length.

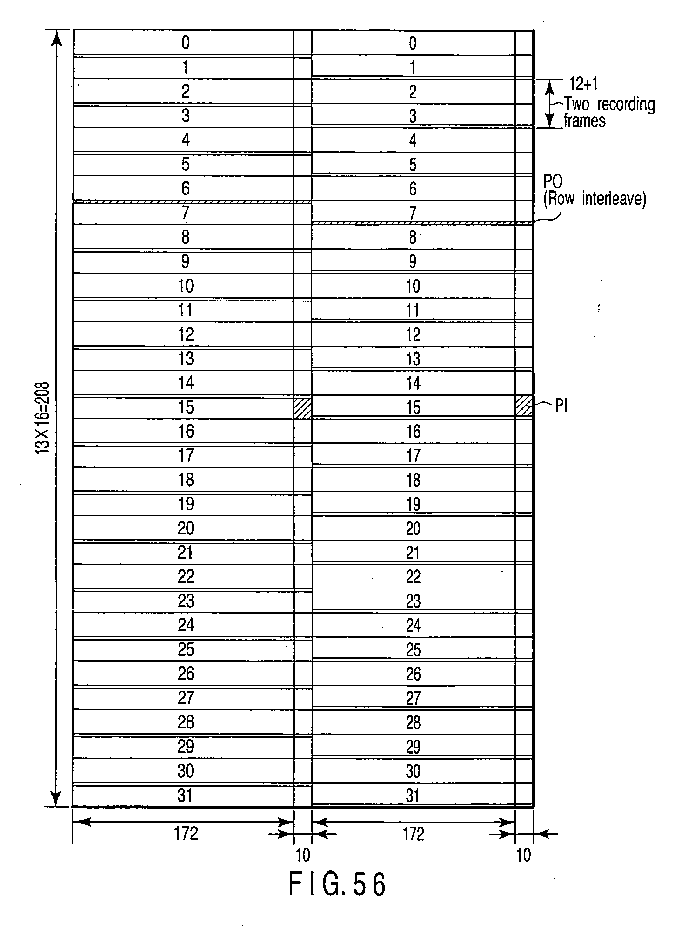

In FIG. 57, the information of outer parity PO shown in FIG. 56 is inserted into the sync data region of the two final sync frames of any of even and odd recorded data regions (that is, a portion in which are arranged a portion the final sync code of which is composed of SY3, a portion, which is located immediately after the above portion and each of the sync data and the sync code of which is composed of SY1, and sync data immediately after the above portion).

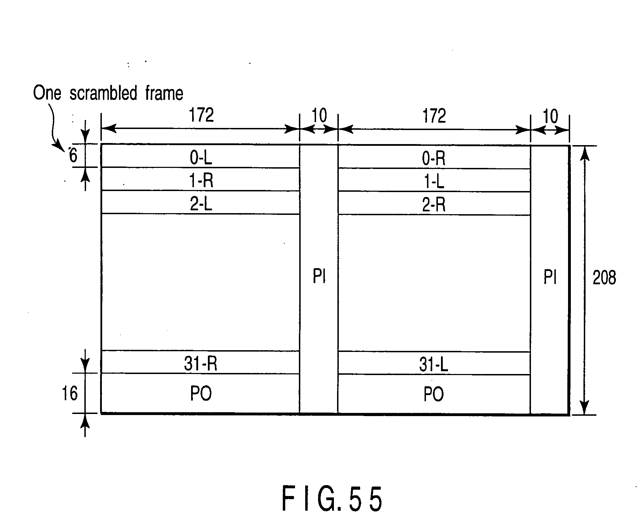

A part of left PO in FIG. 55 is inserted into the two final sync frames in the even recorded data region, and a part of right PO in FIG. 55 is inserted into the two final sync frames in the odd recorded data region.

As shown in FIG. 55, a single ECC block is composed of small right and left ECC blocks and has the data of a PO group inserted thereinto, wherein the PO group differs alternately for every sector (that is, the PO group belongs to the small left ECC block or to the small right ECC block).

FIG. 57A shows a left data region in which sync codes SY3 and SY1 continue, and FIG. 57B shows a right data region in which sync codes SY3 and SY1 continue.

Point A) Arrangement of recorded data region (into which PO group data that is different every sector is inserted)

a) A plurality of types of synchronous frame structures are prescribed by sector constituting ECC block

A synchronous frame structure is varied as shown in FIGS. 57A and 57B depending on whether a sector constituting a single ECC block has an even sector number or an odd sector number. That is, as shown in FIG. 56, the structure, into which the data of the PO group that is alternately different every sector is inserted, is employed as shown in FIG. 56.

[Effect]

In this structure, since data ID can be arranged at the leading position of the sector even after the ECC block is arranged, a data position can be confirmed promptly in access.

Further, since the POs, which belong to the different small ECC blocks, are inserted into the same sector in a mixed state, a structure, in which a PO insertion method as shown in FIG. 56 is employed, can be simplified. As a result, the information of each sector can be easily extracted after an error is corrected in the information reproduction apparatus as well as ECC block data composition processing can be simplified in the information recording/reproducing apparatus.

b) PO has interleave inserting position that is different on right and left sides (FIG. 56).

[Effect]

In this structure, since data ID can be arranged at the leading position of the sector even after the ECC block is arranged, a data position can be confirmed promptly in access.

Contents of a specific sync code will be explained with reference to FIG. 58.

The sync code has three states from State 0 to State 2 in correspondence with a modulation rule (which will be explained below in detail) of the embodiment. Four types of sync codes from SY0 to SY3 are set and selected from the right and left groups of FIG. 58 in accordance to the respective states.

A current DVD standard employs RLL (2, 10) (run length limited: d = 2, k = 10: minimum and maximum values in the range in which "0" successively continues are set to 2 and 10) of 8/16 modulation (8 bits are converted into 16-channel bits) as a modulation system, four states from State 1 to State 4 and eight types of sync codes from SY0 to SY7 are set in modulation.

In comparison with the above standard, the number of types of sync codes is reduced in this embodiment. In an information recording/reproducing apparatus or an information reproducing apparatus, the type of sync code is identified by a pattern matching method when information is reproduced from an information recording medium.

As the number of types of sync codes is greatly reduced in this embodiment, the number of target patterns necessary for pattern matching is reduced, the processing efficiency can be improved by simplifying processing necessary for the pattern matching, and a recognition speed can be increased.

In FIG. 58, bits (channel bits) to which "#" is added show DSV (digital sum value) control bits.

As described below, the DSV control bits are determined such that a DC component is suppressed by a DSV controller (such that the DSV is approaches "0"). That is, "1" or "0" is selected as the value of "#" such that the digital sum value approaches "0" in a macroscopic point of view including the frame data regions (the 1092 channel bit regions of FIG. 57 (34)) on both the sides of the sync code.

As shown in FIG. 58, the sync code of the embodiment is composed of the following sections.

(1) Synchronous position detecting code section

A synchronous position detecting code section has a pattern common to all the sync codes and forms a fixed code region. The position, at which a sync code is arranged, can be detected by detecting the code. Specifically, the code corresponds to the portion of the final 18-channel bits "010000 000000 001001" in the respective sync codes shown in FIG. 58.

(2) Conversion table selecting code section in modulation

A conversion table selecting code is a code that forms a part of a variable code region and varies in correspondence to a State number in modulation.

An initial 1-channel bit in FIG. 58 corresponds to the code. That is, when any of State 1 and State 2 is selected, the first 1-channel bit of any of sync codes from SY0 to SY3 is set to "0", and when State 0 is selected, the first 1-channel bit of sync codes is set to "1" except a sync code SY3. However, as an exception, the first 1-channel bit of the sync code SY3 is set to "0".

(3) Sync frame position identifying code section

A sync frame position identifying code is a code for identifying respective types SY0 to SY3 of the sync codes and constitutes a part of the variable code region.

The first to sixth channel bits from of the respective sync codes in FIG. 58 correspond to the sync frame position identifying code section. As described below, a relative position in the same sector can be detected from a linking pattern of each three sync codes detected continuously.

(4) DC suppressing polarity inverting code section

A DC suppressing polarity inverting code corresponds to the channel bit at the position of "#" in FIG. 58. As described above, inversion or non-inversion of the bit causes the digital sum value of a channel bit train including forward and rearward frame data to approach "0".

In the embodiment, 8/12 modulation (ETM: eight to twelve modulation), RLL (1, 10) is employed as a modulation method. That is, 8-bits is converted into 12-channel bits in conversion, and the minimum value (value d) and the maximum value (value k) in the range in which "0" successively continues after conversion are set to 1 and 10, respectively. In the embodiment, although a density higher than a conventional density can be achieved by setting d to 1, it is difficult to obtain a sufficiently large reproduced signal amplitude at the portion of a most dense mark.

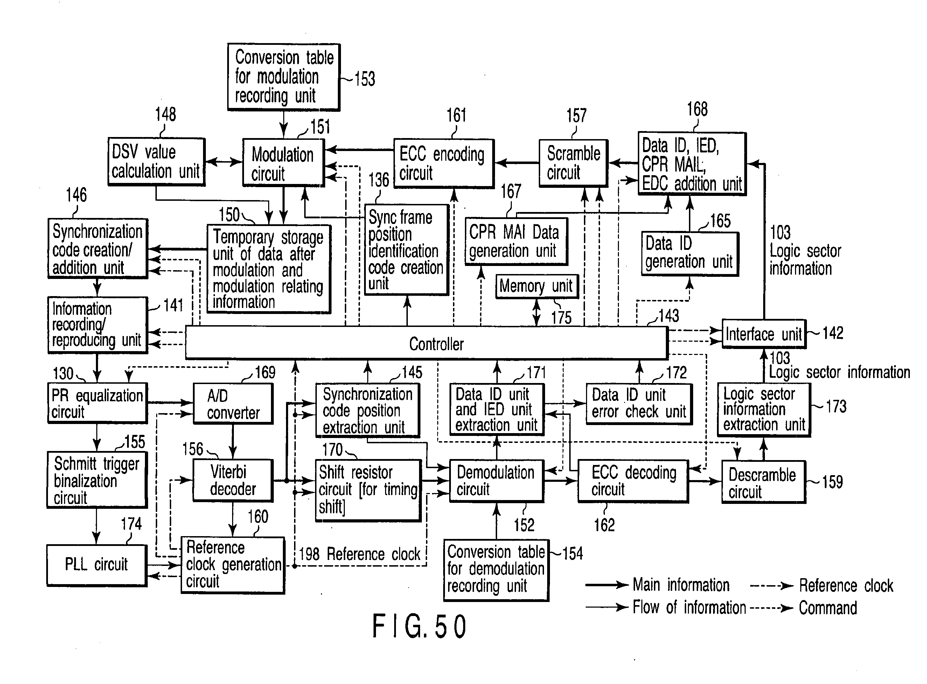

To cope with the above problem, the information recording/reproducing apparatus of the embodiment is provided with a PR equalization circuit 130 and a Viterbi decoder 156 and makes it possible to reproduce a very stable signal using a PRML (partial response maximum likelihood) technology as shown in FIG. 50. Further, since k = 10, "0" does not successively continue in a number more than 11 in ordinary modulated channel bit data.

The synchronized position detecting code section is provided with a pattern, which does not appear in ordinary modulated channel bit data making use of the modulation rule. That is, twelve (= k + 2) "0"s successively continue in the synchronized position detecting code section as shown in FIG. 58. The information recording/reproducing apparatus or the information reproducing apparatus detects the position of the synchronized position detecting code section by finding the above portion.

Further, when "0" is successively repeated excessively long, a bit shift error is liable to occur. To ease the adverse effect of the error, in the synchronized position detecting code section, a pattern, in which "0"s continue in a smaller number is arranged just after the code section.

In the embodiment, since d = 1, it is possible to set "101" as a corresponding pattern. However, it is difficult to obtain a sufficiently large reproduced signal amplitude in the portion of "101" (portion having a most dense pattern) as described above, "1001" is arranged in place of "101", thereby the pattern of the synchronized position detecting code section is arranged as shown in FIG. 58.

As shown in FIG. 58, in this embodiment, the rearward 18-channel bits of each sync code are independently arranged as:

a) the synchronized position detecting code section. Then, the forward 6-channel bits are shared for:
b) conversion table selection code section in modulation;
c) sync frame position identifying code section; and
d) DC suppressing polarity inverting code section.

There can be obtained an effect in that a) the synchronized position detecting code can be easily detected independently with a high detection accuracy by arranging it in the sync code independently of other sections, the b), c), and d) code sections shared in the 6-channel bits reduce the data size (channel bit size) of the overall sync code, and a substantial data efficiency can be enhanced by increasing a sync data occupying ratio.

It is a feature of the embodiment that only the sync code SY0 of the four types of the sync codes shown in FIG. 58 is arranged at an initial sync frame position in the sector.

As a result of an effect thereof, the leading position in the sector can be instantly determined only by detecting the sync code SY0, thereby processing of extracting the leading position in the sector can be greatly simplified.

Further, the embodiment is also characterized in that all the combination patterns of three continuous sync codes are different in the same sector.

In the embodiment of FIG. 57, the sync code SY0 appears at the position of the sync frame located at leading end of the sector, and the sync codes SY1, SY1 follow it in any of the even and odd recorded data regions.

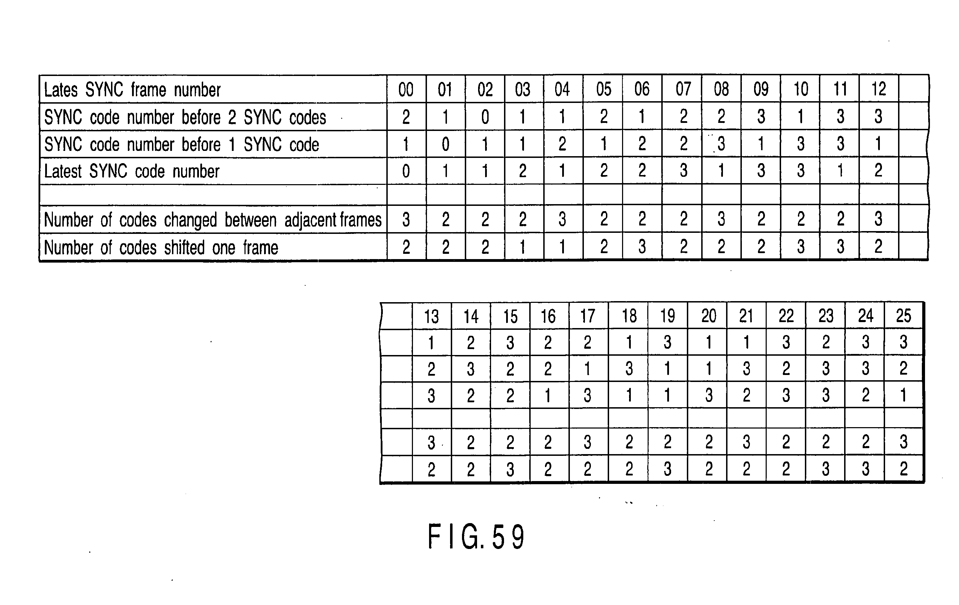

The combination pattern of the three sync codes in this case is represented by (0,1,1) when it is shown only by the sequence of sync code numbers. When the combination patterns each composed of the above sync code numbers are arranged vertically in a column direction, the sync code numbers are shifted one by one, and the resultant combination patterns, which are changed by shifting the sync code numbers, are arranged laterally, the combination patterns shown in FIG. 59 can be obtained.

For example, in the column in which a latest sync frame number is "2" in FIG. 59, sync code numbers are arranged in the sequence of (0,1,1).

In FIG. 57, a sync frame position "02" in the even recorded data region shows a third sync frame position from a left hand side in the uppermost row. A sync code at the sync frame position is SY1. When data is continuously reproduced in the sector, a sync code at a sync frame position just before the above sync frame position is SY1, and a sync code arranged before these two sync codes is SY0 (sync code number is "0").

As apparent from FIG. 59, the combination patterns of three sync code numbers, which are arranged in the column direction, are entirely different from each other in the range of latest sync frame numbers from "00" to "25". The positions in the same sector can be determined from the combination patterns of three sequential sync codes by using the above feature.

A sixth raw in FIG. 59 shows the number of sync code numbers which is changed by a change of pattern resulting from that three combined sequential sync codes are shifted by one. For example, in the column in which the latest sync frame number is "2", sync code numbers are arranged in the sequence of (0,1,1).

When the sync codes combined as described above are shifted by one, a resultant combination pattern is shown in a column whose latest sync frame number is "03" and has an arrangement of (1,1,2).

When these two patterns are compared with each other, the sync code number at a central position is not changed ("1 → 1"). However, the sync code number at a front position is changed from 0 to 1 ("0 → 1"), and the sync code number at a rear position is changed from 1 to 2 ("1 → 2"), that is, the sync code number is changed at two positions in total. Thus, the number of adjacent sync codes whose number is changed is "2".

As apparent from FIG. 59, a feature of this embodiment resides in that the sync code numbers in the sector are arranged such that the number of adjacent sync codes whose number is changed is at least "2" in the entire range of the latest sync frame numbers from "00" to "25" (that is, when three sequential sync codes are shifted by one in the combination pattern thereof, at least two sync code numbers are changed).

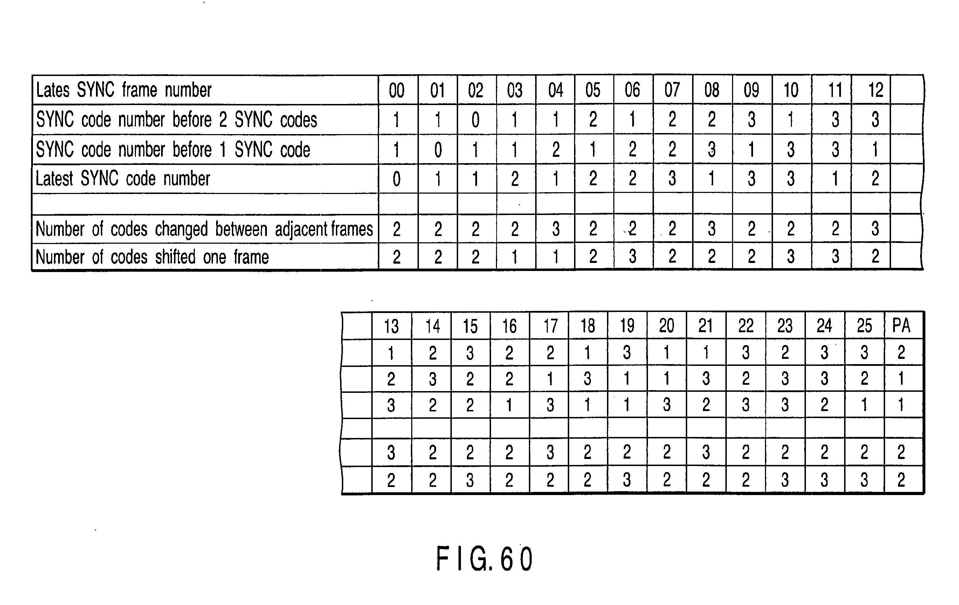

In a specific data structure of the reproduction-only type information recording medium and in the write-once type information recording medium and the rewritable type information recording medium of the embodiment, a guard region is interposed between ECC blocks, a sync code is arranged at the beginning of a postable (PA) region in the guard region, and SY1 is set as a sync code in the guard region as shown in FIG. 60.

When the sync code number is set as described above, even if two sectors are arranged across the guard region, the number of adjacent sync codes whose number is changed by shifting three combined sequential sync codes by one is kept to at least "2" at all times as shown in FIG. 60.

Seventh rows in FIGS. 59 and 60 show the number of three combined sequential sync codes whose number is changed by shifting the codes by two.

In a column, which has a latest sync frame number "02" and in which sync code numbers are arranged in the sequence of, for example, (0,1,1), when the combined sync codes are shifted by two, a column having a latest sync frame number "04" corresponds to the above column, and sync code numbers are arranged in the sequence of (1,2,1) in this column. At the time, the sync code number at a rear position is not changed ("1 → 1"). However, the sync code number at a front position is changed from 0 to 1 ("0 → 1"), and the sync code number at a central position is changed from 1 to 2 ("1 → 2"). Accordingly, the sync code number is changed at two positions in total, and thus the number of change of adjacent sync code numbers is "2" when the combined sync codes are shifted by two.

When information recorded on an information recording medium is sequentially reproduced, if the information recording medium is in an ideal state without defect, frame shift and off-track, sync code data is sequentially detected correctly, and simultaneously with the reproduction of frame data.

In this case, adjacent patterns, which are obtained by shifting three sequential sync codes in a combination pattern one by one, are sequentially detected.

When the sync codes of the embodiment are arranged as shown in FIG. 57, three sequential sync codes in a combination pattern are definitely changed at least at two positions as shown in FIGS. 59 and 60.

Accordingly, if only one sync code number in the combination pattern is changed between adjacent patterns, there is a high possibility that a part of sync codes (numbers) is erroneously detected or off-track causes.

Even if out-of-synchronization occurs while information is being reproduced from an information recording medium and synchronization is applied in a state that one sync frame is shifted, it is possible to confirm a current reproducing position in the same sector by the combination pattern of preceding two sync codes at the time a next sync code is detected. As a result, it is possible to reset the synchronization by shifting it by one frame (by correcting the position thereof).

When it is detected that synchronization becomes out of order and is shifted by one frame while information is being sequentially reproduced, a change of pattern, which is obtained by shifting three sequential sync codes in a combination pattern by two, appears.

The number of positions, at which the sync code numbers in the pattern change, is shown in the seventh rows of FIGS. 59 and 60.

When a frame is shifted, since the quantity of the shifted frame is ±1 sync frame in the majorities of cases, almost all the frame shifts can be detected by grasping a state of pattern change when one sync frame is shifted.

When the frame shift of ±1 sync frame occurs in the sync code arrangement method of the embodiment, what is found from the seventh rows of FIGS. 59 and 60 is as described below:

a) sync code numbers in a pattern change at two positions or more in almost all the cases;
b) sync code numbers in a pattern change at only one position that is near to a leading end in a sector (only the positions of latest sync code numbers "03" and "04"); and
c) sync code numbers in a pattern change at only one position at which a detected combination pattern is (1,1,2) or (1,2,1) (only the positions of latest sync frame numbers "03" and "04") and (1,2,2) or (2,1,2) (positions at which one sync frame is shifted with respect to the positions of the latest sync frame numbers "03" and "04").

From the above feature, in many cases (in which even if the frame shift occurs, when the quantity of shift is ±1 sync frame), it can be determined that "a sync code is erroneously detected or off-track occurs when sync code numbers change at only one position in combination patterns each composed of three sequential sync codes and detected combination patterns do not correspond to any of (1,1,2), (1,2,1), (1,2,2), and (2,1,2)".

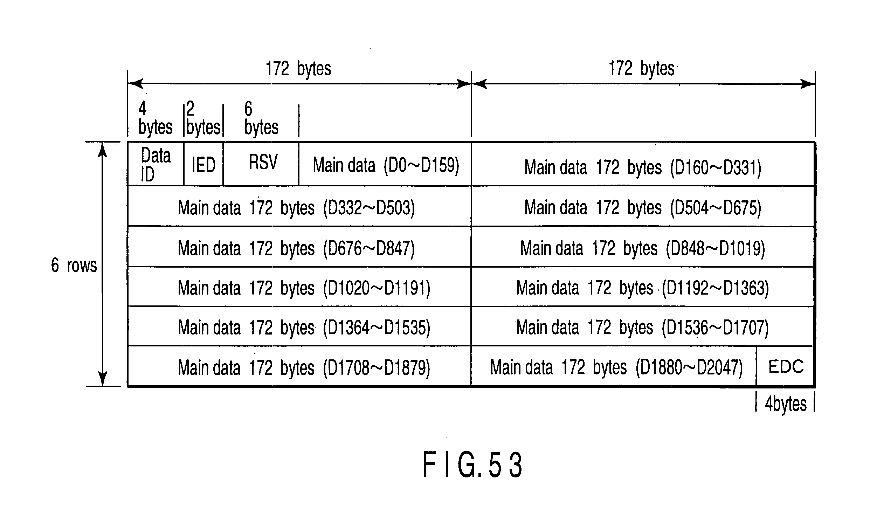

Occurrence of the off-track can be detected based on whether or not ID data shown in FIG. 53 is sequentially arranged or based on whether or not wobble address information, which will be described below, is arranged sequentially (it is not arranged sequentially when off-track occurs).

When the feature of the sync code arrangement method of.the present embodiment shown in FIG. 57 is utilized, any of erroneous detection of frame shift or sync code and off-track can be identified by the state of change of the combination patterns each composed of three sequential sync codes.

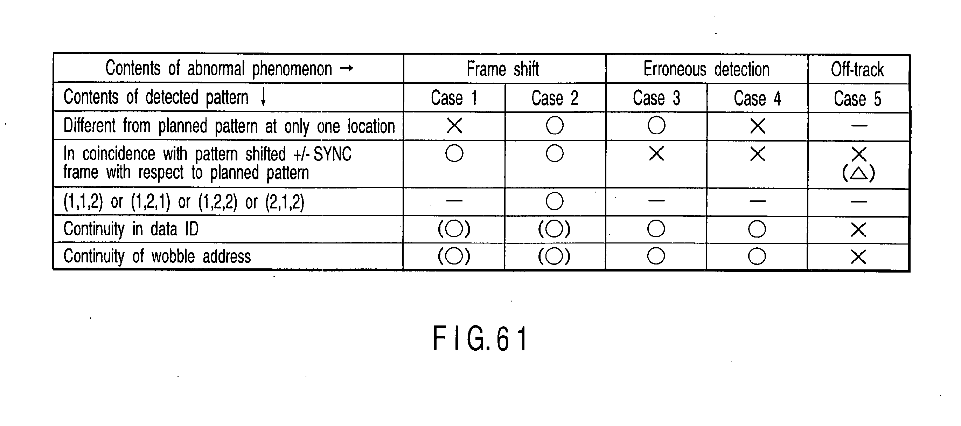

The contents explained above will be summarized in FIG. 61.

That is, in the embodiment of the present invention, the erroneous detection of the frame shift and sync code and the off-track can be identified based on whether the sync code numbers in the pattern combinations change at only one position.

FIG. 61 summarizes the state of change of the patterns in respective cases in a column direction (vertical direction). For example, in Case 1, a detected combination pattern is different from a planned combination pattern at two positions or more and is in coincidence with a pattern in which ±1 sync frame is shifted with respect to the planned pattern, it is regarded that a frame shift occurs. In Case 2, however, a combination pattern differs from the planned pattern at one position. In contrast, in Case 2, it is not regarded that a shift frame occurred unless three states, that is, a detected pattern is different from the planned pattern at only one position, the detected pattern is in coincidence with a pattern in which ±1 sync frame is shifted with respect to the planned pattern, and the detected pattern corresponds to any one of (1,1,2), (1,2,1), (1,2,2), and (2,1,2) occur at the same time.

<<<Explanation of relationship on format between recordable type information recording medium and reproduction-only information recording medium (next-generation DVD-ROM)>>>

The relationship on a recording format between a recordable type information recording medium and a reproduction-only information recording medium of the embodiment will be explained with reference to FIGS. 13A to 13D.

The recordable type information recording medium is provided with guard regions that are as long as a sync frame length 433 and interposed between respective ECC blocks (#1)411 to (#8)418. However, a pattern of data (recorded marks) to be recorded to the respective guard regions differs between the guard regions (#2)452 to (#8)458 of the reproduction-only type information recording medium and those of a write-once type information recording medium shown in FIG. 13C. Likewise, a pattern of data (recorded marks) to be recorded to a header region differs between the guard regions (#2)422 to (#8)448 of a reproduction-only type information recording medium shown in FIG. 13B and those of a rewritable type information recording medium shown in FIG. 13D. Therefore, it is possible to discriminate a type of an information recording medium 221.

According to the embodiment, in any of the write-once type and rewritable type information recording media, write-once and rewrite processing of information can be executed in the unit of the ECC blocks (#1)411 to (#8)418.

Further, according to the embodiment, in any of FIGS. 13A to 13D, a postamble (PA) region (not shown) is formed at the start positions of the guard regions 442 to 468, and further a sync code SY1 having a sync code number "1" is arranged at the leading position of the postamble regions as shown in a postamble (PA) column of FIG. 60.

A method of using the guard region, which differs between the reproduction-only type information reproducing apparatus and the rewritable type information recording medium, will be explained with reference to FIGS. 13B, 13C, and 13D. It should be noted that the write-once type information recording medium shown here is a recording medium to which a recording operation is executed only once. Recording processing ordinarily is executed sequentially. When, however, information is recorded in a particular block unit, a system for recording information to a next data block in a write-once system is employed, and thus the medium is called a write-once type information recording medium in FIGS. 13A to 13D.

Before the difference between guard structures of the respective media is explained, the difference between the data stream of the reproduction-only type and recording/producing type information recording media will be explained. In the reproduction-only type information reproducing medium, the relation between a channel bit and symbol data continues in a designated relation over an entire data block including a guard region.

However, in the write-once type information recording medium, the phase of a least a channel bit varies between blocks in which an recording operation stops.

In the rewritable type information recording medium, since information is rewritten in the unit of an ECC block, there is a high possibility that a phase varies in the unit of the ECC block. That is, the phase of a channel bit continues from the beginning to the end in the reproduction-only type medium. However, the recordable type information recording medium has such a property that the phase of a channel bit greatly varies in a guard region.

In contrast, in the recording type medium, a recording track groove is physically formed in a recording track, and the groove is wobbled to control a recording rate and insert addressing information thereinto. Accordingly, an oscillating frequency of a channel bit clock generation PLL can be controlled, thereby runaway of the oscillation frequency can be prevented even in a processing operation such as a reproducing operation executed at a variable speed.

However, in the write-once type information recording medium, the medium is used for reproduction only after the information has been recorded thereon. Therefore, it must be avoided that recording signal patterns are in coincidence with each other between adjacent tracks in consideration of a case where a differential phase detection (DPD) system is introduced as a tracking error detection method.

When the rewritable type information recording medium has such a structure that the differential phase detection method cannot be employed as the tracking error detection method, no problem arises even if information signal patterns are in coincidence with each other between adjacent tracks. Accordingly, it is preferable that the guard region has a structure in which the channel clock generation PLL can be easily locked, that is, although not shown, a signal having a constant cycle such as VFO is preferable in a random code region.

As described above, since the properties of media depend on the type thereof, an optimum data structure is introduced into the guard region 422 of FIG. 13B, the guard region 452 of FIG. 13C and the guard region 462 of FIG. 13D in consideration of the characteristics of the media.

More specifically:

in the header region of the reproduction-only information recording medium, a pattern, which can be easily detect a line speed, and a channel bit creation PLL lock easiness signal composed of a random signal, are employed;
in the header region of the write-once type information recording medium, since runaway of the oscillation frequency of the channel bit creation PLL can be prevented by detecting wobbles and can be subjected to adjacent control, a channel bit creation PLL lock easiness signal composed of a random signal is employed in consideration of a phase variation in the header region; and
in the rewritable type information recording medium, since a VFO pattern having a constant frequency can be introduced as PLL lock easiness, another header mark signal and the like are employed.

It should be noted that media can be easily identified by providing a guard region according to type of information recording media, and the protecting capability of a copyright protection system can be improved by providing the reproduction-only type and rewritable type information recording media with a different guard region.

Point C) Structure of guard region interposed between ECC blocks

Structure of guard region interposed between ECC blocks (FIGS. 13A to 13D)

[Effect]

The reproduction-only type, write-once type, and rewritable type information recording media can be easily identified at a high speed by changing the contents of information recorded in the guard region depending on a type of the media while securing the compatibility of a format among these media.

<<<Explanation of common technical features in embodiment of rewritable type information recording medium>>>

[A-1] Explanation of zone structure

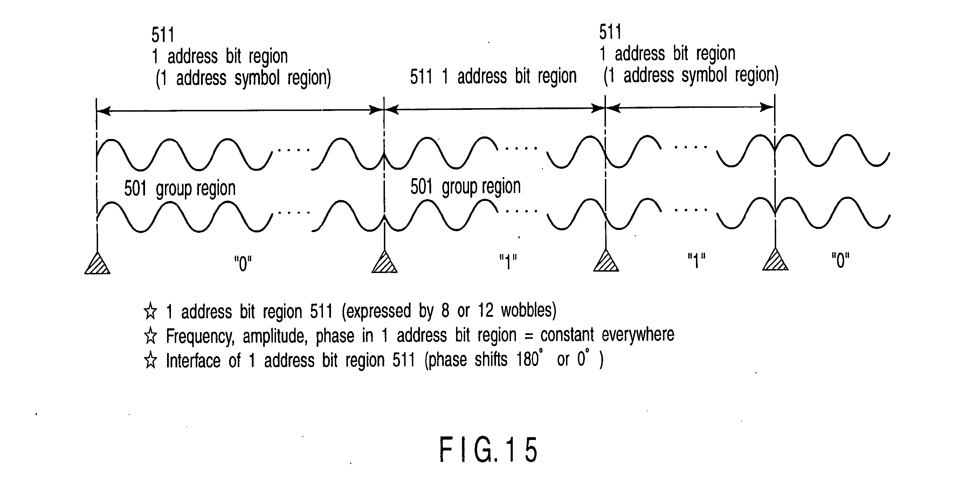

A rewritable type information recording medium as an embodiment of the present invention employs a zone structure as shown in FIG. 14.

In the embodiment, there are defined:

> reproduction line speed: 5.6 to 6.0 m/s (6.0 m/s in system lead-in area);
> channel length: 0.087 to 0.093 $\mu$m (0.204 $\mu$m in system lead-in area);
> track pitch: 0.34 $\mu$m (0.68 $\mu$m in system lead-in area) ;
> channel frequency: 64.8 MHz (32.4 MHz in system lead-in area);
> recorded data (RF signal): (1,10) RLL
> wobble transfer frequency: about 700 KHz (937/wobble); and
> differential modulation phase [deg]: ±900.0.

[A-2] Explanation of address information recording format (wobble modulation by phase modulation and NRZ method)

In the embodiment, address information in the recording type information recording medium is previously recorded using wobble modulation. Phase modulation of ±90° (180°) is used as a wobble modulation system as well as a non-return to zero (NRZ) method is employed. Further, a recording method using a land and groove (hereinafter referred to as "land/groove recording method" or "land/groove recording") is used in the rewritable type information recording medium. It is a feature of the embodiment that the wobble modulation system is employed in the land/groove recording method.

This will be explained in detail with reference to FIG. 15.

In the embodiment, a 1-address-bit (also called address symbol) region 511 is expressed by 8 or 12 wobbles, and frequencies, amplitudes, and phases are in coincidence with each other in every portion of the 1-address-bit region 511. Further, when the same value continues as the value of the address bit, the same phase continues in the interfaces (portions shown by slanted triangles in FIG. 15) of respective 1-address-bit regions 511, and when the address bit is inverted, a wobble pattern is inverted (phase is shifted 180°).

Point I) Wobble phase modulation of 180° (±90°) is employed in land/grove recording (FIG. 15).

[Effect]

When an indefinite bit occurs in the land/groove recording and the wobble modulation because a track number of a groove changes, the overall level of a signal reproduced from a recorded mark recorded thereon is changed, from which a problem arises in that the error rate of the signal reproduced from the recorded mark is locally deteriorated.

However, when the 180° (±90°) phase modulation is employed as the wobble modulation as in the embodiment, a land has a symmetrical width and its waveform changes in a sine wave shape at the position of the indefinite bit on the land. Accordingly, the overall level of the signal reproduced from the recorded mark is formed in a very straightforward shape near to a sine wave.

Further, when tracking is applied stably, the position of the indefinite bit on the land can be previously predicted. As a result, according to the embodiment, a structure, in which the quality of the signal reproduced from the recorded mark can be easily improved, can be realized by subjecting the reproduced signal to correction processing in a circuit.

[A-3] Explanation of land/groove recording method and Indefinite bits mixed due to wobble modulation

In the rewritable type information recording medium of the embodiment, there are provided three types of address information, that is, zone number information as zone identification information, segment number information as segment address information and track number information indicating track address information as information for indicating addresses on the information recording medium 221. A segment number means a number in one round, and a track number means a number in a zone.

When a zone structure shown in FIG. 14 is employed, the zone identification information and the segment address information of the address information have the same value between adjacent tracks. However, the track address information has different address information between adjacent tracks.

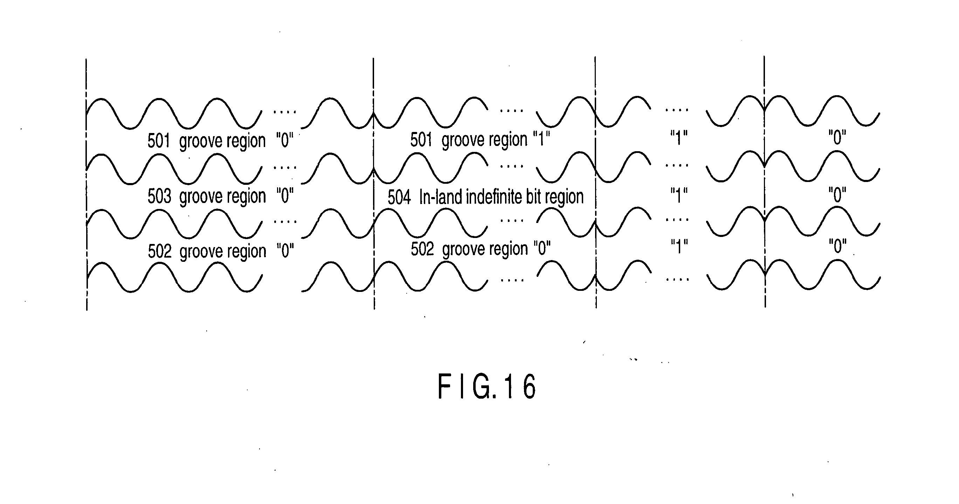

As shown in FIG. 16, a case, in which "···0110···" is recorded in a groove region 501 as the track address information, and "···0010···" is recorded in a groove region 502 as the track address information, will be examined. In this case, a land width periodically changes in a land region 503 sandwiched between "1" and "0" in an adjacent groove region, from which a region, in which an address bit is not fixed by a wobble, occurs.

In the embodiment, this region is called an indefinite bit region 504. When a converged spot passes through the indefinite bit region 504, since a land width periodically changes, the total amount of laser light that is reflected by the indefinite bit region 504 and returns through an objective lens (not shown) changes periodically.

Since a recorded mark is also formed in the indefinite bit region 504 in the land, a signal reproduced from the recorded mark is periodically varied by the above effect, from which a problem arises in that reproduced signal detection characteristics are deteriorated (an error rate of the reproduced signal is deteriorated).

[A-4] Explanation of contents of gray code and special track code (target of the embodiment) employed in the embodiment

In order to reduce the frequency of occurrence of the indefinite bit region 504, the embodiment uses a known gray code or a special track code that is obtained by improving the gray code and newly proposed in the embodiment (corresponding to (Point I)).

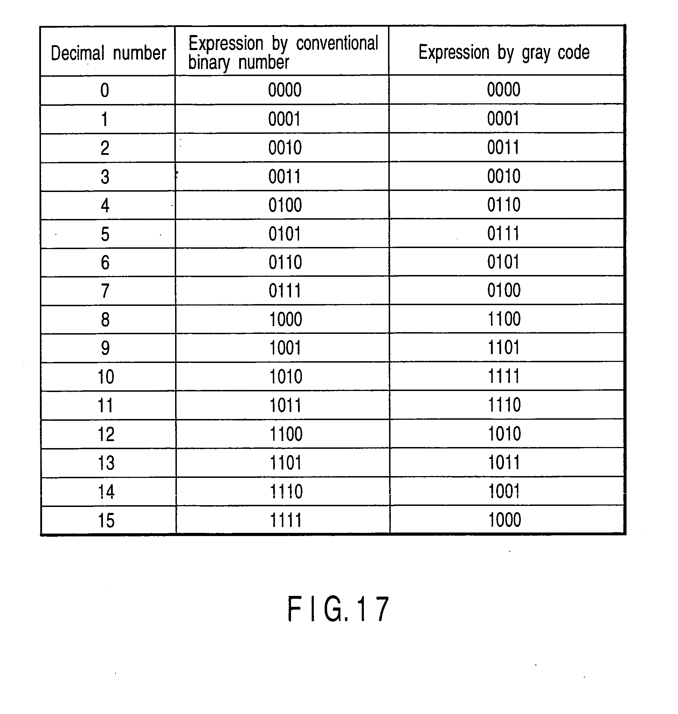

FIG. 17 shows the gray code. The gray code is a decimal number and has a feature in that only "1" bit differs by every change of "1" (it becomes alternately binary).

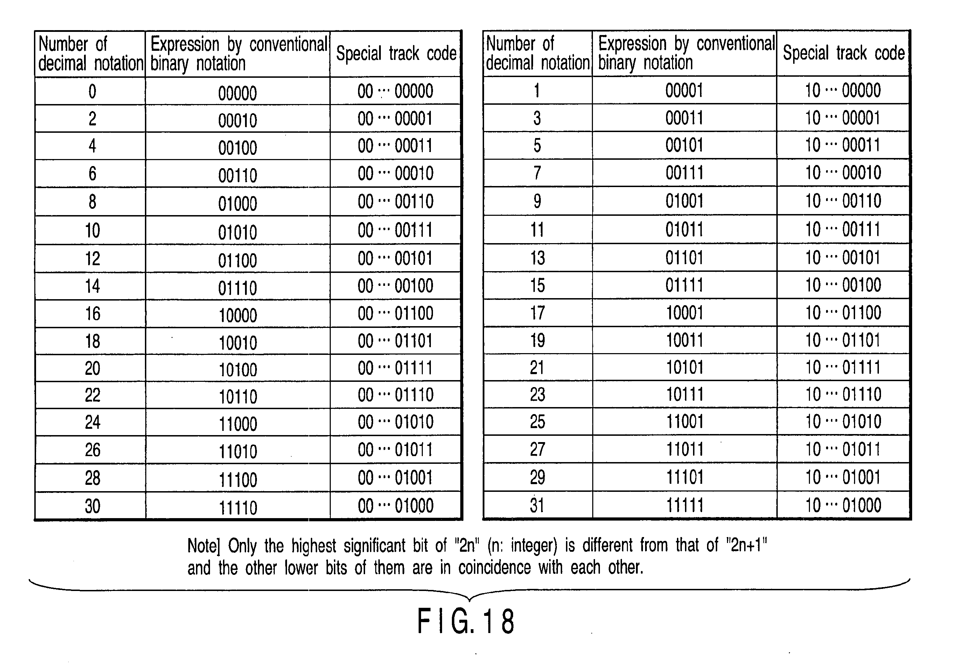

FIG. 18 shows a novel special track code proposed in the embodiment. The special track code has such a feature that only 1 bit differs by every change of "2" in decimal notation (a track number m and a track number m+2 alternately become binary) as well as only the most significant bit differs with respect to an integer n between 2n and 2n+1, and all the low order bits other than it are in coincidence with each other.

The special track code in the embodiment is not limited to the above embodiment and can satisfy the scope of the embodiment by that only 1 bit differs by every change of "2" in decimal notation (a track number "m" and a track number "m+2" alternately become binary) as well as an address bit differs while keeping a specific relation between 2n and 2n+1.

Point B) Physical segment division structure in ECC block

Physical segment division structure in ECC block (FIGS. 19A to 19E)

[Effect]

Excellent format compatibility can be obtained between the reproduction-only type, write-once type, and rewritable type information recording media, and in particular, the deterioration of error correction capability of the signal reproduced from the recorded mark can be prevented in the rewritable type information recording medium.

Since the number of sectors, i.e. 32 and the number of segments, i.e. 7 that constitute an ECC block is in such a relation that they cannot be divided by any kind of the same number (relation of non-multiple), it is possible to prevent the deterioration of the error correction capability of a signal reproduced from the recorded mark.

Point E) Occupying rate of non-modulation region is set higher than that of modulation region.

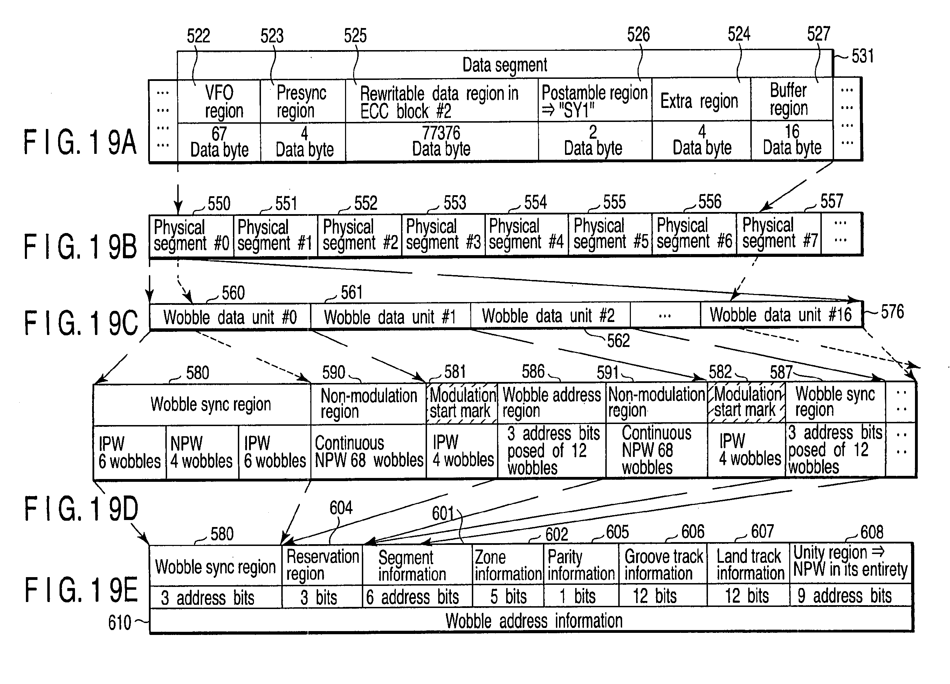

a) An occupying rate of wobble modulation regions (590, 591) is higher than that of wobble non-modulation regions (580 to 587) (FIGS. 19D, 24 and 25).

[Effect]

Since a wobble frequency (wobble wavelength) is set constant in every portion in the embodiment, the following operations are executed by detecting the wobble frequency:

(1) extraction of a reference clock for detecting wobble address information (alignment of frequency with phase);
(2) extraction of a reference clock for detecting a reproduced signal when it is reproduced from a recorded mark (alignment of frequency with phase) ; and
(3) extraction of a recording reference clock when a recorded mark is formed to rewritable type and write-once type information recording media (alignment of frequency with phase)

In the embodiment, the wobble address information is previously recorded using wobble phase modulation. When the phase modulation is executed by wobbles and a reproduced signal is passed through a band-pass filter for waveform shaping, a phenomenon occurs in that the waveform amplitude of a detection signal whose waveform has been shaped is reduced before and after a phase change position.

Accordingly, a problem arises in that when the frequency of occurrence of phase change points is increased by the phase modulation, a waveform amplitude is varied more often, and the clock extraction accuracy is deteriorated, whereas when the frequency of occurrence of the phase change points is decreased in the modulation region, a bit shift is liable to occur when wobble address information is detected.

Therefore, the embodiment is provided with the modulation region and the non-modulation region using the phase modulation, from which an effect of improving the clock extraction efficiency can be obtained by increasing the occupying rate of the non-modulation region.

Further, in the embodiment, since a position, at which switching is executed between the modulation region and non-modulation region, can be previously predicted, when the clocks are extracted, it is possible to extract the clocks by detecting only the signals of the non-modulation region by gating the region.

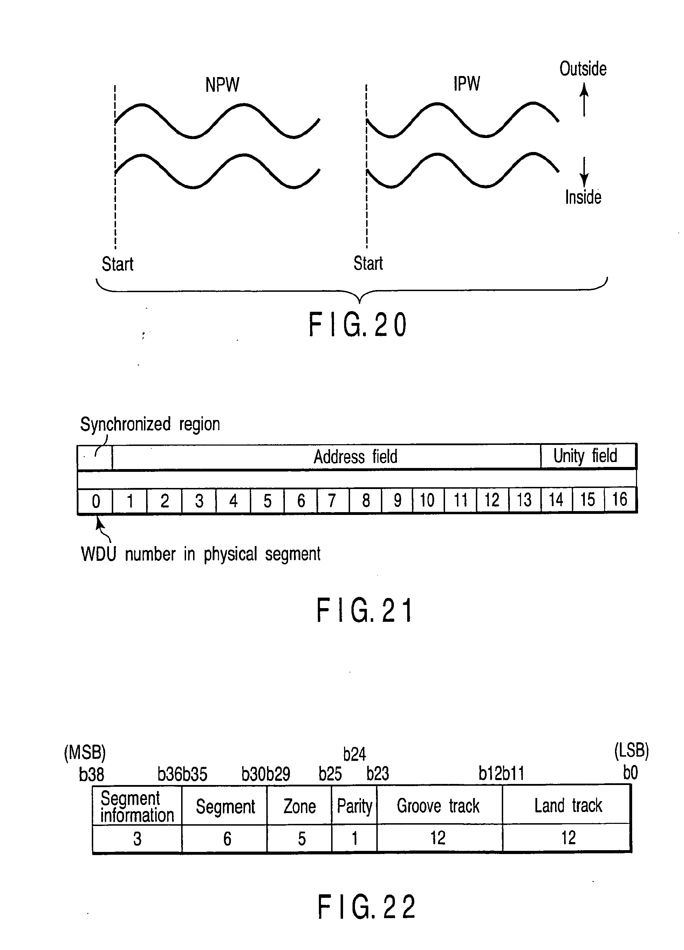

 b) Modulation regions are arranged in a dispersed state so that wobble address information 610 can be recorded in a dispersed state (FIGS. 19D and 21).

[Effect]

When the wobble address information 610 is intensively recorded at one position in an information recording medium, it becomes difficult to detect all the information when dust or scratches exist on a surface thereof. As shown in FIG. 19D, the embodiment has such a structure that the wobble address information 610 is arranged in a dispersed state every 3-address-bits (12 wobbles) included in each of wobble data units 560 to 576, and comprehensive information is recorded every address bit that is an integral multiple of the 3-address-bits so that even if it is difficult to detect information at one position by the adverse effect of dusts and scratches, other information can be detected.

 c) Wobble sync information 580 is composed of 12 wobbles (FIG. 19D).

[Effect]

A physical length for recording the wobble sync information 580 is caused to be in coincidence with the length of the 3-address-bits. Further, since 1-address-bit is expressed by 4 wobbles in a wobble address region, a wobble pattern changes only every 4 wobbles in the wobble address region. The detection accuracy of the wobble sync region 580, which is different from wobble address regions 586 and 587, is improved by causing a wobble pattern change, which cannot occur in the wobble address region, from 6 wobbles to 6 wobbles through 4 wobbles in the wobble sync region 580.

 d) 5-address-bit zone information 602 is arranged adjacent to 1-address-bit parity information 605 (FIG. 19E).

[Effect]

Addition of the 5-address-bit zone information 602 to the 1-address-bit parity information 605 results in 6-address-bits that are an integral multiple of 3-address-bits, which results in such a structure that even if information cannot be detected at one position by the adverse effect of dusts and scratches, other information can be detected.

 e) A utility region 608 is expressed by 9-address-bits (FIG. 19E).

[Effect]

The utility region 608 is set to an integral multiple of 3-address-bits that are input to a wobble data unit similar to the above.

Point F) Land/groove recording and wobble modulation

Address information is recorded by, the land/groove recording and the wobble modulation (FIG. 16).

[Effect]

A capacity can be maximized, and a recording efficiency can be more improved by forming recorded marks to both a groove and a land than forming it only on the groove.

Further, when an address is previously recorded in a prepit state, a recorded mark cannot be formed at the position of the prepit. In the embodiment, however, since recorded marks can be recorded on a groove/land region, which has been subjected to wobble modulation, in a duplicate fashion the recorded mark can be recorded more efficiently by the address information recording method employing the wobble modulation than the prepit address system. Accordingly, a method employing both the systems described above is most suitable to increase a capacity.

Point G) Indefinite bits are arranged also in the groove region in a dispersed state.

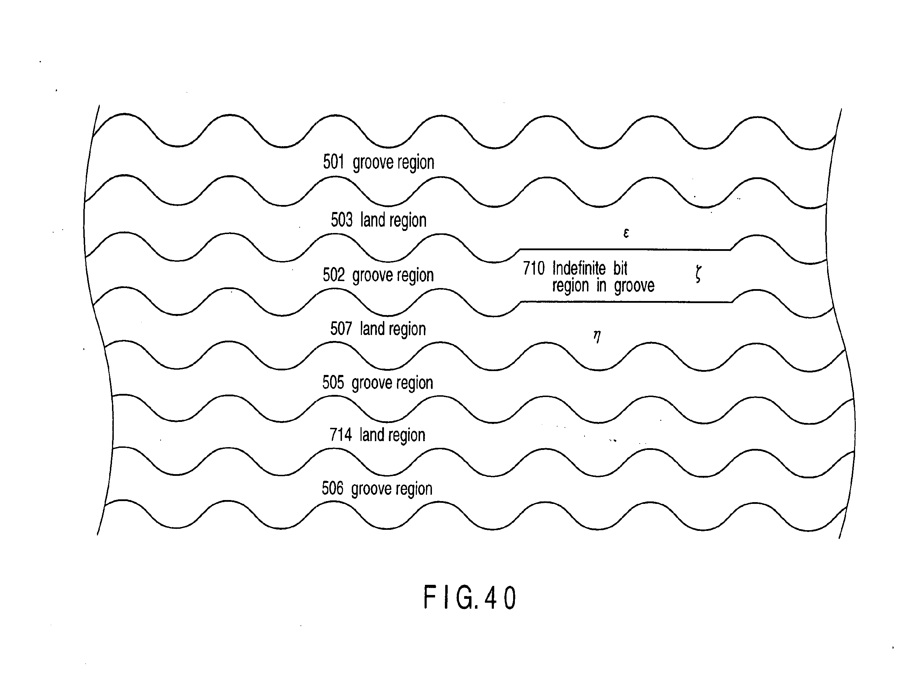

Infinite bits are arranged also in the groove region in a scattered state (track information 606, 607 of FIG. 19E, FIG. 40).

When a groove is created, a groove width is locally changed to thereby form a region having a constant land width.

When a groove region is created, an amount of exposure is locally changed to thereby change a groove width.

When the groove region is created, two converged spots for exposure are used, and a groove width is changed by changing the interval therebetween.

Indefinite bits are arranged in a groove region by changing wobble amplitude width in a groove (FIG. 40).

[Effect]

An address can be accurately detected also in a land section by providing it with a region in which a track address can be fixed without indefinite bit input thereto.

Since it is possible to previously predict a region, in which a track address can be fixed without indefinite bit input thereto, in the land section and the groove section, a track address detection accuracy can be improved.

Point H) Indefinite bits are arranged in the land and in the groove in a dispersed state.

Indefinite bits are arranged in a dispersed state in both the land and the groove by the land/groove recording and the wobble modulation (track information 606, 607 of FIG. 19E, FIG. 40).

[Effect]

When Indefinite bits are intensively arranged to any one of the land and the groove, a frequency of erroneous detection is greatly increased when address information is reproduced in the section in which the Indefinite bits are intensively arranged.

A risk of the erroneous detection is diversified by disposing the Indefinite bits in the land and the groove in the dispersed state, thereby a system, which can easily detect the address information stably as a whole, can be provided.

When a groove width is locally changed, it is controlled so that an adjacent portion has a constant land width.

That is, although Indefinite bits are formed in the groove region in which the groove width is changed, Indefinite bits can be avoided in the land region because the groove width is kept constant in an adjacent land region.

[B] Arrangement of wobble address format in rewritable type information recording medium

[B-1] Explanation of physical segment format

An address information recording format using wobble modulation in the rewritable type information recording medium of the embodiment will be explained with reference to FIG. 19.

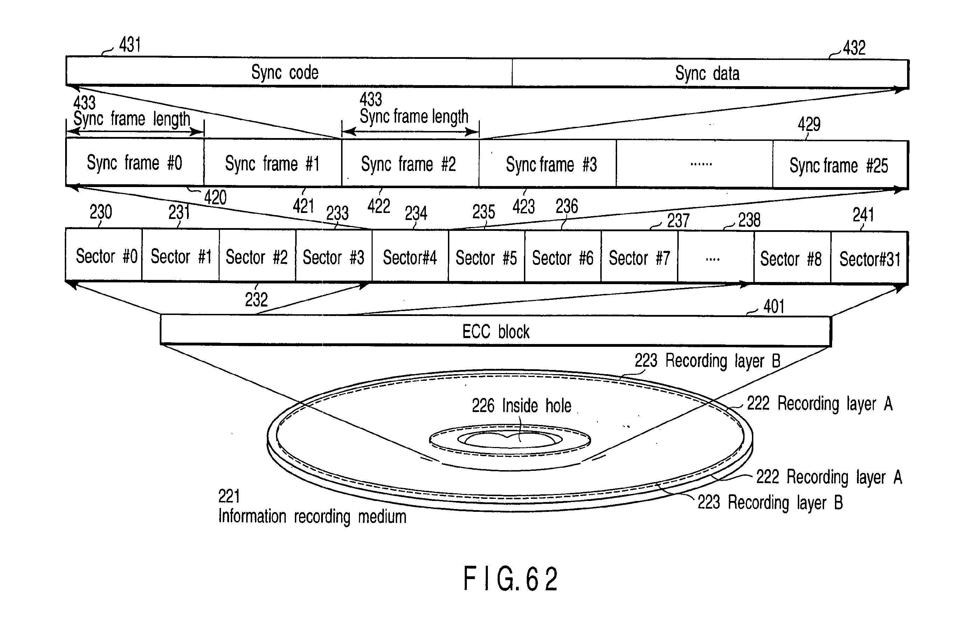

An address information setting method using the wobble modulation in the embodiment has a feature in that a sync frame length 433 shown in FIG. 62 is allocated as a unit. Since one sector is composed of 26 sync frames as shown in FIG. 57 and one ECC block is composed of 32 sectors as can be found from FIG. 56, one ECC block is composed of 26 x 32 = 832 sync frames.

As shown in FIGS. 13A to 13D, since the length of guard regions 462 to 468 interposed between ECC blocks 411 to 418 is in coincidence with one sync frame length 433, the length obtained by adding the one guard region 462 to the one ECC block 411 is composed of 833 (= 832 + 1) sync frames. Since 833 can be subjected to factorization into prime factors as follows, a structural arrangement making use of the feature is employed.

$$833 = 7 \times 17 \times 7 \tag{101}$$

That is, as shown in FIG. 19B, a region, which has a length equal to the length obtained by adding the length of one guard region to the length of one ECC block, is defined as a data segment 531 that acts as a basic unit of rewritable data (as described below, although a data segment structure in the rewritable and write-once type information recording media is not illustrated, it is completely in coincidence with the data segment structure in the reproduction-only type information recording medium). A region whose length is as long as the physical length of the one data segment 531 is divided into seven physical segments (#0) 550 to (#6) 556, and the wobble address information 610 is previously recorded in every physical segments (#0) 550 to (#6) 556 in a form of wobble modulation.

As shown in FIGS. 19A and 19B, the interface position of the data segment 531 is shifted from the interface position of the physical segment 550 by an amount to be described later (both the interface positions are not in coincidence with each other). Further, each of the physical segments (#0) 550 to (#6) 556 is divided into 17 wobble data units (WDU) (#0) 560 to (#16) 576 (FIG. 19C).

It can be found from the expression (101) that seven sync frames are allocated to the length of each of the wobble data units (#0) 560 to (#16) 576. Each of the wobble data units (#0) 560 to (#16) 576 is composed of a 16-wobble modulation region and 68-wobble non-modulation regions 590, 591 (FIG. 19D).

As apparent from FIG. 19D, the embodiment of the present invention is characterized in that the wobble non-modulation regions 590, 591 have an occupying rate that is greatly increased as compared with that of the modulation region.

In the non-modulation regions 590, 591, since a groove or a land is wobbled in a constant frequency at all times, phase locked loop (PLL) is applied making use of the non-modulation regions 590, 591, thereby a reference clock, which is used when a recorded mark recorded on an information recording medium is reproduced, or a recording reference clock, which is used when a mark is newly recorded, can be stably extracted (created).

As described above, in the embodiment, the great increase in the occupying rate of the wobble non-modulation regions 590, 591 with respect to that of the modulation region can greatly improve accuracy and stability when the reproducing reference clock or the recording reference clock are extracted (created). When the non-modulation regions 590, 591 are shifted to the modulation region, modulation start marks 581, 582 are set using four wobbles and arranged such that the wobble address regions 586, 587, which have been subjected to wobble modulation, are reached just after they are detected.

In order to actually extract the wobble address information 610, as shown in FIGS. 19D and 19E, the wobble sync region 580 and the respective wobble address regions 586, 587, from which the non-modulation regions 590, 591 and the modulation start marks 581, 582 in the respective wobble segments (#0) 550 to (#6) 556 are eliminated, are collected, and rearranged as shown in FIG. 19E.

Since the 180°-phase modulation and the non-return to zero (NRZ) method are employed in the embodiment as shown in FIG. 15, whether an address bit (address symbol) is "0" or "1" is set depending on whether a phase of a wobble is 0° or 180° as shown in FIG. 15.

As shown in FIG. 19D, 3-address-bits are set by 12 wobbles in the wobble address regions 586, 587. That is, 1-address-bit is composed of 4 sequential wobbles.

Since the NRZ method shown in FIG. 15 is employed in this embodiment, a phase is not changed within the sequential four wobbles in the wobble address regions 586, 587. Wobble patterns of the wobble sync region 580 and the modulation start marks 581, 582 are set making use of the above feature. That is, a wobble pattern, which cannot be generated in the wobble address regions 586, 587, is set to the wobble sync region 580 and the modulation start marks 581, 582, which makes it easy to identify the positions at which they are arranged.

The embodiment is characterized in that 1-address bit is set to a length other than the length of 4 wobbles at the position of the wobble sync region 580 in contrast to the wobble address regions 586, 587 in which 1-address bit is composed of four sequential wobbles. That is, a region, in which a wobble bit is set to "1", is set to 6 wobbles different from 4 wobbles in the wobble sync region 580 as well as the entire modulation region (of 16 wobbles) in the single wobble data unit (#0) 560 is allocated to he wobble sync region 580, thereby the start position of the wobble address information 610 (the position at which the wobble sync region 580 is arranged) can be more easily detected.

The wobble address information 610 includes the following information.

1. Track information 606, 607

Track information 606, 607 mean track numbers in a zone, and groove track information 606 whose address is fixed on a groove (since no indefinite bit is included, an indefinite bit is generated on a land) and land track information 607 whose address is fixed on the land (since no indefinite bit is included, an indefinite bit is generated on the groove) are alternately recorded.

Further, the track number information of only the portion of the track information 606, 607 is recorded by the gray code shown in FIG. 17 or by the special track code shown in FIG. 18.

2. Segment information 601

Segment information 601 is information for showing a segment number in a track (within one round in the information recording medium 221). When the segment number is counted from "0" as the segment information 601, a pattern in which 6-bits of "0" are repeated, i.e. "000000" appears in the segment information 601. In this case, it is difficult to detect the position of the interface portion (the portions of the slanted triangles) of the address bit region 511 as shown in FIG. 15, and a bit shift, which detects of the interface portion of the address region 511 is liable to be generated in a shift state. As a result, the wobble address information is erroneously determined by the bit shift. To avoid the above problem, the embodiment is characterized in that a segment number is counted from "000001".

3. Zone identification information 602

Zone identification information 602 shows a zone number in the information recording medium 221 and the value "n" in a zone (n) shown in FIG. 14 is recorded in the zone identification information 602.

4. Parity information 605

Parity information 605 is set to detect an error occurred when information is reproduced from the wobble address information 610. In the parity information 605, 17-address-bits are individually added from the segment information 601 to reserved information 604, and "0" is set when a result of addition is even, and "1" is set when it is odd.

5. Unity region 608

As described above, each of the wobble data units (#1) 560 to (#16) 576 is composed of the modulation region having 16 wobbles and the non-modulation regions 590, 591 each having 68 wobbles so that the occupying rate of the non-modulation regions 590, 591 is set greatly larger than that of the modulation region.

Further, the extraction (creation) accuracy and the stability of the reproducing and recording reference clocks are more improved by increasing the occupying rate of the non-modulation regions 590, 591.

The wobble data unit (#16) 576 of FIG. 19C and a wobble data unit (#15) (not shown) located just before it correspond to the position in which the unity region 608 shown in FIG. 19E is included as they are.

All the address bits are set to "0" in the monotone region 608. Accordingly, no modulation start marks 581, 582 are set in the wobble data unit (#16) 576 in which the monotone information 608 is included and in the wobble data unit (#15) (not shown) located just before the above unit, and they are arranged as a non-modulation region having a uniform phase in its entirety.

A data structure shown in FIG. 19 will be described below in detail.

The data segment 531 includes a data region 525 in which 77376-byte data can be recorded. The data segment 531 ordinarily has a length of 77469 bytes, and the data segment 531 is composed of a 67-byte VFO region 522, a 4-byte presync region 523, a 77376-byte data region 525, a 2-byte postamble region 526, a 4-byte extra region (reservation region) 524, and a 16-byte buffer region 527. FIG. 19A shows a layout of the data segment 531.

The VFO region 522 has data set to "7Eh". In a modulated state, State 2 is set to the initial byte of the VFO region 522. The VFO region 522 has a modulation pattern composed of the repetition of the following pattern.
"010001 000100"

The postamble region 526 is recorded by the sync code SY1 shown in FIG. 58.

The extra region 524 is reserved, and all the bits are set to "0b".

The buffer region 527 has data set to "7Eh". The modulated state of the initial byte of the buffer region 527 depends on the final byte of the reservation region. The buffer region 527 has a modulation pattern as shown below except the initial byte.
"010001 000100"

The data recorded in the data region 525 is called a data frame, a scrambled frame, a recorded frame, and a physical sector according to a signal processing step.

The data frame is composed of 2048-byte main data, a 4-byte data ID, a 2-byte ID error detection code (IED), 6-byte reservation data, and 4-byte error detection code (EDC).

The scrambled frame is formed after EDC scrambled data is added to the 2048-byte main data in the data frame.

A cross Reed-Solomon error correction code is applied over the 32-scrambled frames of the ECC block.

After the completion of ECC encoding, the recorded frame is added with the outer mark (PO) and the inner mark (PI) and becomes the scrambled frame. The outer mark PO and the inner mark PI are generated every ECC block composed of 32-scrambled frames.

After the completion of ETM processing for adding a sync code to the leading end of the recording frame every 91 bytes, a recorded data region becomes the recorded frame. A single data frame records 32-physical sectors.

NPW and IPW shown in FIGS. 19 and 24 to 28 are recorded in a track by a waveform shown in FIG. 20. The NPW starts fluctuation outward of a disk, and the IPW starts fluctuation inwardly of the disk. The start point of the physical segments is in coincidence with the start point of the sync regions.

The physical segments are in alignment with a wobble address in periodic position (WPA) subjected to wobble modulation. Each WAP information is shown by 17 wobble data units (WDU). The physical segment has a length equal to the 17 wobble data units.

FIG. 21 shows a layout of WAP information.

The numerals in respective regions show WDU number in the physical segment. A first WDU number in the physical segment is zero.

The wobble sync region 580 is bit synchronized with the start point of the physical segment.

A segment information region is reserved, and all the bits are set to "0b".

This region corresponds to a reserved region 604 in FIG. 19. A segment information region 601 shows a physical segment number on the track (maximum number of the physical segment per track).

A zone information region 602 in a data area shows a zone number.

The zone information region is set to 0 in a data lead-in area and to 18 in a data lead-out area.

A parity information region 605 shows the parities of a segment information region, a segment region, and a zone region.

The parity information region 605 can detect one bit error of these regions and is arranged as shown below.

[Expression 1]

$$b38 \oplus b37 \oplus b36 \oplus b35 \oplus b34 \oplus b33 \oplus b32 \oplus b31$$

$$\oplus b30 \oplus b29 \oplus b28 \oplus b27 \oplus b26 \oplus b25 \oplus b24$$

$$=1$$

where, $\oplus$ denotes a exclusive OR (XOR).

When the physical segment is located in a groove segment, a groove track information region 606 shows a track number in the zone and is recorded in the form of the gray code.

The respective bits in a groove track field is calculated as shown below:

[Expression 2]

$$g_{11} = b_{11} \qquad m=11$$

$$g_m = b_{m+1} \oplus b_m \; m=0 \sim 10$$

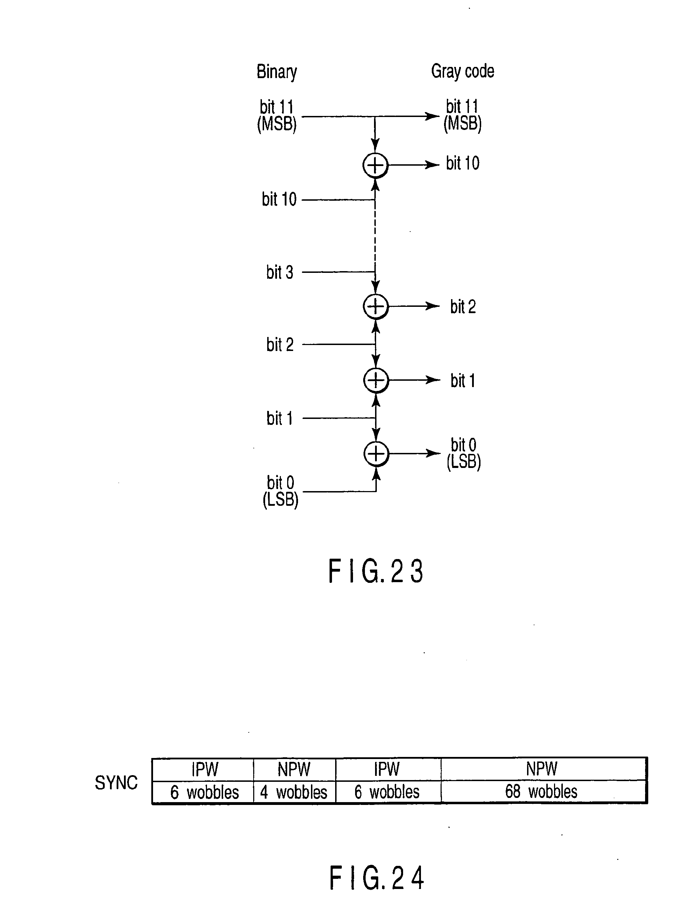

where, $g_m$ is a gray code converted from $b_m$ and $b_{m+1}$ (refer to FIG. 23).

All the bits are ignored in the groove track field in a land segment.

When the physical segment is located in the land segment, a land track information region 607 shows a track number in the zone and is recorded in the form of the gray code.

The respective bits in a land track field is calculated as shown below.

[Expression 3]

$$g_{11} = b_{11} \qquad m=11$$

$$g_m \qquad = b_{m+1} \oplus b_m \; m=0 \sim 10$$

where, $g_m$ is the gray code converted from $b_m$ and $b_{m+1}$ (refer to FIG. 23).

All the bits are ignored in the land track field in a groove segment.

The wobble data unit (WDU) includes 84 wobbles (refer to FIGS. 24 to 28).

FIG. 24 shows the WDU in the sync region.

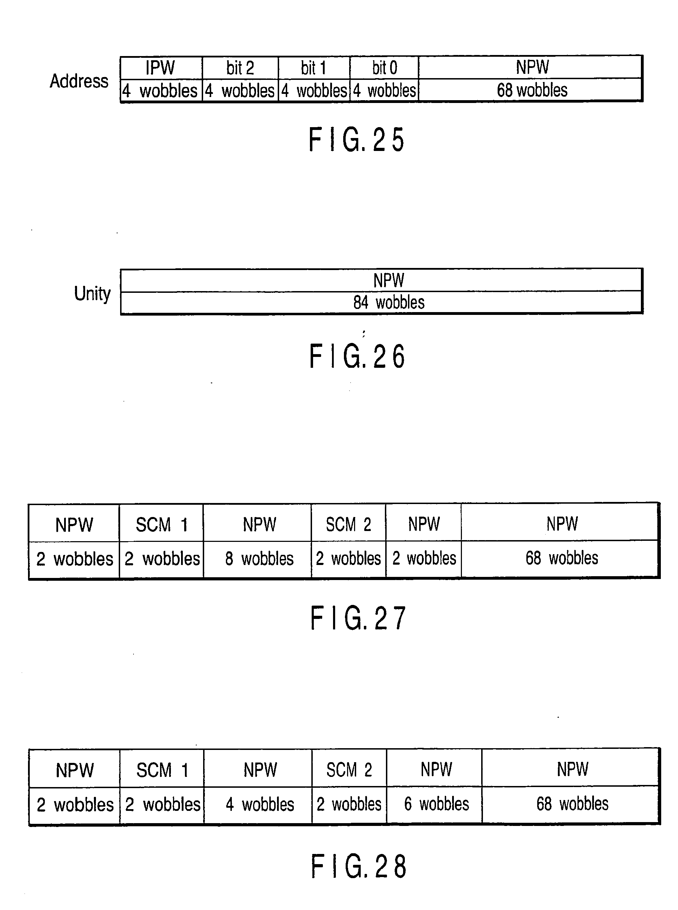

FIG. 25 shows the WDU in the address region.

In a normal phase wobble (NPW), "0b" is recorded for three bits in the address region, and in an inverted phase wobble (IPW), "1b" is recorded for three bits in the address region.

FIG. 26 shows the WDU in a unity region. The WDU in the unity region is not modulated.

FIG. 27 shows the WDU of an outside mark.

FIG. 28 shows the WDU of an inside mark.

[B-2] Explanation of servo circuit adjustment mark arrangement structure

A physical segment for a servo calibration mark is arranged in a groove track which is adjacent to the inside of a final groove track of each zone, in which no user data is written, and similar to the final groove track.

The WDU #14 of the physical segment adjacent to the inside of the final groove track of each zone is the wobble data unit of the outer mark.

The WDU #14 of the physical segment of the final groove track of each zone is the WDU of the inner mark.

The servo calibration mark is formed by eliminating a part of a groove structure and forming a land in a groove track.

An arrangement of the servo calibration mark will be shown below.

High frequency (HF) signal

A high frequency signal can be obtained from a diffraction light beam emitted from the servo calibration mark and measured from a lead channel 1.

a) Signal from servo calibration mark 1 (SCM1)

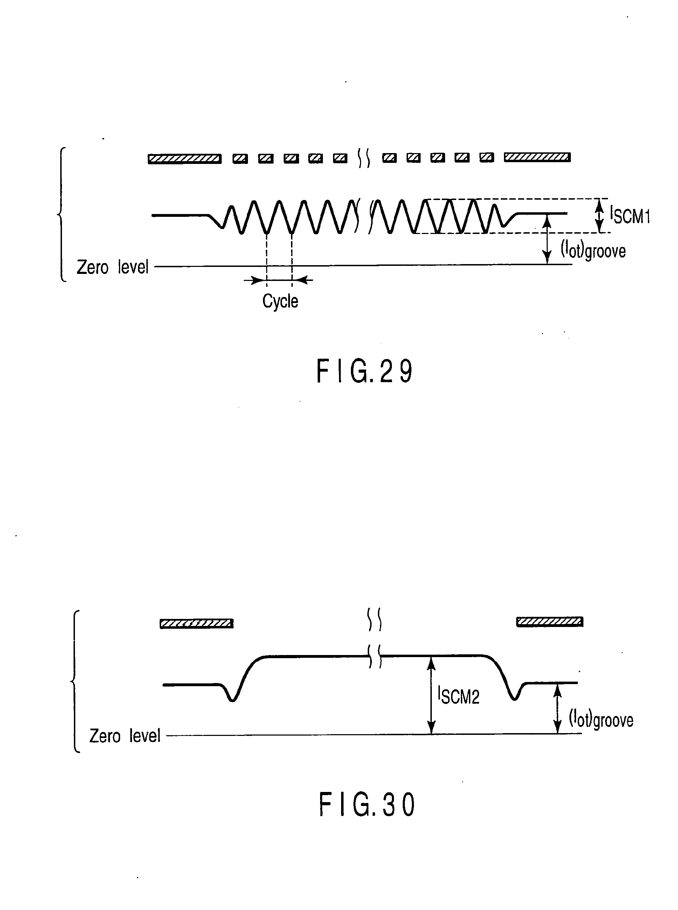

A peak value generated from a servo calibration mark 1 (SCM1) is ISCM1, and an on-track signal is $(I_{ot})_{groove}$. A zero level is the level of a signal measured when no disk is inserted. These signals satisfy the following relation and are shown in FIG. 29.

$ISCM1/(I_{ot})_{groove}$ : 0.30 minute

Average cycle of the waveform from the SCM1: $8T \pm 0.5T$

b) Signal from servo calibration mark 2 (SCM2)

A peak value generated from a servo calibration mark 2 (SCM2) is ISCM2, and an on-track signal is $(I_{ot})_{groove}$. A zero level is the level of a signal measured when no disk is inserted. These signals satisfy the following relation and are shown in FIG. 30.

$ISCM2/(I_{ot})groove$: 1.50 minutes

A method of measuring an amount of inclination in a radial direction of an information recording medium of the embodiment using a servo circuit adjustment mark will be shown below.

Detection of amount of inclination is in radial direction

It is preferable that a recording apparatus compensate an amount of inclination of a disk in a radial direction. When the disk turns once, fluctuation of an amount of inclination of the disk in the radial direction is suppressed to an allowable value or less. Thus, it is sufficient for the recording apparatus to compensate a large amount of deviation in accordance with a radial position of a track. The physical segment of a land track n-1 located between the physical segments of the servo calibration mark is used to detect the amount of inclination of the disk in the radial direction.

$$SCD = (I_{iscm} - I_{oscm})/(I_{ot})_{land}$$

Definition: normalized difference between position outputs (Ia + Ib + Ic + Id) of SCM2 of WDU for outer mark and SCM2 of WDU for inner mark;

where,

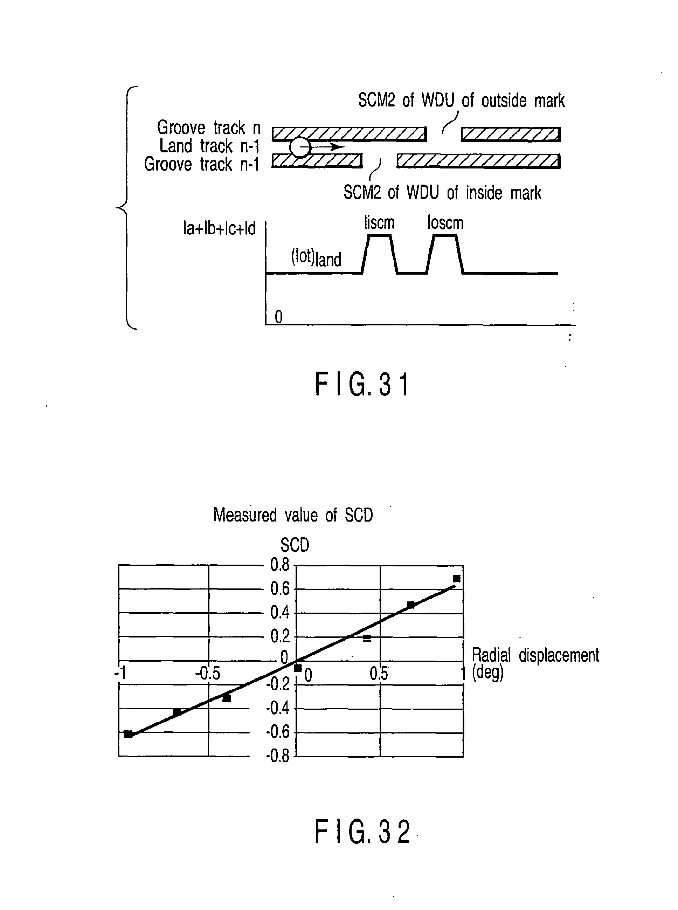

$I_{iscm} = [Ia + Ib + Ic + Id]_{iscm}$; and
$I_{oscm} = [Ia + Ib + Ic + Id]_{oscm}$ (refer to FIG. 31).

When a light beam traces the center of a land track n-1, $I_{iscm}$, $I_{oscm}$, and $(I_{ot})_{land}$ are detected. A determined SCD value is proportional to the amount of inclination in the radial direction.

FIG. 32 shows an example of a result of measurement of the SCD value.

An average value of amounts of inclination in the radial direction of radial positions can be determined by determining an average of sequential SCD values while a land track n-1 turns once.

The SCD value has an offset based on the asymmetricity of a light beam. Accordingly, it is preferable to calibrate the light beam before measurement.

A residual tracking error also adversely affects the measurement of the SCD value. However, an actual accuracy of the SCD value can be obtained by maintaining a radial error to the allowable value or less.

[B-3] Layout of physical segment and layout of physical sector

Each of a data lead-in area, a data area, and a data lead-out area has a zone, a track, and a physical segment.

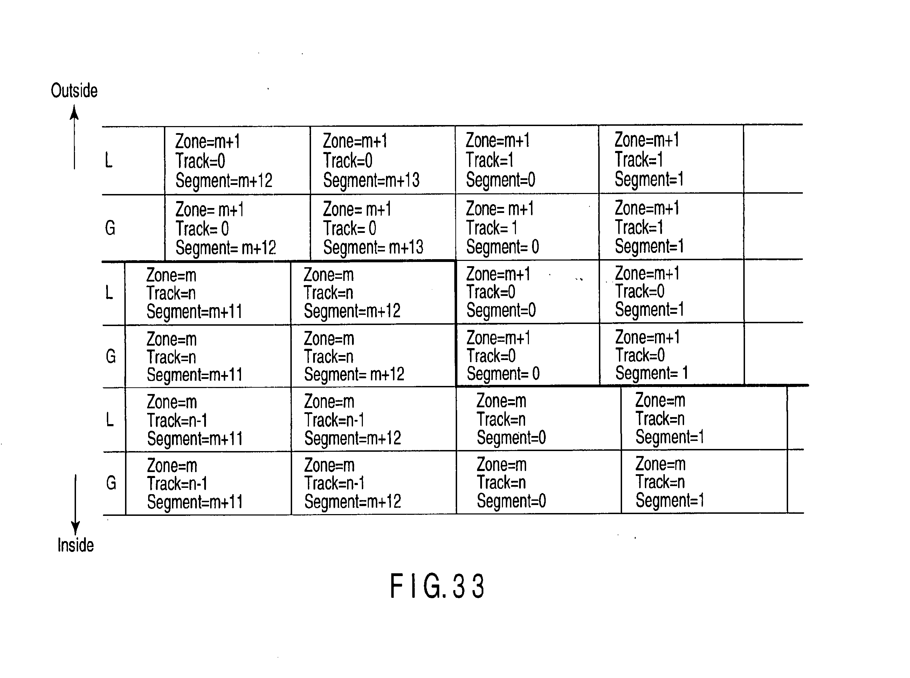

As shown in FIG. 33, the physical segment is specified by a zone number, a track number, and a physical segment number.

Respective physical segments having the same physical segment number are aligned in each zone. A difference of angle between the initial channel bits of the physical segments of adjacent tracks in each zone is within $\pm 4$ channel bits.

Initial physical segments having a physical segment number 0 are aligned between the zones. A difference of angle between the initial channel bits of any two start physical segments in the data lead-in area, the data area, and the data lead-out area is within ±256 channel bits.

It is impossible to read the address of a land track adjacent to a zone interface.

A system lead-in area includes a track composed of an embossed pit train. The track in the system lead-in area forms a 360° continuous spiral. The center of the track coincides with the center of a pit.

A track from the data lead-in area to the data lead-out area forms a 360° continuous spiral.

Each of the data lead-in area, the data area, and the data lead-out area includes a groove track train and a land track train. A groove track continues from the beginning of the data lead-in area to the end of the data lead-out area. A land track continues from the beginning of the data lead-in area to the end of the data lead-out area. Each of the groove track and the land track is composed of a continuous spiral. The groove track is formed as a groove, and the land track is not formed as a groove. The groove is formed in a trench shape, and its bottom is located nearer to the reading surface of a disk than a land.

The disk turns counterclockwise when viewed from the reading surface. The track is composed of a spiral traveling from an inner radius toward an outer radius.

Each track in the system lead-in area is divided into a plurality of data segments. Each of the data segments includes 32 physical sectors. Each data segment in the system lead-in area has the same length as that of seven physical segments. Each data segment in the system lead-in area has 77469 bytes.

The data segment includes no gap and sequentially arranged in the system lead-in area.

The data segments in the system lead-in area are uniformly arranged on a track such that the interval between the initial channel bit of one data segment and that of a next data segment is set to 929628 bits.

Each track in each of the data lead-in area, the data area, and the data lead-out area is divided into a plurality of physical segments.

The number of the physical segments per track in the data area is increased from an inner radius toward an outer radius such that a constant recording density can be obtained in any zone. The number of the physical segments in the data lead-in area is the same as the number of the physical segments in a zone 18 in the data area. Each physical segment has 11067 bytes.

The physical segments of each of the data lead-in area, the data area, and the data lead-out area are uniformly arranged on a track such that the interval between the initial channel bit of one physical segment and that of a next physical segment is set to 132804 bits.

The physical sector numbers in the system lead-in area are determined such that the physical sector number of the final physical sector of the system lead-in area is set to 158791 ("02 6AFFh").

The physical sector numbers in the land track excluding those in the system lead-in area are determined such that the physical sector number of the physical sector arranged at the beginning of the data area arranged next to the data lead-in area is set to 196608 ("03 0000h").

The physical sector numbers increase from the start physical sector of the data lead-in area in the land track to the final physical sector of the data lead-out area.

The physical sector numbers in the groove track excluding those in the system lead-in area are determined such that the physical sector number of the physical sector arranged at the beginning of the data area arranged next to the data lead-in area is set to 8585216 ("83 0000h").

The physical sector numbers increase from the start physical sector of the data lead-in area in the groove track to the final physical sector of the data lead-out area.

[B-4] Explanation of recorded data recording/rewriting method

FIGS. 34A to 34F show a recording format of rewritable data to be recorded to a rewritable type information recording medium.

FIG. 34A shows the same contents as those of FIG. 13D described above.

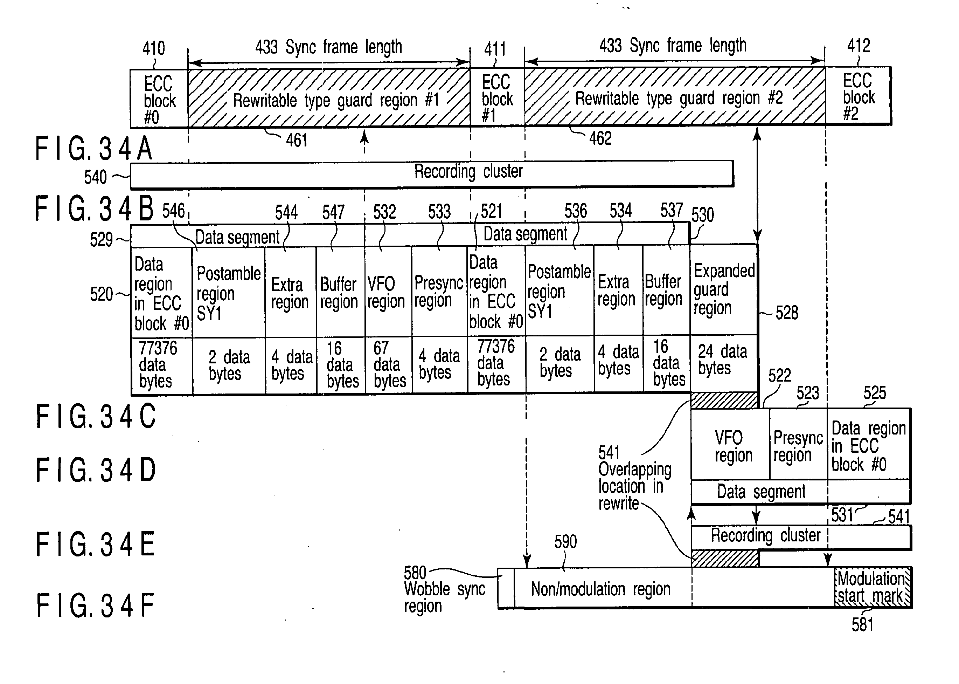

In the embodiment, rewritable data is rewritten in the units of recording clusters 540 and 541 shown in FIGS. 34B and 34E. As described below, one recording cluster is composed of at least one data segment 529 to 531 and an expanded guard region 528 arranged finally.

That is, the start position of one recording cluster 531 is in coincidence with the start position of the data segment 531 and starts from a VFO region 522.

When a plurality of data segments 529, 530 are to be sequentially recorded, they are sequentially arranged in the same recording cluster 531 as shown in FIGS. 34B and 34C as well as since a buffer region 547 located at the end of the data segment 529 is continued to a VFO region 532 located at the beginning of a next data segment, the phases of the recording reference clocks of them in recording are in coincidence with each other in recording.

On the completion of the sequential recording, the expanded guard region 528 is arranged at the final position of the recording cluster 540. The expanded guard region 528 has a data size of 24 data bytes as data before modulation.

As can be seen from the correspondence between FIGS. 34A and FIG. 34C, postamble regions 546, 536, extra regions 544, 534, buffer regions 547, 537, VFO regions 532, 522, and presync regions 533, 523 are included in rewritable type guard regions 461, 462, and the expanded guard region 528 is arranged only at a position where sequential recording is finished.

As shown in FIGS. 13B, 13C, and 13D, a data arrangement structure, in which the guard region is inserted between the respective ECC blocks, is common to any of the reproduction-only type, write-once type, and rewritable type information recording media.

Further, although not shown as to the write-once type information recording medium, a data structure in the data segments 490 and 531 is common to any of the reproduction-only, write-once type, and rewritable type information recording media.

Furthermore, as shown in FIGS. 13A to 13D, the data contents in the ECC blocks 411 and 412 also have a data structure of the same format regardless of the types of the media such as the reproduction-only information recording medium (FIGS. 13A 13B), the write-once type information recording medium (FIG. 13C), and the like, and these blocks can record data of 77376 data bytes (the number of bytes of original data before modulation), respectively.

That is, the data contents of rewritable data 525 in the ECC block #2 have a structure shown in FIG. 56.

The sector data constituting each ECC block is composed of 26 sync frames as shown in FIG. 62 or 57 (structure of data region).

To compare the physical ranges of a rewrite unit, FIG. 34C shows.a part of the recording cluster 540 as an information rewrite unit, and FIG. 34D shows a part of the recording cluster 541 as a next information rewrite unit. As described above, a feature of the embodiment resides in that information is rewritten such that the expanded guard region 528 partly overlaps the rear VFO region 522 at an overlapping portion 541 in rewriting (corresponding to Point D).

An interlayer crosstalk can be eliminated in a single-sided two-recording-layer information recording medium by the rewrite executed in the partly overlapping fashion as described above.

The recording clusters 540 and 541 are arranged in the data lead-in area, the data area, and the data lead-out area.

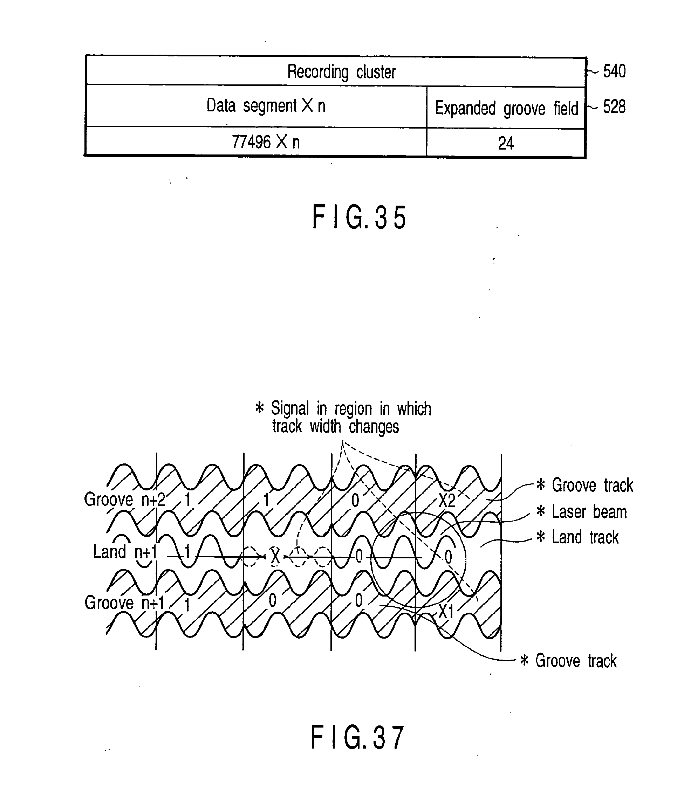

Each of the recording clusters 540 and 541 includes at least one of the data segments 529, 530 and the expanded guard region 528 (refer to FIG. 35). Each of the data segments 529, 530 has the same length as that of the seven physical segments. The number of each of the recording clusters 540, 541 is one in each recording.

The data segment in the land track includes no gap. The data segment in the groove track includes no gap. The start physical segment number of the data segment is shown by the following expression.

$$\{(\text{number of physical segments per track}) \times (\text{track number}) + (\text{physical segment number})\} \bmod 7 = 0$$

"A mod B" shows a surplus when A is divided by B.

That is, the above expression means that recording starts from a position of a multiple of 7 as the physical segment.

FIG. 35 shows a layout of the recording clusters 540 and 541. A numeral in the figure denotes a length of a region by a byte.

In FIG. 35, "n" denotes a numeral of at least "1".

The expanded guard region 528 has data "7Eh" and its modulation pattern is formed by the repetition of the following pattern.

"010001 000100"

The actual start position of the recording cluster is located within ±1 byte with respect to a theoretical start position that is apart from the start position of the physical segment by 24 wobbles.

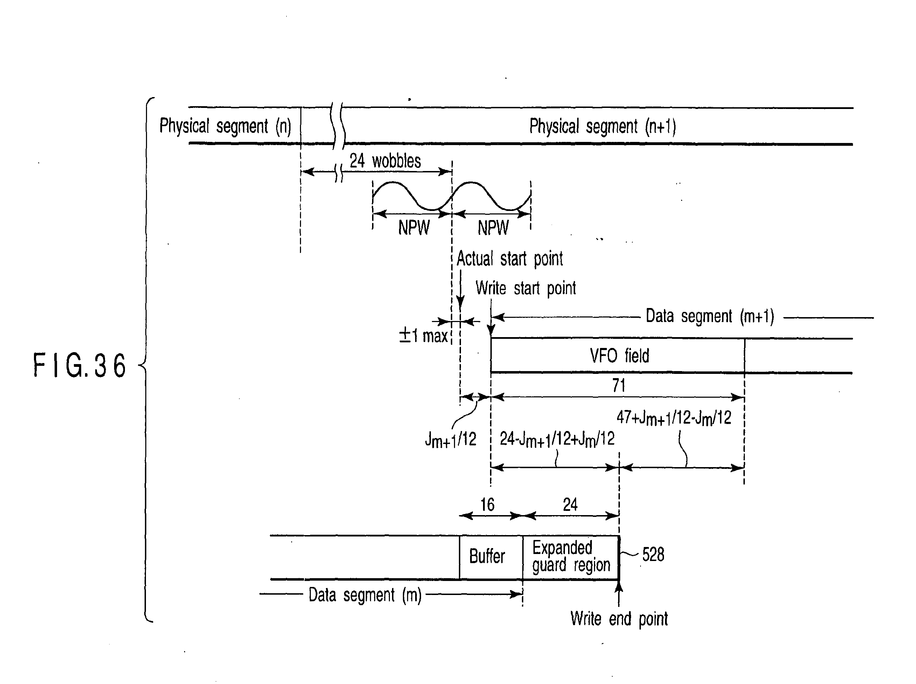

The theoretical start position starts from the start position of the normal phase wobble (NPW) (refer to FIG. 36).

The start position of the recording cluster is shifted by J/12 byte from an actual start position so that the average probability of the positions of a mark on a recording layer is in coincidence with that of the positions of a space thereon after an overwrite cycle has been repeated many times (refer to FIG. 36).

The numerals in FIG. 36 denote a length in terms of a byte unit. $J_m$ changes between 0 and 167 at random, and $J_{m+1}$ changes between 0 and 167 at random.

As can be seen from FIG. 19A, a data size, which can be rewritten in one data segment of this embodiment, is as shown below.

$$67 + 4 + 77376 + 2 + 4 + 16 = 77469 \text{ data bytes} \tag{102}$$

Further, as can be seen from FIGS. 19C and 19D, the single wobble data unit 560 is composed of 84 wobbles as shown below.

$$6 + 4 + 6 + 68 = 84 \tag{103}$$

Since a single physical segment 550 is composed of 17 wobble data units and the length of seven physical segments 550 to 556 is in:coincidence with the length of the single data segment 531, 9996 wobbles are arranged in the length of the single data segment 531 as shown below.

$$84 \times 17 \times 7 = 9996 \tag{104}$$

Accordingly, 7.75 data bytes correspond to a single wobble as shown below.

$$77496/9996 = 7.75 \text{ data bytes/wobble} \tag{105}$$

As shown in FIG. 36, a next overlapping portion, at which a next VFO region 522 overlaps a next guard region 528, exists after 24 wobbles from the leading position of the physical segment. As can be seen from FIG. 19D, although 16 wobbles from the leading end of the physical segment 550 constitute the wobble sync region 580, 68 wobbles after the wobble sync region 580 are located in the non-modulation region 590.

Accordingly, the portion, in which the next VFO region 522 overlaps the next expanded guard region 528 after the 24 wobbles, is located in the non-modulation region 590.

The rewritable type information recording medium of the embodiment uses a recording film composed of a phase change type recording film.

In the phase change type recording film, since the deterioration of the recording film starts in the vicinity of a rewrite start/end position, when recording is repeatedly started and ended at the same position, the number of times of rewrite is restricted due to the deterioration of the recording film.

In the embodiment, a recording start position is shifted by $J_m/12$ data bytes at random in rewrite as shown in FIG. 36 in order to overcome the above problem.

In FIGS. 19C and 19D, the leading end position of the expanded guard region 528 is in coincidence with that of the VFO region 522 to explain a basic concept. In the embodiment, however, the leading end position of VFO region 522 is shifted from that of the expansion guard region 528 at random in a strict sense as shown in FIG. 36.

A DVD-RAM disk as a current rewritable type information recording medium also uses the phase change type recording film as the recording film and shifts a recording start/end position at random to increase the number of times of rewrite.

In the current DVD-RAM disk, the maximum range of the random shift of the recording start/end position is set to 8 data bytes.

Further, an average channel bit length (as modulated data to be recorded on a disk) of the current DVD-RAM disk is set to 0.143 μm.

In the rewritable type information recording medium of the embodiment, an average channel bit length is set to 0.090 μm from FIG. 29 (Expression 101) as shown below.

$$(0.087 + 0.093)/2 = 0.090 \ \mu m \tag{106}$$

When the length of a physical shift range is applied to that of the current DVD-RAM disk, a minimum length, which is necessary as the random shift range of the embodiment, is 12.7 bytes as shown below making use of the above value.

$$8 \text{ bytes} \times (0.143 \ \mu m/0.090 \ \mu m) = 12. \ 7 \text{ bytes} \tag{107}$$

In the embodiment, to secure the easiness of reproduced signal detection processing, a unit of a random shift amount is set in coincidence with a channel bit after modulation.

Since an ETM modulation, which converts 8 bits to 12 bits, is employed in the embodiment, an amount of random shift is shown below in terms of data bytes as a reference.

$$J_m/12 \text{ data bytes} \tag{108}$$

$J_m$ can be set to a value from 0 to 152 as shown by the following expression (109) using the value of the expression (107).

$$12.7 \times 12 = 152.4 \tag{109}$$

For the reason as described above, as long as the value of $J_m$ is set within the range that satisfies the expression (109), a length within the random shift range is in coincidence with that that of the current DVD-RAM disk and the same number of times of rewrite as that of the current DVD-RAM disk can be guaranteed. In the embodiment, to secure a number of times of rewrite larger than that of the current DVD-RAM disk, the value of the expression (107) is provided with a small margin, thereby the length of the random shift range is set to 14 data bytes as shown below.

$$\text{Length of random shift range} = 14 \text{ data bytes} \tag{110}$$

Substitution of the value of the expression (110) for the expression (108) results in 168 (= 14 × 12), from which the value that can be set to $J_m$ is determined as shown below.

$$0 \text{ to } 167 \tag{111}$$

In FIG. 34, the buffer region 547 and the VFO region 532 in the recording cluster 540 have a definite length. Further, as apparent from FIG. 35, the random shift values $J_m$ of all the data segments 529, 530 in the same recording cluster 540 are set to the same value in every portion.

When a single recording cluster 540, in which a large amount of data segments are included, is sequentially recorded, recording positions are monitored from wobbles.

That is, the recording positions on an information recording medium are confirmed simultaneously with recording by detecting the positions of the wobble sync region 580 shown in FIGS. 19A to 19E and counting the number of wobbles in the non-modulation regions 590, 591.

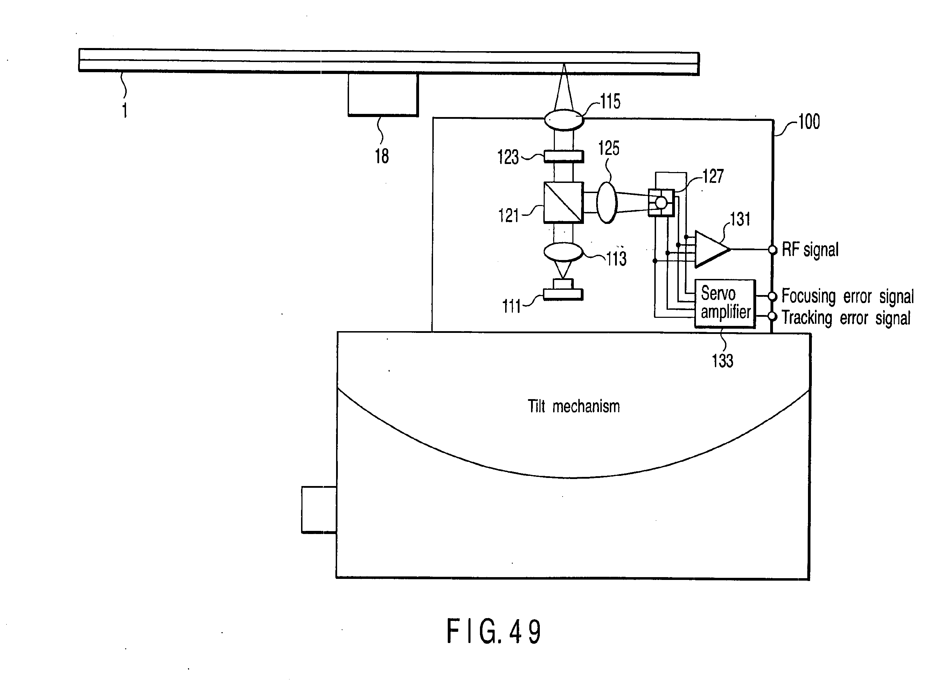

At the time, a recording position on the information recording medium may be shifted very infrequently due to occurrence of a wobble slip (information is recorded at a position shifted by one wobble cycle) because a wobble is counted erroneously or a rotation motor (for example, the motor of FIG. 49), which turns the information recording medium, rotates irregularly.

The information recording medium of the embodiment is characterized in that when it is detected that a recording position is shifted as described above, timing of record is adjusted by executing adjustment in the rewritable type guard region 461 of FIG. 34.

In FIGS. 34A to 34F, important information, in which a lack and overlap of bits is not allowed, is recorded in the postamble region 546, the extra region 544, and the presync region 533. However, since a particular pattern is repeated in the buffer region 547 and the VFO region 532, a lack and overlap of only one pattern are allowed therein as long as the position of an interface at which it is repeated is secured. Accordingly, in the embodiment, the timing of record is corrected by executing the adjustment in the guard region 461, in particular, in the buffer region 547 or in the VFO region 523.

As shown in FIG. 36, in the embodiment, the position of an actual start point, which acts as a reference when a position is set, is set so that it is in coincidence with a position at which the amplitude of a wobble is "0" (at the center of a wobble). However, since a wobble position detection accuracy is low, an amount of shift up to maximum ±1 data byte is allowed to the position of the actual start point is in the embodiment as shown below and as described in FIG. 36 as "±1 max.

$$\text{Position of actual start point} = \text{amount of shift up to maximum} \pm 1 \text{ data byte} \tag{112}$$

In FIGS. 34A to 34F and 36, an amount of random shift of the data segment 530 is set to $J_m$, (as described above, all the amounts of random shift are in coincidence with each other in the recording cluster 540), and an amount of random shift of the data segment 531 to be written once thereafter is set to $J_{m+1}$.

When, for example, an intermediate value is set to "$J_m$" and "$J_{m+1}$" shown in the expression (111) as a value that can be set to them, $J_m = J_{m+1} = 84$. Thus, when the position of the actual start point has a sufficiently high accuracy, the start position of the expanded guard region 528 is in coincidence with that of the VFO region 522 as shown in FIG. 34.

In contrast, when the data segment 530 is recorded at a position as rearward as possible and the data segment 531, which is written once or rewritten later, is recorded at a position as forward as possible, the leading position of the VFO region 522 may enter the buffer region 537 by 15 data bytes at the maximum from the values shown in the expressions (110) and (112).

Particular important information is recorded in the extra region 534 just before the buffer region 537. Accordingly, in the embodiment, at least 15 data bytes are necessary as a length of the buffer region 537 as shown below.

$$\text{Length of buffer region 537 = at least 15 data bytes} \qquad (113)$$

In the embodiment shown in FIG. 34, the data size of the buffer region 537 is set to 16 data bytes with a margin of 1 data byte.

When a gap is formed between the expanded guard region 528 and the VFO region 522 as a result of a ransom shift, an interlayer crosstalk is caused by the gap when a single-sided double-recording-layer structure is employed. To cope with this problem, the information recording medium is designed to prevent occurrence of the gap by partly overlapping the expanded guard region 528 and the VFO region 522 inevitably even if the random shift is executed.

Accordingly, in the embodiment, the length of the expanded guard region 528 must be set to at least 15 data bytes from the same reason as that shown in the expression (113). Since the subsequent VFO region 522 has a sufficiently long length of 71 data bytes, no trouble is caused in signal reproduction even if the region where the expanded guard region 528 overlaps the VFO region 522 somewhat increases (because a time for synchronizing a reference clock for reproduction is sufficiently secured by the VFO region 522 which does not overlap).

Accordingly, it is possible to set a value larger than 15 data bytes to the expanded guard region 528.

It is explained above that the wobble slip may occur infrequently in sequential recording, and a recording position is shifted by one wobble cycle.

Since the one wobble cycle corresponds to 7.75 (about 8) data bytes as shown in the expression (105), the length of the expanded guard region 528 is set to at least 23 data bytes in the embodiment also taking this value into consideration in the expression (113).

$$\text{Length of expanded guard region 528 = (15 + 8 =) at least 23 data bytes} \qquad (114)$$

In the embodiment shown in FIG. 34, the length of the expanded guard region 528 is set to 24 data bytes with a margin of 1 data byte likewise the buffer region 537.

In FIG. 34, a recording start position of the recording cluster 541 must be set correctly.

In the information reproducing apparatus of the embodiment, the recording start position is detected using a wobble signal previously recorded in a rewritable or write-once type information recording medium.

As can be seen from FIG. 19D, a pattern is changed from NPW to IPW in a 4-wobble unit in all the regions except the wobble sync region 580. In contrast, in the wobble sync region 580, since a wobble change unit is partly shifted from 4 wobbles, the wobble sync region 580 can be most easily detected. Accordingly, in the information recording/reproducing apparatus of the embodiment, after the position of the wobble sync region 580 is detected, recording processing is prepared, and recording is started. Therefore, the start position of the recording cluster 541 must be located in the non-modulation region 590 just after the wobble sync region 580.

FIG. 36 shows the contents thereof. The wobble sync region 580 is arranged just after a physical segment is changed.

As shown in FIG. 19D, the length of the wobble sync region 580 corresponds to 16 wobble cycles.

Further, after the wobble sync region 580 is detected, 8 wobble cycles are necessary including a margin for the preparation of the recording processing. Accordingly, as shown in FIG. 36, the leading position of the VFO region 522, which is located at the leading position of the recording cluster 541, must be located at least 24 wobbles rearward of the change position of the physical segment in consideration of the random shift.

As shown in FIGS. 34A to 34F, the recording processing is executed many times at the overlapping portion 541 in rewriting. Repetition of the rewrite changes (deteriorates) the physical shape of a wobble groove or a wobble land, thereby the quality of a wobble reproduced signal is deteriorated.

In the embodiment, it is devised that the overlapping portion 541 in rewriting is recorded in the non-modulation region 590 without being located in the wobble sync region 580 or in the wobble address region 586 as shown in FIGS.

34F or in FIGS. 19A and 19D. Since a definite wobble pattern (NPW) is simply repeated in the non-modulation region 590, even if the quality of the wobble reproduced signal is partly deteriorated, the deteriorated signal can be interpolated making use of the wobble reproduced signals before and after it.

Point D) partly overlapping record in guard area

a) In a recording format of a recordable information recording medium, guard areas partly overlap in recording.

As shown in FIG. 34, the expanded guard region 528 overlaps the VFO region 522 on the rear side thereof, from which an overlapping portion 541 occurs in rewrite (FIGS. 34 and 36).

[Effect]

When a gap (portion in which no recorded mark exists) exists between front and rear guard areas between segments, a difference of a light reflectance is generated at the gap in a macroscopic point of view because the light reflectance is different depending on whether or not a recorded mark exists. Accordingly, when a single-sided double-recording-layer structure is employed, an information reproduced signal from the other layer is disturbed by the adverse effect from the gap, thereby errors often occur in reproduction.

In the embodiment, since the occurrence of a gap in which no recorded mark exists is prevented by partly overlapping the guard areas, the adverse effect of an interlayer crosstalk from a recorded region in the single-sided double-recording-layer is prevented, thereby a stable reproduced signal can be obtained.

b) The overlapping portion 541 in rewriting is set such that it is recorded in the non-modulation region 590.

[Effect]

Since the overlapping portion 541 in rewriting is set such that it is located in the non-modulation region 590, the deterioration of the wobble reproduced signal due to the shape deterioration in the wobble sync region 580 or the wobble address region 586, which can guarantee that a stable wobble signal can be detected from the wobble address information 610.

The VFO region in the data segment starts after 24 wobbles from the leading end of the physical segment.

c) The expanded guard region 528 is formed at the end of the recording cluster showing a rewrite unit.

[Effect]

With formation of the expanded guard region 528 at the end of the recording cluster, the front recording cluster 540 and the rear overlapping portion 541 are set such that they inevitably overlap each other. No gap occurs between the recording cluster 540 on a front side the overlapping portion 541 on a rear side, a reproduced signal can be stably obtained from the recorded mark without being affected by the interlayer crosstalk in the rewritable or write-once type information recording medium having the single-sided double-recording-layers, thereby reliability can be secured in reproduction.

d) The expanded guard region 528 has a size of at least 15 data bytes.

[Effect]

Since no gap appears between the recording clusters 540, 541 even if the random shift is executed because of the reason shown in the expression (113), the reproduced signal can be stably obtained from the recorded mark without being affected by the interlayer crosstalk.

e) The expanded guard region 528 has a size of 24 bytes.

[Effect]

Since no gap appears between the recording clusters 541, 541 even if the wobble slip is taken into consideration because of the reason shown in the expression (114), the reproduced signal can be stably obtained from the recorded mark without being affected by an interlayer crosstalk.

f) An mount of the random shift is set to a range larger than $J_m/12$ ($0 \leq J_m \leq 154$).

[Effect]

g) Since the expression (109) is satisfied and the length of the physical range to the amount of the random shift is in coincidence with that of the DVD-RAM . disk, the number of repeated recording times of the current DVD-RAM disk can be guaranteed.

h) The buffer region has a size set to at least 15 data bytes.

[Effect]

The extra region 534 in FIG. 20 is not overwritten to the adjacent VFO region 522 even if the random shift is executed because of the reason shown in the expression (113), thereby the reliability of the data in the extra region 534 can be secured.

Point k) A recording cluster includes at least one data segment.

a) A recording cluster showing a unit of rewrite includes at least one data segment (FIGS. 34C and 35).

[Effect]

PC data (PC file), in which a small amount of data is rewritten many times, and AV data (AV file), in which a large amount of data is sequentially recorded at a time, can be easily recorded to the same information recording medium in a mixed state.

In personal computers, a relatively small amount of data is rewritten many times. Accordingly, a recording method suitable for PC data can be obtained by setting a unit of data to be rewritten or to be written once as small as possible.

In the embodiment, an ECC block is composed of 32 sectors as shown in FIG. 56.

Executing rewrite or write-once in a unit of data segments including only one ECC block is a minimum unit for effectively executing the rewrite or the write-once. Accordingly, the structure of the embodiment, in which at least one data segment is included in the recording cluster showing the unit of rewrite is a recording structure suitable for the PC data (PC file).

In audio video (AV) data, a large amount of image information and audio information must be sequentially recorded without being interrupted. In this case, the data to be recorded sequentially is recorded together in a single recording cluster.

When an amount of a random shift, a structure of a data segment, attributes of the data segment, and the like are changed for every data segment that constitutes a single recording cluster while the AV data is being recorded, a time is consumed in processing for changing them, which makes it difficult to sequentially record the AV data.

The embodiment can provide a recording format suitable to record the AV data, in which a large amount of data to be sequentially recorded is included, by constituting a recording cluster by sequentially arranging data segments having the same format (without changing attributes and an amount of a random shift and without inserting any specific information between the data segments) as shown in FIG. 35. In addition to the above, the embodiment simplifies a recording control circuit and a reproduction detection circuit by simplifying the structure of the recording cluster and reduces the cost of an information recording/reproducing apparatus or an information reproducing apparatus.

Further, although not shown, a data structure, in which the data segments 529, 530 are sequentially arranged in the recording cluster 540 (excluding the expanded guard region 528) shown in FIG. 34 has a structure precisely identical with that of the reproduction-only information recording medium. Although not shown, in the embodiment, the same structure is also employed in the write-once type information recording medium.

As described above, since all the information recording media, that is, the reproduction-only, write-once type, and rewritable type information recording media have a common data structure, compatibility can be secured among the media, a detection circuit of the information recording/reproducing apparatus and the information reproducing apparatus whose compatibility is secured can be interchangeably used, thereby high reliability for reproduction can be secured as well as a low cost can be realized.

b) Amounts of a random shift of all the data segments are in coincidence with each other in the same recording cluster.

[Effect]

In the embodiment, since the amounts of the random shift of all the data segments are in coincidence with each other in the same recording cluster, when information is reproduced across different data segments in the same recording cluster, synchronization (reset of a phase) is not necessary in the VFO region (reference numeral 532 of FIG. 34), thereby the reproduction detection circuit can be simplified and high reproduction detecting reliability can be secured when information is sequentially reproduced.

c) Timing of record is corrected by making an adjustment in a guard region between ECC blocks.

[Effect]

In the data structure shown in FIG. 34C, since the data in ECC blocks 410, 411 is data to be subjected to error correction, a lack of data is not fundamentally preferable even if it is only 1 bit.

In contrast, since the data in the buffer region 547 and the VFO region 532 is composed of the repetition of the same data, no problem arises even if the data partially lacks or overlaps as long as the portion where the repeated data discontinues is secured.

Accordingly, when it is detected that a recording position is shifted in sequential recording, it is adjusted in the guard region 461. Thus, even if the timing of record is corrected, the data in the ECC blocks 410 and 411 is not affected thereby, and information can be stably recorded and reproduced.

d) A recording cluster start position is recorded from a non-modulation region just after a wobble sync region.

[Effect]

Since recording starts just after the wobble sync region 580, which can be detected most easily, is detected, a recording start position has a high accuracy, and recording processing can be executed stably.

e) Recording is started from a position shifted at least 24 wobbles from a physical segment change position.

[Effect]

Since a time for detecting the wobble sync region 580 and a time for preparing recording processing can be appropriately secured, it can be guaranteed to stably execute the recording processing.

[B-5] Explanation of track information recording and reproducing method

Point G) Indefinite bits are arranged also in a groove region in a dispersed state.
Point H) Indefinite bits are arranged in lands and grooves in a dispersed state
Some examples of a wobble modulation method and a wobble reproduction method of the groove track information region 606 and the land track information 607 shown in FIG. 19E will be explained.
When a groove is subjected to wobble modulation with its width kept constant and address information is buried therein, a region, in which a track width changes, occurs in a part of a land section, and the address data of the region is made to Indefinite bits (the level of a wobble signal is lowered, and although it is possible to detect data making use of the position at which the level is lowered, there is a possibility that reliability is deteriorated when a large amount of noise exists). Wobble modulation processing can be executed making use of the above phenomenon inversely in order to create a state as if a date was recorded in a land track.

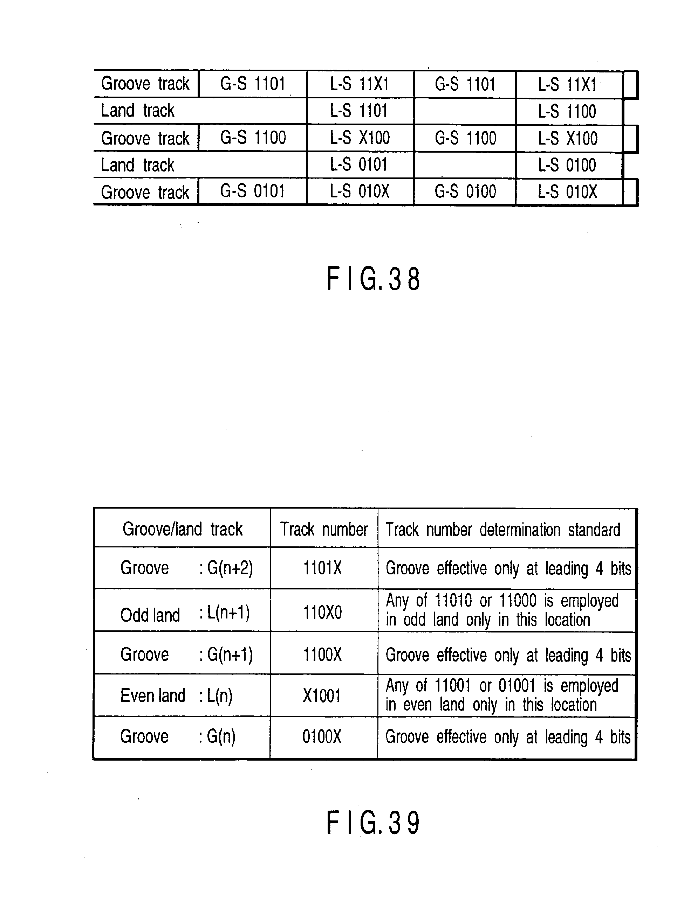

FIG. 37 shows a relation among a groove n+1, a land n+1, and a groove n+2. Address data is written as (.. 100X2..) in the wobble modulation of the track of the a groove n+1. In a portion X1, however, the groove is formed in amplitude modulation in which a groove width changes because a land n is set to "1" and a land n+1 is set to "0". Likewise, in a region X2 in the groove n+2, a groove is formed by the amplitude modulation because the land n+1 is set to "0", and a land n+2 is set to "1". When the system as described above, in which the groove width is partly changed, is employed, even if a land track that faces a groove track has different address data, wobble modulation can be executed to correctly detect required land data.
In the embodiment shown in FIG. 19E, the address data of the lands and the grooves is arranged in the regions of the groove track information 606 and the land track information 607 whose positions are previously determined. That is:

in the region of the groove track information 606, the track address information on the groove side is recorded by the wobble modulation using the gray code shown in FIG. 17 by causing groove widths to be in coincidence with each other everywhere therethrough (Indefinite bits are arranged on the land side by locally changing the width on the land side); and

in the region of the land track information 607, the track address information on the land side is recorded by the wobble modulation using the gray code shown in FIG. 17 by causing land widths to be in coincidence with each other everywhere therethrough (Indefinite bits are arranged on the groove side by locally changing the width on the groove side).

With the above arrangement:

when a groove is being traced, the groove track information 606 whose track number is fixed is reproduced;
it is possible to predict and determine a track number of the land track information 607 making use of an odd/even determination technology of a track number which will be described later;
further, when a land is being traced, the land track information 607 whose track number is fixed is reproduced; and
it is possible to predict and determine a track number of the groove track information 606 making use of the odd/even determination technology of a track number which will be described later.

As described above, it is also possible to previously set a section, in which the track address information of the groove is fixed without including any indefinite bit in the groove region, and a section, in which although Indefinite bits are included in the groove region, the track address of the groove can be predicted and determined using the method described later in the groove region.

In this case, a section, in which the track address information of the land is fixed without including any indefinite bit in the land region, and a section, in which although Indefinite bits are included in the land region, the track address of the land can be predicted and determined using the method described later, are previously set in the same track at the same time.

FIG. 38 shows another example in which a land address is formed by changing a groove width.

This method has a feature in that a position of track information can be easily detected by arranging a G synchronization signal (G-S), which identifies a position of a groove track address, at the leading positions of the groove track information and the land track information in comparison with the address setting method shown in FIG. 19E.

In this case, when different land address data faces each other, it is recorded by changing a groove width as if it was recorded by the wobble modulation of a land track.

It is possible to obtain a correct detection signal in the detection of address information when the land track is recorded and reproduced.

Although the groove track address data and the land track address data are separately arranged in FIG. 38, it is also possible to form the address data of the land and the groove by the same groove wobble modulation using the above technology for changing a groove width.

FIG. 39 is a view showing an example of it. It is possible to mean the land address data and the groove address data by the same groove wobble by identifying whether a land is odd or even as described above.

Groove width modulation can be used to the odd/even identification.

That is, this is a system for arranging data "0" to an odd land and data "1" to an even land at the bit next to a track number in FIG. 39, respectively. Since the track number of the groove track is fixed, even if a redundant bit is added after the track number, it can be ignored even if detected.

Whether the land track is an odd land or an even land can be determined depending on whether a bit is "0" or "1" after the track number is detected.

In the land/track, since the track number is fixed by a data train including the odd/even track identification data in consequence, groove/land address data can be detected even if there is no special odd/even track identification mark.

Further, since a track width change region, which is generated only in the land track by the gray code, is also generated in the groove track, a groove/land detection system is arranged by the same method, by which a system balance is optimized.

A method of arranging the Indefinite bits in a dispersed state includes:

a) a method of locally changing an amount of laser light irradiated onto a photo resist coated on the surface of an original disk having grooves when the disk is manufactured;
b) a method of forming two beam spots to expose a photo resist coated on the surface of an original disk having grooves when the disk is manufactured and changing an amount of relative movement between the two spots; and
c) a method of changing a wobble amplitude width in the groove region 502 as shown in FIG. 40.

Since a wall surface is formed straight in an indefinite bit region 710 in the groove region 502, no wobble detection signal is obtained therein. However, since another wall is wobbled at the ε and η positions of the land regions 503 and 507 adjacent to the indefinite bit region 710, the wobble detection signal can be obtained. Since the groove width is less fluctuated in the indefinite bit region 710 in the method c) than in the methods a) and b), a level of the signal reproduced from the recorded mark recorded thereon is less fluctuated, from which an effect can be obtained in that deterioration of an error rate of rewritable information can be suppressed.

A structure, which is exactly the same as that shown in FIGS. 19E or 38, can be employed as a formatting method when the above method is used.

Although the embodiment for providing the groove with the Indefinite bits has been explained above, there is also a method of reading the track information on the land using a sequence in which the track information is arranged without providing the groove with any indefinite bit as another embodiment of the present invention.

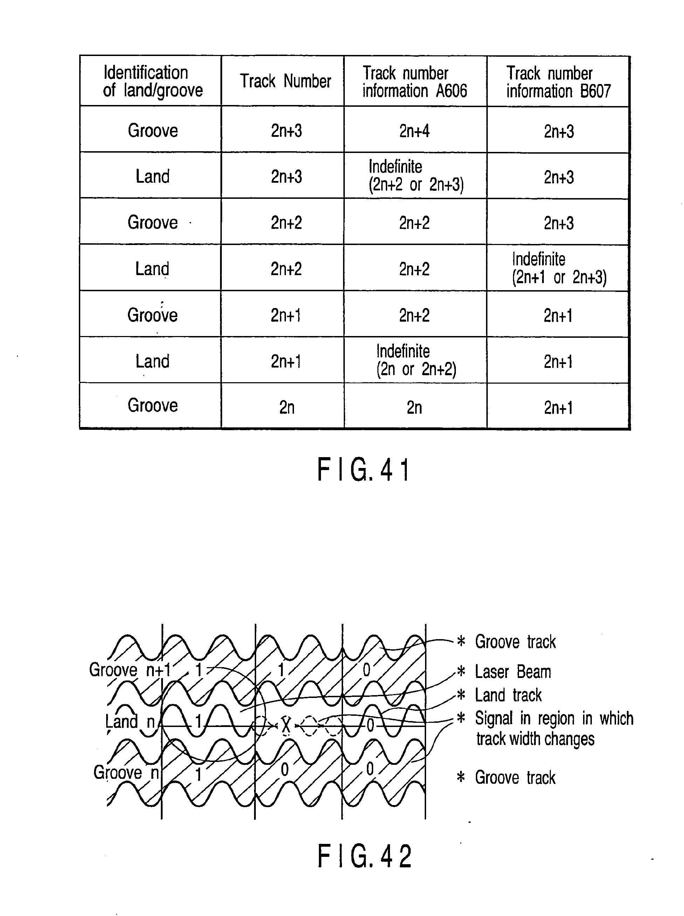

The groove track information 606 in FIG. 19E is called track number information A606 in FIG. 41, and the land track information 607 in FIG. 19E is called track number information B607 in FIG. 41. The special track code shown in FIG. 18 is employed in any of the track number information A606 and B607.

The embodiment shown in FIG. 41 is characterized in that track numbers are set zigzag to track number information A611 and B612 in groove regions. In a location in which the same track number is set in adjacent groove regions, the same track number is set also in land regions, thereby the track information can be read on lands without any indefinite bit.

In a location in which a different track number is set in adjacent groove regions, although the track number is not fixed, it can be predicted and determined by the following method.

When a feature in a linkage of information shown in FIG. 41 is extracted:

1) on the grooves, smaller values of A and B are in coincidence with the track number;
2) on the lands, a track number A is fixed on even tracks, and a track number B is fixed on odd tracks;
3) on the lands, the track number B is not fixed on the even tracks, and the track number A is not fixed on the odd tracks (however, the track number can be predicted and determined by the method which will be described below).

Further, according to the special track code of the embodiment shown in FIG. 18:

4) it can be exemplified on the groves that all the patterns of low order bits except the most significant bit are in coincidence with each other in the locations in which a value converted by the special track code corresponds to the even tracks and that the lower bits are also changed in the locations of the odd tracks.

Further, another example of the track information setting method will be shown. This method is devised from a gray code setting method and can detect an address even if Indefinite bits exist.

Conventionally, an addressing system in a land/groove recorded groove is formed by embossed prepits as in DVD-RAM disks, and there is contemplated a method of burying address information making use of the wobbling of a groove track. However, a large problem resides in the formation of a land track address.

As an idea, groove wobbling for groove and groove wobbling for land are separately provided, and adjacent grooves are wobbled across a land. However, a land address is realized by employing an arrangement as if a land was wobbled.

In the above method, however, a track address region at least twice as large as a conventional one is necessary, and it is wasteful. Thus, when a set of address information can be used as groove address information and as land address information, an effective arrangement can be achieved. As means for realizing the arrangement, there is a method of using the gray code as track address data.

FIG. 42 shows a relation between a format of a track when a groove wobble is subjected to phase conversion by track address data and a wobble detection signal in a land.

When a wobble signal of address data in a land n, which is sandwiched between the address data "..100.." of a groove n and the address data "..110.. of a groove n+1 is detected, the wobble signal is "..1×0..". The portion x is a region sandwiched between "0" of the groove n and "1" of the groove n+1, and the wobble detection signal is an amplitude zero signal in a center level. In an actual system, although the level of the wobble detection signal is lower than the signal in other regions due to an amount of off-track and unbalance of a detector, and the like, there is a large possibility that a data "1" side signal on or a data "0" side signal is detected. It is also contemplated to detect a land address signal making use of that a detected level is lowered in a land region sandwiched between different groove address data as described above and referring to the position of the address data of the land region. Although this method is useful when the wobble detection signal has a high C/N, there is a possibility that the method is not reliable when a large amount of noise is generated, and the like.

To cope with the above problem, there has been desired a method of fixing correct land address data even if land wobble detection data is indefinite (may be determined as "0" or as "1") when different groove wobble data confronts each other as a method of reading address data from wobble detection data in a land.

In response to the above need, there is proposed a system which employs a structure capable of easily determining an odd land and an even land by employing a system of subjecting a groove track address to wobble modulation by the gray code and adding a special identification code to a land track by adding a special mark to it or subjecting it to wobble modification.

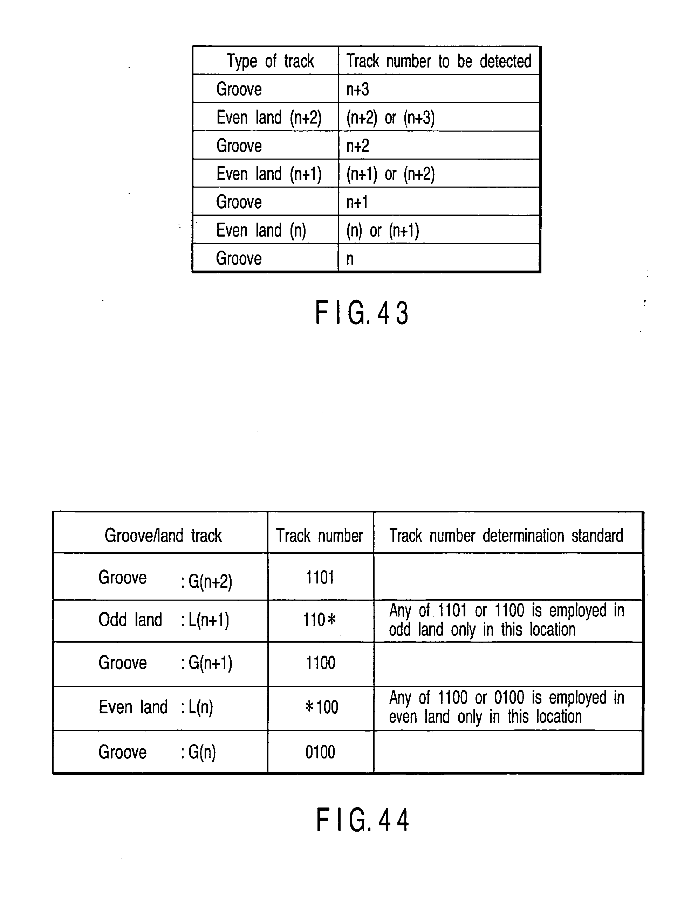

When it is possible to determine whether a land track is odd or even, the land address data can be easily fixed from the property of the gray code. This will be testified with reference to FIG. 43.

As shown in FIG. 17, the gray code is such that a code of one step differs by only one bit.

When a groove track is addressed using the gray code, the wobble of a land composed of respective groove wobbles is detected as a code having only one. indefinite bit as shown in FIG. 42.

That is, when address data as shown in FIG. 43 is arranged in a groove track, the wobble detection signal of a land track, which confronts the groove track, is detected as a signal only one bit of which is an indefinite bit of "0" or "1" and the other bits of which have the same values as those of an adjacent groove wobble signal.

In FIG. 43, (n) or (n+1) is detected as a wobble detection signal in an even land n. Likewise, (n+1) or (n+2) is detected in an odd land n+1.

Supposing whether a land track is an odd land or an even land is previously identified, when (n+1) is detected at the time the odd land is an odd land n+1, the data of (n+1) is an address value of the land track, and when (n+2) is detected, (detected value -1) is the address value of the land track.

Likewise, when (n) is detected in an even land n, the value is the address value of the land track, and when (n+1) is detected, (detected value -1) is the address value of the land track. In the above description, n denotes an even number.

As described above, when it is determined whether the land track is the odd track or the even track, even if the wobble detection value of the land track includes an indefinite bit, a correct address value can be simply fixed. The wobble detection signal is used as it is as the track address of the groove track.

FIG. 44 illustrates a specific content of detection when a track address is composed of 4-bit gray code. When a groove track G(n) has gray code address data "0110" and a groove track G(n+1) has gray code address data "1100", a wobble signal of "1100" or "0100" is detected as a wobble signal from an even land L(n). According to the concept explained in FIG. 43, however, "0100" is fixed as a correct address value because the land L(n) is an even land.

However, when it is first identified whether the land track is an odd land or an even land, it is also contemplated that the land track has two address values even if the detected value explained in FIG. 43 is corrected by "0" or "1".

Even if any of "1100" and "0100" is detected in the even land L(n) in FIG. 44, this code does not exist in the other even lands. Accordingly, it is possible to fix the address data by the detected value.

[C] Explanation of wobble format in the embodiment of write-once type information recording medium

The write-once type information recording medium of the embodiment has the same physical and data segment structures as those shown in FIG. 19 (53).

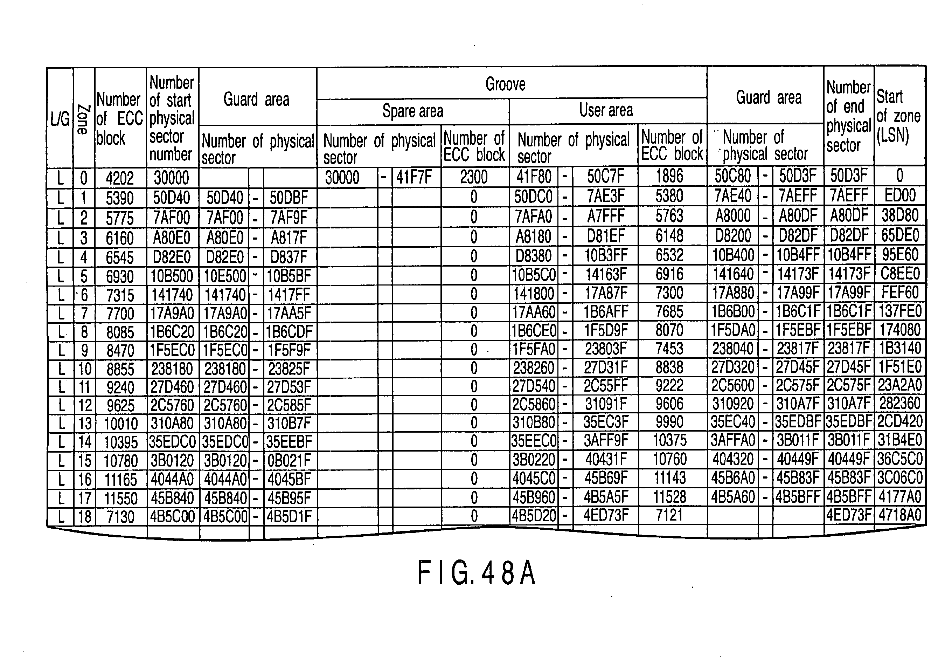

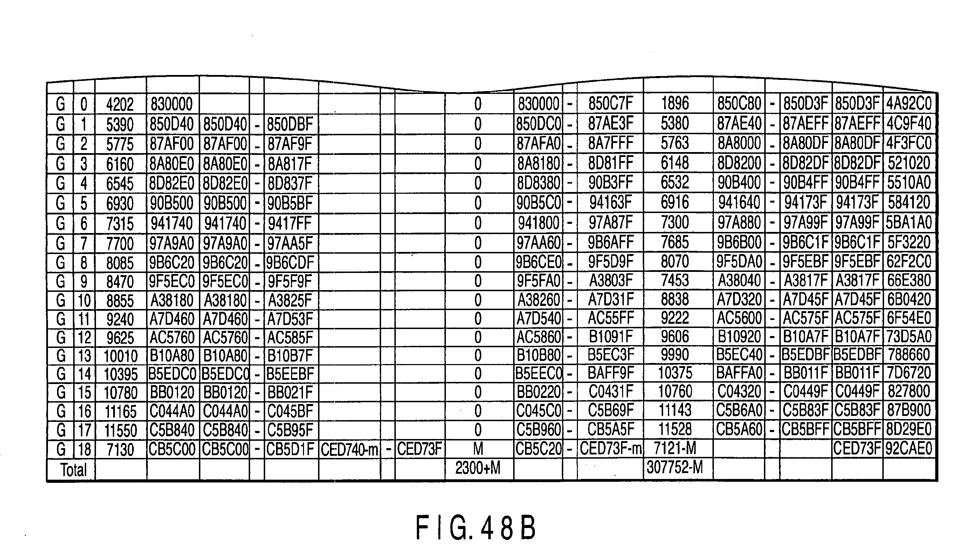

The write-once type information reproducing apparatus of the embodiment is characterized in that it does not employ a zone structure but employs a constant linear velocity (CLV) structure similar to that of the reproduction-only information recording medium of the embodiment, although the rewritable type information recording medium of the embodiment employs a zone structure as shown in FIG. 14 (FIGS. 48A and 48B).

[D] Explanation of data arrangement structure of information recording medium in its entirety

[D-1] Explanation of data arrangement structure of information recording medium in its entirety that is common to respective types of information recording media

Point J) Signal reproduction processing using PRML method

In the embodiment, a common structure, which is common to the reproduction-only/write-once type/rewritable type information recording media, is employed to the overall structure of the information recording medium in the following sections to place greater emphasis on the compatibility between the information recording media of the above types.

a) A common lead-in area, a detecting region, and a data lead-out area are commonly provided.
b) The lead-in area is commonly divided into a system lead-in area and a data lead-in area across a connection area.
(c) Any of the reproduction-only type, write-once type, and rewritable type information recording media permits a structure of a single layer (single light reflection layer or a single recording layer) and a structure of two layers (two light reflection layers or two recording layers exist so that information can be reproduced from one side).
(d) The information recording media have the same overall thickness, the same inside diameter, and the same outside diameter in the entirety thereof.

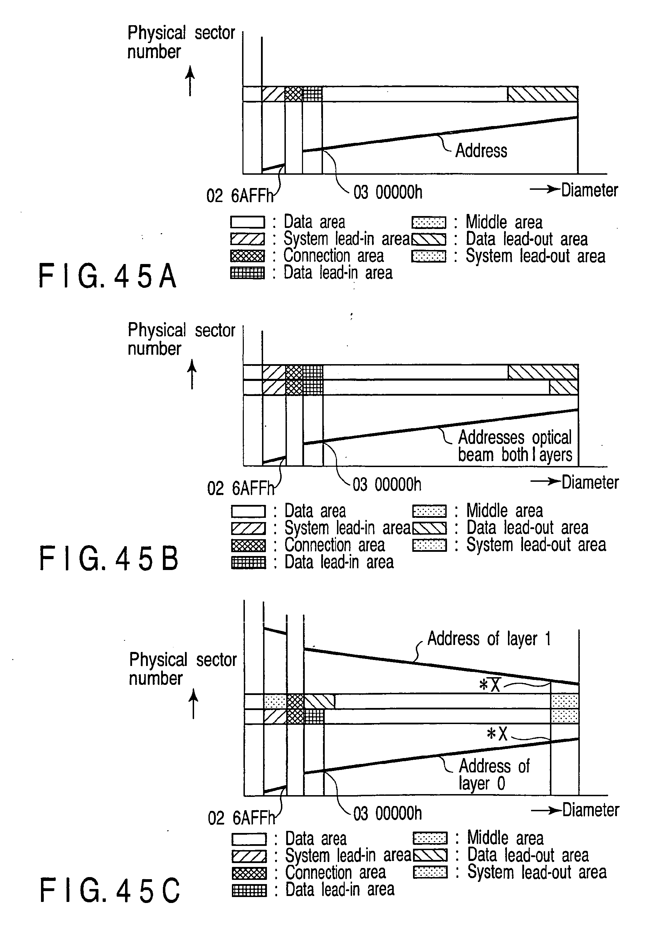

As shown in FIGS. 45A to 45C, the system lead-in area is formed only in two layers (opposite track paths) dedicated only for reproduction.

The items a) and d) of the above four items have features which are also provided with current DVD likewise.

As this embodiment, the feature of the item (b) will be particularly explained.

The information area in a disk is divided into the following five sections according to the modes of the disk:

system lead-in area;
connection area;
data lead-in area;
data area; and
data lead-out area.

The information area has a track composed of an embossed pit train.

The track in the system lead-in area is a spiral that makes a round of 360°.

The track of each of the data lead-in area, the data area, and the data lead-out area is a continuous spiral that makes a round of 360°. The center of the track coincides with the center of a pit.

In current DVD disks, any of reproduction-only type, write-once type, and rewritable type information recording media also has the lead-in area.

Further, a pit region, which is called an embossed lead-in area and is formed in a fine concavo-convex shape, exists in the rewritable type information recording media (DVD-RAM disk and DVD-RW disk) and the write-once type information recording medium (DVD-R disk) in the current DVD disks.

In any of the rewritable type information recording medium and the write-once type information recording medium, a pit depth in the pit region coincides with a depth of a pregroove (continuous groove) in the data region.

In the current DVD-ROM disk that is the reproduction-only type information recording medium in the current DVD disks, it is said that an optimum depth of the pit is $\lambda/(4n)$, where $\lambda$ shows a wavelength in use and n shows a refraction factor of a substrate.

In the current DVD-RAM disk that is the rewritable type information recording medium in the current DVD disks, it is said that an optimum depth of the pregroove is $\lambda/(5n)$ to $\lambda/(6n)$ as a condition for minimizing a crosstalk (amount of leakage to a reproduced signal) from a recording mark of an adjacent track in the data region. Accordingly, in the current DVD-RAM disks, a depth of a pit in the embossed lead-in area is also set to $\lambda/(5n)$ to $\lambda/(6n)$ in conformity with the above depth.

A reproduced signal having a sufficiently large amplitude can be obtained from the pit having the depth of $\lambda/(4n)$ or $\lambda/(5n)$ to $\lambda/(6n)$ (because the depth is sufficiently deep).

In the currently used DVD-R disks, since a groove in a data region is very shallow, a reproduced signal having a large amplitude cannot be obtained from a pit, which has the same depth, in an embossed lead-in area, thereby a signal is reproduced unstably. In contrast, to guarantee a stable reproduced signal from the lead-in area of the write-once type information recording medium while securing compatibility of a format to any of the reproduction-only type, write-once type, and rewritable type information recording media, this embodiment is characterized in that the system lead-in area is provided and that a track pitch and a shortest pit pitch in the system lead-in area are made greatly larger than a track pitch and a shortest pit pitch (shortest mark pitch) in the data lead-in area and the data area.

In the current DVD disks, a reproduced signal is detected using a level slice method (binalization processing to an analog reproduced signal). In the current DVD disk, a shortest pit pitch of a pit, which is formed in a fine concavo-convex shape, or a shortest mark pitch of a recording mark, which is formed by the optical variation of the characteristics of a recording film, is near to a cut-off frequency in the OTF (optical transfer function) characteristic of an objective lens used in a reproducing optical head (FIG. 49). Therefore, an amplitude of a reproduced signal is greatly reduced due to the shortest pit pitch and the shortest mark pitch.

Further, when the shortest pit pitch and the shortest mark pitch are reduced, it is impossible to detect a reproduced signal by the level slice system. Further, the shortest pit pitch of the current write-once type information recording media (current DVD-R disks) is reduced because of the reason described above, a problem arises in that a stable reproduced signal cannot be obtained from the lead-in area.

To solve the above conflicting problem, the embodiment employs the following countermeasures:

a) the lead-in area is separated into a system lead-in area and a data lead-in area, and the track pitch and the shortest pit pitch of them are changed;

b) in the system lead-in area, an amount of drop of the amplitude of a reproduced signal reproduced from the shortest pit pitch is reduced with respect to the amplitude of a reproduced signal reproduced from a most loose pit pitch by greatly widening the track pitch and the shortest pit pitch, thereby a signal can be easily reproduced from the shortest pitch so that a signal can be reproduced from the system lead-in area in a write-once type information recording medium having a shallow pit depth;

c) a recording density of the data lead-in area, the data area, and the data lead-out area is increased by narrowing the shortest pit pitch and the shortest mark pitch in order to increase a storage capacity of the information recording medium itself, and a partial response maximum likelihood (PRML) method is employed in place of the current level slice method which is difficult to detect a reproduced signal (binalization from an analog signal); and

d) a modulation system, which is suitable to improve the recording density by reducing the shortest pit pitch and the shortest mark pitch, is employed.

That is, the four devices are combined to employ a modulation rule of d = 1 in place of d = 2 which is employed in the current DVD disks as the value of a minimum number in which "0" continues after modulation (a value of d under the restriction of (d and k) after modulation).

The partial response and maximum likelihood (PRML) method of the embodiment will be described.

The method is processing for detecting a binary signal from a high frequency signal. Typically, this processing is executed using an equalizer and a Viterbi decoder. The equalizer controls the inter-symbol interface of the high frequency signal and fits the high frequency signal to a partial response channel.

In the partial response channel, an impulse response shows many sample points, which means that the sample points are linear and invariable in time. For example, a transfer function H(z) of a PR (1, 2, 2, 2, 1) channel is as shown below.

$$H(z) = z^{-1} + 2z^{-2} + 2z^{-3} + 2z^{-4} + z^{-5}$$

The Viterbi decoder detects binary data using a known correlation of the high frequency signal.

Point J) Signal reproduction processing using PRML method

A reference code is used for an automatic circuit adjustment in a reproduction circuit (not shown) (in particular, used to set respective tap coefficient values and used in AGC). That is, the automatic circuit adjustment is executed while reproducing the reference code beforehand to stably reproduce information recorded in a data region and to stably detect a signal. Accordingly, an automatic adjustment accuracy of the reproduction circuit can be improved by causing the track pitch and the shortest pit length in the reference code to coincide with the value in the data region by arranging the reference code in the data lead-in area.

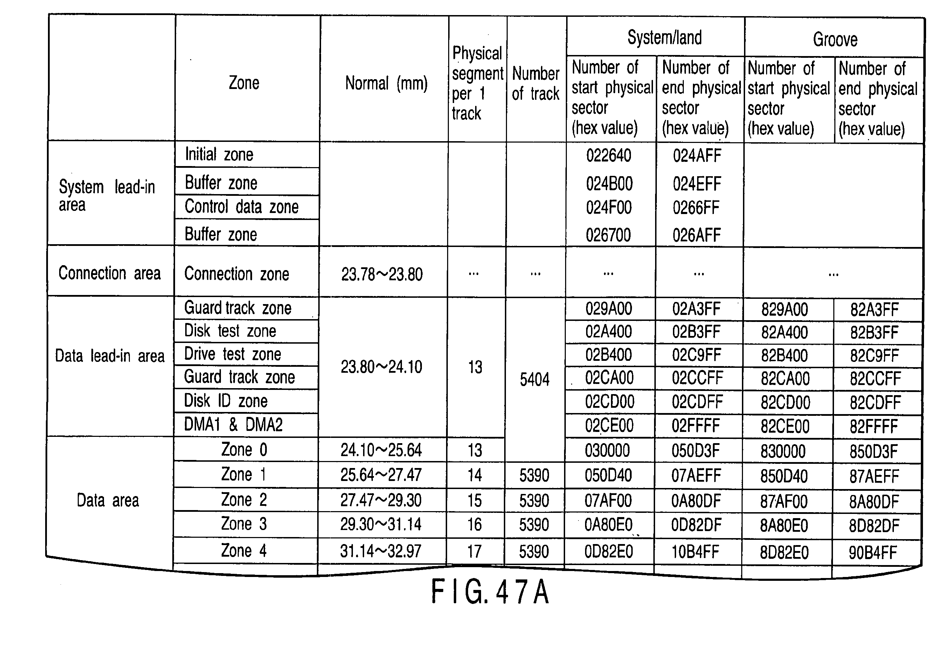

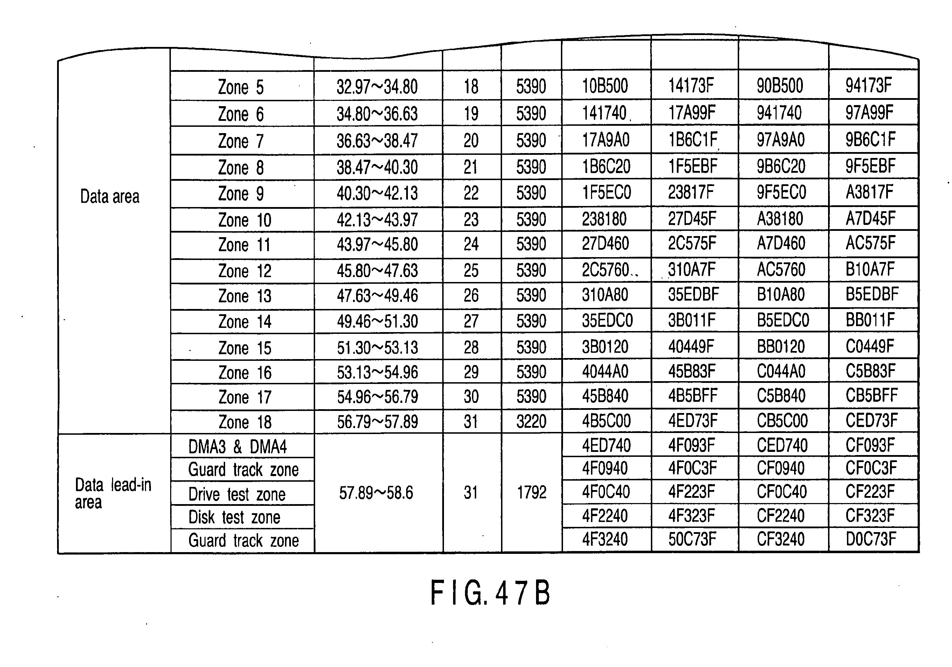

In the recording type information recording medium, a connection zone (connection area) is interposed between the data lead-in area and the system lead-in area (FIGS. 47A and 47B).

[Effect]

In the recording type information recording medium of the embodiment, the connection zone is interposed between the system lead-in area recorded by the embossed pits and the data lead-in area recorded by the write-once or rewritable recording marks, so that the system lead-in area and the data lead-in area are arranged with a distance therebetween.

The recording type information recording medium of the embodiment has two recording layers that can record and reproduce information only from one side. A phenomenon called an interlayer crosstalk occurs when a laser beam reflected by one of recording layers enters a photo detector while information is reproduced from the other recording layer, and the characteristics of a reproduced signal are deteriorated by the interlayer crosstalk. In particular, the amount of laser light reflected by the above recording layer greatly differs according to whether it is irradiated to the system lead-in area or to the data lead-in area.

Accordingly, when the laser beam reflected by the above recording layers alternately enters the system lead-in area and the data lead-in area due to a difference of amounts of relative decentering between the two recording layers while the laser beam traces a round of the recording layer in charge of reproduction, an effect of the interlayer crosstalk is increased.

To overcome this problem, this embodiment interposes the connection zone between the system lead-in area recorded by the embossed pits and the data lead-in area recorded by the write-once or rewritable recording marks, thereby the system lead-in area is spaced apart from the data lead-in area so that the effect of the interlayer crosstalk is reduced and a reproduced signal can be stably obtained.

FIG. 45 shows a data structure of a reproduction-only type information recording medium having a two-layer structure and a sector number adding method.

Each data segment includes 32 physical sectors. The physical sector number of both the layers of a single-layer disk and a PTP mode two-layer disk continuously increases in the system lead-in area and continuously increases from the beginning of the data lead-in area to the end of the data lead-out area in the respective layers. On an OTP mode two-layer disk, the physical sector number of a layer 0 continuously increases in the system lead-in area and continuously increases from the beginning of the data lead-in area to the end of a middle area in the respective layers. However, the physical sector number of a layer 1 has a value obtained by inverting the bit of the physical sector number of the layer 0, continuously increases from the beginning (outside) of the middle area to the end of the data lead-out area (inside), and continuously increases from the outside of a system lead-out area to the inside thereof. A first physical sector number of the data area of the layer 1 has a value obtained by inverting the bit of the final physical sector number of the data area of the layer 0. A bit-inverted numeral is calculated such that its bit value is set to 0, and vice-versa.

On the two-layer disk of a parallel track path, the physical sectors on the respective layers having the same sector number are located at approximately the same distance from the center of the disk. On the two-layer disk of an opposite track path, the physical sectors on the respective layers having bit-inverted sector numbers are located at approximately the same distance from the center of the disk.

The physical sector number of the system lead-in area is calculated such that the sector number of a sector located at the end of the system lead-in area is set to 158463 "02 6AFFh".

The physical sector numbers other than those of the system lead-in area are calculated such that the sector number of a sector located at the beginning of the data area after the data lead-in area is set to 196608 "03 0000h" (refer to FIG. 45).

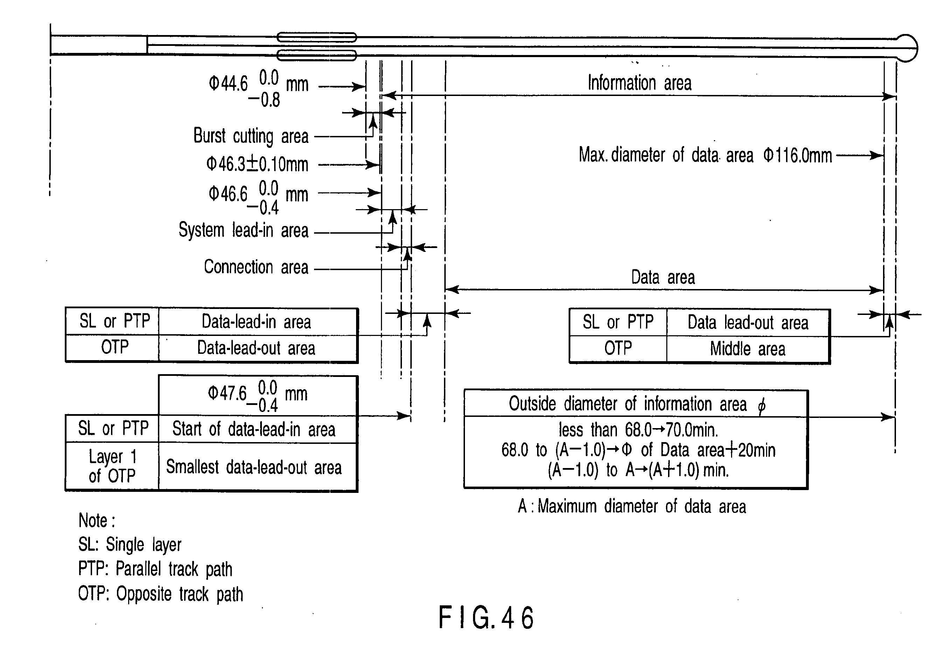

FIG. 46 shows the dimensions of the respective areas in the reproduction-only information recording medium corresponding comparison.

FIGS. 47A and 47B show a data layout of the rewriting type information recording medium of the embodiment.

The embodiment has such a structure that the data area is divided into 19 zones, and the physical sector numbers including those of the data lead-in area are continuously set to sequential numbers in a land section over the entire surface of a disk and set to sequential numbers in a groove section over the entire surface of the disk. In the physical sector numbers, a number jumps at an interface from the land section to the groove section.

FIGS. 48A and 48B shows an address number setting method in the data area of the rewritable type information recording medium of the embodiment.

Logic sector numbers (LSN) are also added with an address from the land section side. However, the logic sector number setting method has a feature different from the physical sector number setting method shown in FIGS. 47A and 47B in that the logic sector numbers have continuity at an interface from the land section to the groove section.

FIG. 49 shows a structure of an optical head used in the information reproducing apparatus and the information recording/reproducing apparatus of the embodiment. The optical head 100 uses a polarizing beam splitter 121 and a 1/4 wavelength plate ($\lambda$/4 plate) 123, each arranged between a collimate lens 113 and an objective lens 115, and uses a a convex lens 125 and a four-divided photo detector 127 to detect a signal. The laser beam emitted from laser element 111 is reflect by one of the layer of disk 1 and detects the photo detector 127. The output of output from the detector 127 are used the RF signal, the focus error signal and the tracking error signal through the RF amp 131 and servo amp 133.

FIG. 50 shows an overall structure of the information reproducing apparatus and the information recording/reproducing apparatus of the embodiment shown in FIG. 49.

The optical head shown in FIG. 49 is arranged in an information recording/reproducing unit 141 shown in FIG. 50.

In the embodiment, channel bit intervals are shortened near to the utmost limit to increase the density of an information recording medium.

As a result, for example, the following pattern, that is, a repetition of d = 1 is recorded to the information recording medium.

"1010101010101010101010"

When the data is reproduced in the information recording/reproducing unit 141, since it is near to the shut-off frequency of the MTF characteristics of a reproduction optical system, the signal amplitude of a reproduced signal is almost buried in noise.

Accordingly, as a method of reproducing recorded marks or pits whose density is increased near to the limit (shut-off frequency) of the MTF characteristics, the embodiment employs the partial response maximum likelihood (RPML) technology.

That is, a signal reproduced from the information recording/reproducing unit 141 is subjected to reproduced waveform correction by the PR equalization circuit 130.

The signal, which has passed through the PR equalization circuit 130, is sampled by an A/D converter 169 in response to the timing of a reference clock 198 supplied from a reference clock generation circuit 160, converted into a digital amount, and subjected to Viterbi decode processing in a Viterbi decoder 156.

The data, which has been subjected to the Viterbi decode processing, is processed as data that is precisely identical with data binalized at a conventional slice level.

When timing of the sampling executed by the A/D converter 169 is shifted at the time when the PRML technology is employed, an error rate of the data, which has been subjected to the Viterbi decoding, increases.

Accordingly, to improve the accuracy of timing in the sampling, the information reproducing apparatus and the information recording/reproducing apparatus of the embodiment is particularly provided with a sampling timing extraction circuit prepared separately (combination of a schmitt trigger binarization circuit 155 and a PLL circuit 174).

The information reproducing apparatus and the information recording/reproducing apparatus of the embodiment are characterized in that they use the schmitt trigger circuit as a binalization circuit. The schmitt trigger circuit has such characteristics that a slice reference level for executing binalization is provided with a specific width (actually, a forward voltage value of a diode) and binalization is executed only when the specific width is exceeded.

Accordingly, when the following pattern is input as described above, the signal of the pattern is not binalized because its amplitude is very small.

"1010101010101010101010"

In contrast, when, for example, the following pattern, and the like, which are more loose than the above pattern are input, since a reproduced signal has a very large amplitude, the polarity of a binary signal is switched by the schmitt trigger binalization circuit 155 in response to timing of "1".

"1001001001001001001001" .

Since the embodiment employs the non return to zero invert (NRZI) method, the position "1" of the above pattern is in coincidence with the edge (interface) of a recorded mark or a pit.

The PLL circuit 174 detects a frequency shift and a phase shift between the binary signal, which is the output from the schmitt trigger binarization circuit 155, and the reference clock signal 198, which is sent from the reference clock generation circuit 160 and changes the frequency and the phase of the output clock from the PLL circuit 174.

The reference clock generation circuit 160 feeds back (the frequency and the phase) of the reference clock 198 using the output signal from the PLL circuit 174 and the decoding characteristic information (although no shown specifically, information of converging length (distance to convergence)) of a path metric memory in the Viterbi decoder 156) so that an error rate is lowered after the Viterbi decoding is executed.

In FIG. 50, any of an ECC encoding circuit 161, an ECC decoding circuit 162, a scramble circuit 157, and a descramble circuit 159 executes processing in a unit of byte.

When 1 byte data before modulation is modulated according to (d, k; m, n) modulation rule (in the method described above, this means RLL (d, k) of m/n modulation), its length after modulation is as shown below.

$$8n/m \tag{201}$$

Accordingly, when the data processing unit in the above circuit is converted in terms of a processing unit after modulation, a processing unit of sync frame data 106 after modulation is given by the expression (201). Therefore, when it is intended to integrate the processings between a sync code 110 and the sync frame data 106 after modulation, the data size (channel bit size) of the sync code must be set to an integral multiple of the value shown in the expression (201).

Thus, the embodiment is characterized in that the size of the sync code 110 is set as shown below to thereby secure the integration of the processings between the sync code 110 and the sync frame data 106 after modulation:

$$8Nn/m \tag{202}$$

wherein N means an integral multiple.

Since the embodiment has been explained up to now by setting d, k, and m to d = 1, k = 10, m = 8, and n = 12, when these values are substituted for the expression (202), a total data size of the sync code 110 is set as shown below.

$$12N \tag{203}$$

As described above, the present invention is an information recording medium 1 including a first recording layer (L0 layer) to which information can be recorded, and a second recording layer (L1 layer) to which information, which is different from the information recorded on the first recording layer, can be recorded by a light beam that has passed through the first recording layer, wherein the information recording medium 1 is characterized by including premarks (3) acting as recorded marks recorded previously across at least two tracks arranged to the first and second recording layers respectively.

Further, the present invention is an information recording medium (1) characterized by including: at least one recording layer (L0, L1) capable of recording information by a spot light formed by converging a light beam; a guide groove (2) formed in the recording layer in a spiral shape for guiding the spot light to a predetermined position of the recording layer; transparent layers (5, 6) which are formed on at least any one of a side of the recording layer to which the spot light is irradiated and on a side opposite the side to which the spot light is irradiated and through which the spot light can passes; and premarks (3) formed at arbitrary positions at which the guide grooves are located adjacent to each other in a radial direction in a size not smaller than at least two guide grooves for setting, when a reproduction spot light is irradiated thereto, a level of a reflected light beam, which is changed according to the presence or absence of recorded information (8) at the position to which the reproduction spot light is irradiated within a predetermined range.

Moreover, the present invention is an information recording method characterized by including irradiating a first spot light for initializing recording layers and a second spot light (33) for forming premarks (3) that set a level of a reflected light beam, which is changed according to the presence or absence of recorded information (8) at a position of a reproducing spot light (17) when it is reflected by a recording layer, within a predetermined range to a recording medium (1) having at least two recording layers (L0 layer, L1 layer).

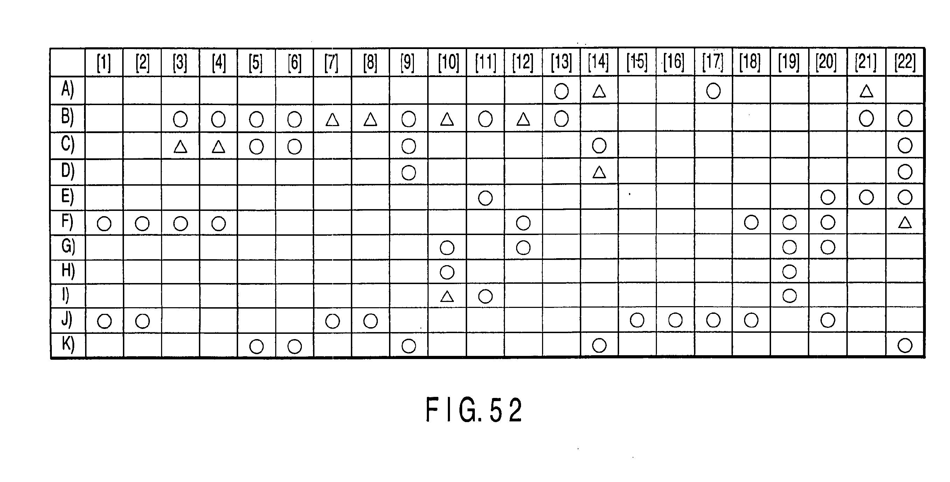

FIG. 55 shows effects [1] to [22] resulting from the above points A) to K). In FIG. 52, the points whose contents mainly exhibit unique effects are shown by O, and the points, which are subordinate, although they are related to the unique effects, and are not always essential, are shown by Δ.

The respective effects are specifically shown below.

Effect [1] «Large capacity is guaranteed in conformity with high quality image (in addition to it, reliability of access to high quality image is improved) »

In comparison with a known SD (super density) image, when a high density (HD) image is recorded on an information recording medium by file or holder separation, it is essential to increase the recording capacity of the information recording medium because the HD image has high resolution. That is, the recording capacity can be more increased by recording using the land and the groove than recording using the groove. Further, since recorded marks cannot be formed on a prepit address, recording of address information by wobble modulation has a higher recording efficiency than the prepit address. Accordingly, the recording capacity can be most increased by employing recording using the land and the groove and the wobble modulation. In this case, since a track pitch is made dense, reliability of access must be increased by further enhancing an address detection capability.

In the embodiment, to cope with occurrence of Indefinite bits which is a problem when both the land/groove recording and the wobble modulation are employed simultaneously, it is possible to greatly improve an address detection accuracy by lowering a frequency of occurrence of the Indefinite bits by employing the gray code or the special track code. Since the erroneous detection of a sync code can be automatically corrected by devising a combination of sync codes, a position detecting accuracy in a sector using the sync code is greatly improved. As a result, reliability and a high speed property for an access control can be improved.

When a track pitch is narrowed by the land/groove recording, an amount of a noise component mixed from recorded marks to a reproduced signal is increased by the crosstalk of an adjacent track and by the above Indefinite bits, thereby reliability for detection of a reproduced signal is deteriorated. In contrast, when the PRML method is employed in reproduction, since the method is provided with a function for correcting an error of a reproduced signal in ML decoding, the reliability for detection of a reproduced signal can be improved, and thus, even if a recording density is increased to increase the recording capacity, it is guaranteed that a signal can be stably detected.

Effect [2] «Large capacity is guaranteed in conformity with high quality image (in addition, reliability of access to high quality image is improved) »

It is necessary to improve, the quality of an auxiliary image in conformity with the improved quality of an image to be recorded to the information recording medium. However, when the auxiliary image is expressed by 4 bits in place of conventional 2 bits, an amount of data to be recorded is increased. To cope with this problem, the capacity of the information recording medium for recording the auxiliary image must be increased.

The recording capacity can be further increased by the land/groove recording than the groove recording, and since recorded marks cannot be formed on the prepit address, recording of address information by the wobble modulation has a higher recording efficiency than the prepit address. Accordingly, the recording capacity can be greatly increased by employing recording using the land and the groove and wobble modulation at the same time. In this case, since the track pitch becomes dense, the reliability of access must be improved by further enhancing the address detection capability.

In the embodiment, to cope with the occurrence of the Indefinite bits which is a problem when both the land/groove recording and the wobble modulation are employed simultaneously, it is possible to greatly improve the address detection accuracy by lowering the frequency of occurrence of Indefinite bits by employing the gray code or the special track code. As a result of that the position detection accuracy in the sector using the sync code is greatly improved, the reliability and the high speed property of the access control can be greatly improved.

When the track pitch is narrowed by the land/groove recording, an amount of a noise component mixed from recorded marks to a reproduced signal is increased by the crosstalk of an adjacent track and by the above Indefinite bits, thereby reliability for detection of a reproduced signal is deteriorated. In contrast, when the PRML method is employed in reproduction, since the method is provided with the function for correcting an error of a reproduced signal in ML decoding, the reliability for detection of a reproduced signal can be improved, and thus, even if the recording density is increased to increase the recording capacity, it is guaranteed that a signal is stably detected.

Effect [3] «Recording efficiency is improved by permitting an effective zone division and a large capacity is guaranteed in conformity with high image quality»

The recording capacity can be more increased by the land/groove recording than the groove recording, and since recorded marks cannot be formed on the prepit address, recording of address information by the wobble modulation has a higher recording efficiency than the prepit address. Accordingly, the recording capacity can be greatly increased by employing the land/groove recording and the wobble modulation.

The recording capacity can be more increased by the land/groove recording than the groove recording, and since recorded marks cannot be formed on the prepit address, recording of address information by the wobble modulation has a higher recording efficiency than the prepit address. Accordingly, the recording capacity can be most increased by employing the land/groove recording and the wobble modulation. A zone structure shown in FIG. 14 is employed in the land/groove recording. However, when zones are arranged such that one round is set to an integral multiple of an ECC block, a recording efficiency is greatly deteriorated.

In contrast, the recording efficiency can be greatly improved when the zones are arranged such that a single ECC block is divided into a plurality of physical segments (seven segments in the embodiment) and one round on the information recording medium is set to an integral multiple of the physical segment as in the embodiment.

Effect [4] «Recording efficiency is improved by permitting an effective zone division and a large capacity is guaranteed in conformity with high image quality»

It is necessary to improve the quality of an auxiliary image in conformity with the improved quality of an image to be recorded to the information recording medium. However, when the auxiliary image is expressed by 4 bits in place of conventional 2 bits, an amount of data to be recorded is increased. To cope with this problem, the capacity of the information recording medium for recording the auxiliary image must be increased.

The recording capacity can be more increased by the land/groove recording than the groove recording, and since recorded marks cannot be formed on the prepit address, recording of address information by the wobble modulation has a higher recording efficiency than the prepit address. Accordingly, the recording capacity can be most increased by employing the land/groove recording and the wobble modulation. The zone structure shown in FIG. 14 is employed in the land/groove recording. However, when the zones are arranged such that one round is set to an integral multiple of the ECC block, the recording efficiency is greatly deteriorated.

In contrast, the recording efficiency can be greatly improved when the zones are arranged such that a single ECC block is divided into a plurality of the physical segments (seven segments in the embodiment) and one round on the information recording medium is set to an integral multiple of the physical segment as in the embodiment.

[Effect 5] «Protection of high quality image and identification of a type of medium>>

In comparison with a known SD image, when a high density (HD) image is recorded on the information recording medium employing the file or holder separation, there is a strong requirement for protecting the HD image from illegal copy because it has very high resolution. When the ECC block is divided into a plurality of the segments, two types of recording formats are provided in the reproduction-only information recording medium, and the guard field is formed between the ECC blocks with respect to a high quality image whose protection against illegal copy is desired as in the embodiment, not only the compatibility of the format can be secured among the reproduction-only, write-once type, and rewritable type information recording media but also a type of the media can be easily identified.

[Effect 6] «Protection of high quality image and identification of a type of medium»

It is also necessary to improve the quality of an auxiliary image in conformity with a high quality image that is recorded on the information recording medium. There is a strong requirement for protecting a high quality auxiliary image, which is expressed by 4 bits in plane of conventional 2 bits, against illegal copy. When the ECC block is divided into a plurality of segments, the two types of the recording formats are provided in the reproduction-only information recording medium, and the guard field is formed between ECC blocks with respect to a high quality image whose protection against illegal copy is desired as in the embodiment, not only the compatibility of the format can be secured among the reproduction-only, write-once type, and rewritable type information recording media but also a type of the media can be easily identified.

[Effect 7] «Even if a recording density is increased in conformity with a high quality image, even scratches, which are as long as current scratches, on a surface can be corrected»

In comparison with a known SD image, when a high density (HD) image is recorded on the information recording medium by the file or holder separation, it is essential to increase the recording capacity of the information recording medium because the HD image has high resolution. In the embodiment, the recording density is more increased than the current DVD disks by employing the modulation system of "d = 1". An increase in the recording density relatively increases the range of an effect of a scratch, which is formed on the surface of the information recording medium, on recorded data even if the size of the scratch is unchanged.

In the current DVD disks, one ECC block is composed of 16 sectors. However, the embodiment guarantees that a surface scratch, which is as long as a current scratch, can be corrected even if the recording density is increased in conformity with the high quality image by composing the one ECC block of the embodiment of 32 sectors that are twice as large as those of current DVD disks. Further, the data in the same sector is substantially interleaved by composing one ECC block of two small ECC blocks as well as arranging one sector over two ECC blocks in a dispersed state, thereby an effect of a long scratch and a burst error can be further reduced. Since error correction processing is executed in ML decoding by employing the PRML method, a reproduced signal is less likely to be deteriorated by dust and scratches on a surface.

In the current DVD standard, when a sync code is erroneously detected, an error correction capability is greatly deteriorated in the ECC block by occurrence of a frame shift.

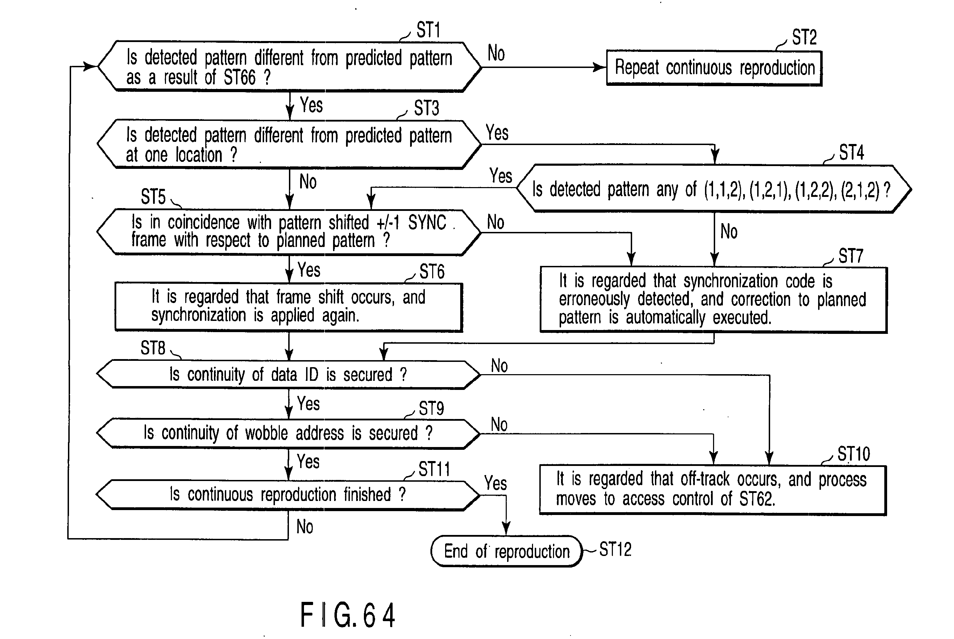

In contrast, when a sync code is erroneously detected by a scratch formed on the surface of the information recording medium in the embodiment, it can be discriminated from a frame shift. Accordingly, not only can the frame shift be prevented, but also a sync code detection accuracy and stability can be greatly improved because the erroneous detection of the sync code can be automatically corrected as shown in ST7 of FIG. 64.

[Effect 8] «Even if a recording density is increased in conformity with a high quality image, even scratches on a surface, which are as long as current scratches, can be corrected»

It is necessary to improve the quality of an auxiliary image in conformity with the improved quality of an image to be recorded to the information recording medium. However, when the auxiliary image is expressed by 4 bits in place of conventional 2 bits, an amount of data to be recorded is increased. To cope with this problem, the capacity of the information recording medium for recording the auxiliary image must be increased. In the embodiment, the recording density is further increased over the current DVD disks by employing the modulation system of "d = 1". An increase in the recording density relatively increases the range of an effect of a scratch, which is formed on the surface of the information recording medium, on recorded data even if the size of the scratch is unchanged.

In the current DVD disks, one ECC block is composed of 16 sectors. However, the embodiment guarantees that a surface scratch, which is as long as a current scratch, can be corrected even if the recording density is increased in conformity with the high quality image by composing the one ECC block of the embodiment of 32 sectors that are twice as large as those of the current DVD disks.

The data in the same sector is substantially interleaved by composing one ECC block of two small ECC blocks as well as arranging one sector over two ECC blocks in a dispersed state, thereby an effect of a long scratch and a burst error can be further reduced.

Further, since error correction processing is executed in ML decoding by employing the PRML method, a reproduced signal is less likely to be deteriorated by dust and scratches on a surface.

In the current DVD standard, when a sync code is erroneously detected, an error correction capability is greatly deteriorated in the ECC block by occurrence of a frame shift.

In contrast, when a sync code is erroneously detected by a scratch formed on the surface of the information recording medium in the embodiment, it can be discriminated from a frame shift. Accordingly, not only the frame shift can be prevented but also a sync code detection accuracy and stability can be greatly improved because the erroneous detection of the sync code can be automatically corrected as shown in ST7 of FIG. 64.

[Effect 9] «Perfect compatibility can be established between reproduction-only and write-once type information recording media as well as write-once processing can be executed in a minute unit»

In the current DVD-R disks or DVD-RW disks, it is impossible to execute write once/rewrite processing in a minute unit, and when restricted overwrite processing is executed to forcibly perform it, a problem arises in that a part of recorded information is destroyed.

In the embodiment, since a plurality of types of recording formats can be set in the reproduction-only information recording medium and the recording structure, in which the guard region is formed between the ECC blocks, is provided with the reproduction-only information recording medium, the reproduction-only information recording medium is perfectly compatible with the write-once type information recording medium.

Further, write-once/rewrite processing can be executed from midway of the guard region, and there is no danger that the information recorded in the ECC block is destroyed by the write once/rewrite processing.

At the same time, in the write-once/rewrite processing in the guard region, since partly overlapped recording is executed in the guard region, the existence of a gap region, in which no recorded mark exists in the guard region, can be prevented, thereby the effect of a crosstalk between two layers due to the gap region can be eliminated, and thus a problem of an interlayer crosstalk in the single-sided two recording layers can be eliminated at the same time.

In the embodiment, the ECC block is arranged as shown in FIG. 56. Accordingly, reproduction or recording must be executed in at least one ECC block unit. When reproduction or recording is effectively executed at a high speed, processing executed in the ECC block unit is processing executed in a smallest processing unit. Further, write-once or rewrite processing can be executed in substantially the smallest unit by arranging a recording cluster, which is a unit of rewrite or record, as a group of data segments including only one ECC block.

Effect [10] «Address information fixing accuracy is improved, and an access speed is secured»

Track information can be detected with a very high accuracy in a section which is provided with no indefinite bit and to which an error detection code is attached. Accordingly, the embodiment makes it possible to form a section, which is provided with no indefinite bit and to which the error detection code is added, also in the land region by arranging Indefinite bits also in the groove region and arranging Indefinite bits to both the land region and the groove region in a dispersed state.

As a result, an address information fixing accuracy can be improved and a definite access speed can be secured.

Further, since the $\pm90°$ wobble phase modulation is employed in the embodiment, Indefinite bits can be easily created also in the groove region.

Effect [11] «Improvement of reference clock extraction accuracy»

Since a wobble frequency (wobble wavelength) is set constant in every portion in the embodiment, the following operations are executed by detecting the wobble frequency:

a) extraction of a reference clock for detecting wobble address information (alignment of frequency with phase);
b) extraction of a reference clock for detecting a reproduced signal when it is reproduced from a recorded mark (alignment of frequency with phase); and
c) extraction of a recording reference clock when a recorded mark is formed to rewritable type and write-once type information recording media (alignment of frequency with phase)

In the embodiment, the wobble address information is previously recorded using the wobble phase modulation. When the phase modulation is executed by wobbles and a reproduced signal is passed through a band-pass filter for waveform shaping, a phenomenon occurs in that the waveform amplitude of a detection signal whose waveform has been shaped is reduced before and after a phase change position.

Accordingly, a problem arises in that when the frequency of occurrence of phase change points is increased by the phase modulation, a waveform amplitude is varied more often, and the clock extraction accuracy is deteriorated, whereas when the frequency of occurrence of the phase change points is decreased in the modulation region, a bit shift is liable to occur when the wobble address information is detected.

Accordingly, the embodiment is provided with the modulation region and the non-modulation region using the phase modulation, from which an effect of improving the clock extraction efficiency can be obtained by increasing the occupying rate of the non-modulation region.

In the embodiment, since a position, at which switching is executed between the modulation region and the non-modulation region, can be previously predicted, when the clocks are extracted, it is possible to extract the clocks by detecting only the signals of the non-modulation region by gating the region.

[Effect 12] «Since track numbers can be securely reproduced also on the lands, a track number reproducing accuracy can be improved on the lands. » .

Track information can be detected with a very high accuracy in a section which is provided with no indefinite bit and to which the error detection code is attached.

Accordingly, the embodiment makes it possible to form a section, which is provided with no indefinite bit and to which the error detection code is added, also in the land region by arranging Indefinite bits also in the groove region and arranging Indefinite bits to both the land region and the groove region in a dispersed state.

As a result, the track numbers can be read also on the lands with a high reproduction accuracy, thereby access stability and a high access speed can be secured in the land section.

Effect [13] «An error correction capability is secured by preventing Indefinite bits from being arranged longitudinally straight in the ECC blocks.»

In the embodiment, since 32, which is the number of sectors that constitute the ECC block, cannot be divided by 7, which is the number of segments, and vice versa (3 and 7 are in a relation of non-multiple), the leading positions of the respective segments are arranged at offset positions, respectively in the ECC block shown in FIG. 56.

In the wobble address format shown in FIG. 19, there is a possibility that the Indefinite bits 504 shown in FIG. 16 are mixed in the groove track information region 606 and the land track information 607 shown in FIG. 19. Since a groove width or a land width changes in the indefinite bit region 504, a level of the signal reproduced from the region fluctuates, from which an error occurs.

When the number of the sectors and the number of the segments, which constitute the ECC block, are placed in the non-multiple relation as in the embodiment, there can be obtained an effect of preventing the Indefinite bits from being arranged longitudinally straight in the ECC block shown in FIG. 56 likewise the leading positions of the above segments.

As described above, the error correction capability can be secured in the ECC block by preventing the Indefinite bits from being arranged longitudinally by offsetting the arrangement of the Indefinite bits.

As a result, the error rate (after correction) of information, which is reproduced from the recorded marks recorded to the information recording medium, is reduced, thereby it is possible to reproduce information with a high accuracy.

When a sync code is erroneously detected by a scratch formed on the surface of the information recording medium in the embodiment, it can be discriminated from a frame shift. Accordingly, not only the frame shift can be prevented but also a sync code detection accuracy and stability can be greatly improved because the erroneous detection of the sync code can be automatically corrected as shown in ST7 of FIG. 64. As a result, deterioration of the error correction capability of the ECC block can be prevented, thereby an error can be corrected with a high accuracy and reliability.

As described above, there can be obtained functions in that Indefinite bits are prevented from being arranged longitudinally straight in the ECC block and the error correction capability is secured as well as in that an accuracy for setting a location, at which frame data is arranged in the ECC block, is increased by improving the sync code detection accuracy. Accordingly, the error correction capability can be further increased by the multiplier effect of the above functions (deterioration of the error correction capability is prevented).

Effect [14] «Since current position information can be found at a high speed, access can be executed at a high speed and reliability of reproduced signal can be improved»

When an auxiliary image information of high quality is recorded together with a main image information of high quality in a file or a holder different from that of an SD image, the information is recorded to an information recording medium in a format in which a guard region is inserted into every data region 470 constituting a single ECC block, although this is not shown in the embodiment.

Since the a postamble region 481, in which the sync code 433 is recorded, is arranged at the leading end in the guard region, a location, at which reproduction is executed at present, can be found at a high speed with a high accuracy in any of the guard region and the data region 470 by the methods shown FIGS. 64, 59, and 60.

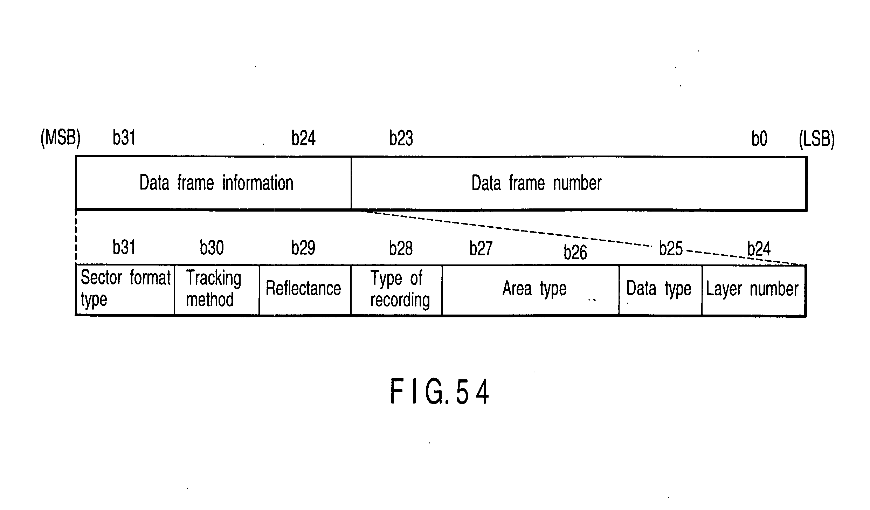

Since a sector number can be found by the information of a data frame number shown in FIG. 54, when a location, at which reproduction is being executed at present, can be found, a period of time, which is necessary for the position of the data frame number to be reached during continuous reproduction, can be predicted, and thus timing at which a gate is opened can be previously found, thereby the reading accuracy of the sector number can be greatly improved.

As a result of improvement of the reading accuracy of the sector number:

a) an amount of offset from a target arrival position can be accurately measured during access without causing a reading error, thereby an access speed can be increased; and

b) when reproduction is executed continuously, reproduction processing can be continued while accurately confirming a sector number of a reproducing location, thereby reliability of the reproduction processing can be greatly improved.

Further, the sync codes 433, which are arranged at the leading ends of the guard regions, have the same interval everywhere in the same recording cluster. Accordingly, the timing, at which the gate is opened at the position of the data frame number, can be more accurately predicted with a result of further improvement of the sector number reading accuracy.

Effect [15] «Large capacity is guaranteed in conformity with high quality image (in addition to the above, reliability of access to high quality image is enhanced) »

Different from a conventional SD image, when a high density (HD) image is recorded on the information recording medium by the file or holder separation, it is essential to increase the recording capacity of the information recording medium because the HD image has high resolution. In the embodiment, a large capacity is achieved by employing the modulation system (run-length modulation system: RLL (1,1,0)) of "d = 1" and increasing the recording density of the embossed pits or the recorded marks.

In comparison with the modulation system of "d = 2" employed in the current DVD disks, the modulation system of "d = 1" has a larger window margin width, which exhibits an allowable amount of shift of timing at which detected signals are sampled (jitter margin or $\Delta$T) (supposing that a physical margin width is the same as a conventional one, a recording accuracy is improved accordingly). However, a problem arises in that since the pitch of most dense embossed pits or recorded marks is narrowed and a signal reproduced therein has a greatly reduced amplitude, the signal cannot be detected by the conventional level slice method (binalization processing cannot be executed stably).

To cope with the above problem, the embodiment improves the reliability of detection of a reproduced signal and achieves a high density by employing the modulation system of "d = 1" and detecting a signal using the PRML method.

Effect [16] «Large capacity is guaranteed in conformity with high quality image (in addition to it, reliability of access to high quality image is improved) »

It is necessary to improve the quality of an auxiliary image in conformity with the improved quality of an image to be recorded to the information recording medium. However, when the auxiliary image is expressed by 4 bits in place of conventional 2 bits, an amount of data to be recorded is increased. To cope with this problem, the capacity of the information recording medium for recording the auxiliary image must be increased. In the embodiment, a large capacity is achieved by employing the modulation system of "d = 1" and increasing the recording density of embossed pits or recorded marks.

In comparison with the modulation system of "d = 2" employed in the current DVD disks, the modulation system of "d = 1" has a larger window margin width, which exhibits an allowable amount of shift of timing at which detected signals are sampled (jitter margin or $\Delta$T) (supposing that a physical margin width is the same as a conventional one, a recording accuracy is improved accordingly). However, a problem arises in that since the pitch of most dense embossed pits or recorded marks is narrowed and a signal reproduced therein has a greatly reduced amplitude, the signal cannot be detected by the conventional level slice method (binalization processing cannot be executed stably).

To cope with the above problem, the embodiment improves the reliability of detection of a reproduced signal and achieves a high density by employing the modulation system of "d = 1" and detecting a signal using the PRML method.

Effect [17] «Reliability of detection of signal reproduced from information recorded to information recording medium is greatly improved»

The embodiment greatly improves the error correction capability as compared with the current DVD format by executing the technical device shown in the above point A). As a result, reliability of information recorded to an information recording medium (and reliability of a signal detected therefrom) is improved.

In general, in an error correction method using an ECC block, an error cannot be corrected when an amount of error exceeds a limit before it is corrected. As such, since an original error rate before an error is corrected and an error rate after the error is corrected is in a non-linear relation, a decrease in the original error rate greatly contributes to an improvement in the error correction capability using the ECC block.

Since the PRML method employed in the embodiment has a capability for correcting an error in ML decoding, a combination of the PRML method and the error correction method using the ECC block exhibits reliability for information that is greater than an error correction capability obtained by simply adding the error correction capabilities of both the methods.

Effect [18] «Reliability of detection of signal reproduced from information recorded to information recording medium is greatly improved»

Different from a conventional SD image, when a high density (HD) image is recorded on the information recording medium by the file or holder separation, it is essential to increase the recording capacity of the information recording medium because the HD image has high resolution. It is also necessary to improve the quality of an auxiliary image in conformity with the improved quality of an image to be recorded to the information recording medium. However, when the auxiliary image is expressed by 4 bits in place of conventional 2 bits, an amount of data to be recorded is increased. To cope with this problem, the capacity of the information recording medium for recording the auxiliary image must be increased. Accordingly, in the embodiment, it is explained in the effects [1] and [2] that the information recording medium suitable for the HD image and the auxiliary image of high quality can be provided by combining the land/groove recording and the wobble modulation.

It is known that when the land/groove recording is employed, an amount of a crosstalk between adjacent tracks can be reduced in reproduction by setting a step between a land and a groove (depth of the groove) to $\lambda/(5n)$ to $\lambda/(6n)$, where a wavelength in use is denoted by $\lambda$ and a refraction factor of a transparent substance is denoted by n.

However, when the pitch of the land and the groove is narrowed to realize a large capacity aiming at an information recording medium suitable for recording of the HD image and the auxiliary image of high quality, a crosstalk occurs between the adjacent tracks in reproduction, and a large amount of a noise component is multiplexed with a reproduced signal. To cope with this problem, the embodiment realizes the narrow land and groove pitch by eliminating an effect of noise in ML decoding by employing the PRML method.

Effect [19] «Manufacturability of medium»

Since the embodiment employs the $\pm90°$ phase modulation in the wobble modulation, Indefinite bits can be arranged to the land and to the groove in a dispersed state by arranging Indefinite bits also to a groove region by a very simple method of changing intensity of exposure to a photoresist layer when the groove region is formed while information is recorded to an original disk. Accordingly, a cost of a rewritable type information recording medium can be lowered, and a less expensive rewritable type information recording medium can be supplied to a user.

Effect [20] «Reliability of detection of signal reproduced from information recorded to information recording medium is greatly improved»

When a high density (HD) image is recorded on the information recording medium by the file or holder separation, it is essential to increase the recording capacity of the information recording medium because the HD image has high resolution. At the same time, it is necessary to improve the quality of an auxiliary image in conformity with the improved quality of an image to be recorded to the information recording medium. However, when the auxiliary image is expressed by 4 bits in place of conventional 2 bits, an amount of data to be recorded is increased. To cope with this problem, the capacity of the information recording medium for recording the auxiliary image must be increased.

In the embodiment, a recording density can be further increased as compared with the current DVD disks by employing the modulation system of "d = 1", and by simultaneously employing the land/groove recording and the wobble modulation. When the recording density is increased, it is difficult to detect and to reproduce a stable signal from the recorded marks recorded on the information recording medium. To stably reproduce and to detect a signal from the recorded marks having the increased density, the embodiment employs the PRML method. In the PRML method, when a signal level of a reproduced signal is locally changed, the reproduced signal detection accuracy is lowered.

In the embodiment, since different track information is set in a land region and in a groove region, Indefinite bits as shown in FIG. 16 are generated. Since a groove width or a land width locally changes in an indefinite bit region, the level of the reproduced signal is locally changed at the position of an indefinite bit.

To overcome this drawback, the embodiment greatly reduces a frequency of occurrence of change of a reproduced signal level by arranging Indefinite bits in the land region and in the groove region in addition to the fact that occurrence of Indefinite bits is suppressed by employing the gray code or the special track code in a location in which track information is designated.

Further, a frequency of occurrence of change of the reproduced signal level is extremely reduced by making an occupying rate of a non-modulation region larger than that of the modulation region in combination with the above reducing method, making use of the fact that the Indefinite bits appear only in a wobble modulation region, thereby an accuracy with which a signal is reproduced and detected from the recorded marks is greatly improved.

[Effect 21] «Even if a recording density is increased in conformity with a high quality image, scratches on a surface as long as current scratches can be corrected»

In the embodiment, the structure of the ECC block is devised such that an error can be corrected with respect to a scratch that is as long as a conventional scratch, even if data is recorded in a high density. However, even if the strength of the ECC block is increased, it is impossible to reproduce information if a desired location cannot be accessed by the effect of a scratch formed on a surface. In the embodiment, the occupying rate of the modulation region is made larger than that of the non-modulation region and wobble address information is arranged in a dispersed state, thereby the effect of an error transmitted to the wobble address information to be detected is reduced even if a long scratch is formed. In addition to the above, a synchronization code detection error at a single position can be corrected by devising a method of arranging synchronization codes as shown in FIG. 60. With the above combination, even if a scratch that is as long as a conventional scratch is formed on the surface of.the information recording medium, address information as well as position information in a sector can be stably read, which can secure a high accuracy in reproduction.

Effect [22] «To secure reliability of address information after repetition of rewrite»

The embodiment has such a structure that an expanded guard region is arranged at the end of a recording cluster, and information is recorded in a duplicate state between the guard region and a recording cluster in which a next write-once or rewrite operation is executed. An interlayer crosstalk, which occurs in reproduction executed in a single-sided two-recording-layer write-once type or rewritable type information recording medium, can be eliminated by providing no gap between the recording clusters as described above.

Incidentally, an increase in the number of times of rewrite changes the shape of a wobble groove or a wobble land in the duplicately recorded portion, thereby the characteristics of a wobble address signal obtained therefrom are deteriorated. Since off-track occurring in recording may break recorded data, it must be detected promptly.

In the embodiment, since the duplicately recorded portion is limited only to the guard region between the ECC blocks, even if the number of times of rewrite is increased, the wobble address signal detected in the ECC block is less deteriorated, thereby the off-track in the ECC block can be promptly detected.

Further, since the occupying rate of the non-modulation region is made larger than that of the modulation region so that the duplicately recorded portion is located in the non-modulation region, even if the number of times of rewrite increases, it is guaranteed that a wobble address signal can be detected.

That is, according to the present invention, it is . possible to record information from one side of an information recording medium having at least two recording layers or to stably reproduce the information therefrom without depending of the presence or absence of address information and recorded marks. Further, the effect of an interlayer crosstalk can be reduced.

Moreover, since the recorded marks are formed across a plurality of tracks at a time, they can be formed at a higher speed that a case in which fine recorded marks are formed over an entire surface. Accordingly, the marks can be recorded without an additional time simultaneously with ordinary initialization.

It should be noted that the present invention is by no means limited to the above embodiments and may be embodied by modifying the components thereof within a range that does not depart from the gist of the invention. Further, various inventions can be created by appropriately combining the plurality of components disclosed in the above embodiments. For example, some components may be eliminated from all the components disclosed in any of the embodiments. Further, the components of different embodiments may be appropriately combined.

**Claims**

1. An information recording medium (1) having a first recording layer ($L_0$) to which information can be recorded, and a second recording layer ($L_1$) to which information, which is different from the information recorded to the first recording layer, can be recorded by a light beam that has passed through the first recording layer, **characterized by** comprising:

premarks (3) acting as recorded marks recorded previously across at least two tracks arranged to the first and second recording layers, respectively.

2. A information recording medium according to claim 1, **characterized in that**

the premarks provide optical characteristics for identifying a light beam for reproducing information from the first recording layer, when it is reflected by the second recording layer, from the light beam reflected by the first recording layer for producing information from the first recording layer.

3. A information recording medium according to claim 1, **characterized in that**

the premarks provide optical characteristics for identifying a light beam for reproducing information from the second recording layer, when it is reflected by the first recording layer, from the light beam reflected by the second recording layer for producing information from the second recording layer.

4. An information recording medium **characterized by** comprising :

at least one recording layer ($L_0$, $L_1$) capable of recording information by a spot light formed by converging a light beam;
guide grooves (2) which are formed in the recording layer in a spiral shape and which guide the spot light to a predetermined position of the recording layer;
transparent layers (5, 7) which are formed on a side of the recording layer to which the spot light is irradiated and on a side opposite the side to which the spot light is irradiated and through which the spot light can passes; and
premarks (3) formed at arbitrary positions at which the guide grooves are located adjacent to each other in a radial direction in a size not smaller than at least two guide grooves, the premarks setting, when a reproduction spot light is irradiated thereto, a level of a reflected light beam, which is changed according to the presence or absence of recorded information at the position to which the reproduction spot light is irradiated within a predetermined range.

5. An information recording medium according to claim 4, **characterized in that**

the premarks are formed at a predetermined rate with respect to an area of the recording layer.

6. An information recording medium according to claim 4 or 5, **characterized in that**

the premarks are erased by recording information by a spot formed by the light beam converged.

7. An information recording medium according to any one of claims 4 to 6, **characterized in that**

the premarks are formed discontinuously with respect to each of a radial direction and a surface direction of the recording layer..

8. An information recording medium according to any one of claims 4 to 6, **characterized in that**

the premarks are formed concentrically in a predetermined section on an innermost radius side in the radial direction of the recording layer and in a predetermined section on an outermost radius side in the radial direction of the recording layer.

9. An information recording/reproducing apparatus **characterized by** comprising:

an optical head (11) which irradiates a spot light having a predetermined spot diameter to a disk-shaped information recording medium (1) having a recording layer to which premarks are previously formed and obtains a reproduced signal from a light beam reflected from the recording layer; and
a signal reproduction circuit (143, 217, 220) which detects a wobble detection signal through a filter from the reproduced signal obtained from the recording layer of the information recording medium to which the premarks are previously formed by the optical head.

10. An information recording/reproducing apparatus according to claim 9, **characterized in that**

the optical head can erase the premarks when information is recorded to the recording layer of the information recording medium.

11. An information recording/reproducing apparatus according to claims 9 or 10, **characterized in that**

the optical head includes an initialization optical head which initializes the recording layer and a premark head which forms the premarks to the recording layer.

**12.** An information recording method **characterized by** comprising:

irradiating a first spot light to initialize recording layers and a second spot light to form premarks that set a level of a reflected light beam, which is changed according to the presence or absence of recorded information at a position of a reproducing spot light when it is reflected by a recording layer, within a predetermined range to a recording medium having at least two recording layers.

**13.** An information recording method according to claim 12, **characterized in that** the second spot light is an elliptic light beam extending in a radial direction of the information recording medium having the recording layers.

**14.** An information recording method according to claim 12 or 13, **characterized in that** the center of a long axis of the second spot light is changed in a predetermined interval with respect to the center of tracks formed to the recording layers with respect to a section except a predetermined section on an innermost radius side and a predetermined section on an outermost radius side in the radial direction of the information recording medium having the recording layers.

**15.** An information recording method according to claim 12 or 13, **characterized in that** the second spot light is irradiated concentrically to the information recording medium while a recording surface of the information recording medium makes a round with respect to the predetermined section on the innermost radius side and the predetermined section on the outermost radius side in the radial direction of the information recording medium having the recording layers.

FIG.1

FIG. 2

FIG.3A

FIG.3B

FIG.3C

FIG. 4

EP 1 505 580 A2

Moving direction of spot

33

31

FIG.5

FIG. 6

FIG.7

FIG. 8

FIG.9A

FIG.9B

FIG.9C

FIG.10A     FIG.10B     FIG. 10C

EP 1 505 580 A2

FIG.11

FIG.14

FIG.12

EP 1 505 580 A2

EP 1 505 580 A2

411 412 413 414 415 418

| ECC block #1 | ECC block #2 | ECC block #3 | ECC block #4 | ECC block #5 | .... | ECC block #8 |
|---|---|---|---|---|---|---|

## FIG. 13A

433
Sync frame length

433
Sync frame length

433
Sync frame length

| ECC block #1 | Guard region for reproduction -only type #2 | ECC block #2 | Guard region for reproduction -only type #3 | ECC block #3 | .... | Guard region for reproduction -only type #8 | ECC block #8 |
|---|---|---|---|---|---|---|---|

411 442 412 443 413 448 418

## FIG. 13B

433
Sync frame length

433
Sync frame length

433
Sync frame length

| ECC block #1 | Guard region for write-once type #2 | ECC block #2 | Guard region for write-once type #3 | ECC block #3 | .... | Guard region for write-once type #8 | ECC block #8 |
|---|---|---|---|---|---|---|---|

411 452 412 453 413 458 418

## FIG. 13C

433
Sync frame length

433
Sync frame length

433
Sync frame length

| ECC block #1 | Guard region for rewritable type #2 | ECC block #2 | Guard region for rewritable type #3 | ECC block #3 | .... | Guard region for rewritable type #8 | ECC block #8 |
|---|---|---|---|---|---|---|---|

411 462 412 463 413 468 418

## FIG. 13D

511
1 address bit region
(1 address symbol region)

511 1 address bit region

511
1 address bit region
(1 address symbol region)

501 group region

501 group region

"0"

"1"

"1"

"0"

☆ 1 address bit region 511 (expressed by 8 or 12 wobbles)
☆ Frequency, amplitude, phase in 1 address bit region = constant everywhere
☆ Interface of 1 address bit region 511 (phase shifts 180° or 0° )

FIG.15

EP 1 505 580 A2

501 groove region "0"    501 groove region "1"    "1"    "0"

503 groove region "0"    504 In-land indefinite bit region    "1"    "0"

502 groove region "0"    502 groove region "0"    "1"    "0"

FIG.16

EP 1 505 580 A2

| Decimal number | Expression by conventional binary number | Expression by gray code |
|:---:|:---:|:---:|
| 0 | 0000 | 0000 |
| 1 | 0001 | 0001 |
| 2 | 0010 | 0011 |
| 3 | 0011 | 0010 |
| 4 | 0100 | 0110 |
| 5 | 0101 | 0111 |
| 6 | 0110 | 0101 |
| 7 | 0111 | 0100 |
| 8 | 1000 | 1100 |
| 9 | 1001 | 1101 |
| 10 | 1010 | 1111 |
| 11 | 1011 | 1110 |
| 12 | 1100 | 1010 |
| 13 | 1101 | 1011 |
| 14 | 1110 | 1001 |
| 15 | 1111 | 1000 |

# FIG.17

| Number of decimal notation | Expression by conventional binary notation | Special track code | Number of decimal notation | Expression by conventional binary notation | Special track code |
|---|---|---|---|---|---|
| 0 | 00000 | 00 ⋯ 00000 | 1 | 00001 | 10 ⋯ 00000 |
| 2 | 00010 | 00 ⋯ 00001 | 3 | 00011 | 10 ⋯ 00001 |
| 4 | 00100 | 00 ⋯ 00011 | 5 | 00101 | 10 ⋯ 00011 |
| 6 | 00110 | 00 ⋯ 00010 | 7 | 00111 | 10 ⋯ 00010 |
| 8 | 01000 | 00 ⋯ 00110 | 9 | 01001 | 10 ⋯ 00110 |
| 10 | 01010 | 00 ⋯ 00111 | 11 | 01011 | 10 ⋯ 00111 |
| 12 | 01100 | 00 ⋯ 00101 | 13 | 01101 | 10 ⋯ 00101 |
| 14 | 01110 | 00 ⋯ 00100 | 15 | 01111 | 10 ⋯ 00100 |
| 16 | 10000 | 00 ⋯ 01100 | 17 | 10001 | 10 ⋯ 01100 |
| 18 | 10010 | 00 ⋯ 01101 | 19 | 10011 | 10 ⋯ 01101 |
| 20 | 10100 | 00 ⋯ 01111 | 21 | 10101 | 10 ⋯ 01111 |
| 22 | 10110 | 00 ⋯ 01110 | 23 | 10111 | 10 ⋯ 01110 |
| 24 | 11000 | 00 ⋯ 01010 | 25 | 11001 | 10 ⋯ 01010 |
| 26 | 11010 | 00 ⋯ 01011 | 27 | 11011 | 10 ⋯ 01011 |
| 28 | 11100 | 00 ⋯ 01001 | 29 | 11101 | 10 ⋯ 01001 |
| 30 | 11110 | 00 ⋯ 01000 | 31 | 11111 | 10 ⋯ 01000 |

Note] Only the highest significant bit of "2n" (n: integer) is different from that of "2n+1" and the other lower bits of them are in coincidence with each other.

FIG. 18

EP 1 505 580 A2

EP 1 505 580 A2

FIG. 19A

| | VFO region | Presync region | Rewritable data region in ECC block #2 | Postamble region ⇒ "SY1" | Extra region | Buffer region | |
|---|---|---|---|---|---|---|---|
| ··· ··· ··· ··· | 67 Data byte | 4 Data byte | 77376 Data byte | 2 Data byte | 4 Data byte | 16 Data byte | ··· ··· ··· ··· |

Data segment

522  523  525  526  524  527  531

FIG. 19B

| Physical segment #0 | Physical segment #1 | Physical segment #2 | Physical segment #3 | Physical segment #4 | Physical segment #5 | Physical segment #6 | Physical segment #7 | ··· ··· |
|---|---|---|---|---|---|---|---|---|

550  551  552  553  554  555  556  557

FIG. 19C

| Wobble data unit #0 | Wobble data unit #1 | Wobble data unit #2 | ··· | Wobble data unit #16 | 576 |
|---|---|---|---|---|---|

560  561  562

FIG. 19D

| Wobble sync region | | | Non-modulation region | Modulation start mark | Wobble address region | Non-modulation region | Modulation start mark | Wobble sync region | ·· ·· |
|---|---|---|---|---|---|---|---|---|---|
| IPW 6 wobbles | NPW 4 wobbles | IPW 6 wobbles | Continuous NPW 68 wobbles | IPW 4 wobbles | 3 address bits posed of 12 wobbles | Continuous NPW 68 wobbles | IPW 4 wobbles | 3 address bits posed of 12 wobbles | ·· ·· |

580  590  581  586  591  582  587

FIG. 19E

| Wobble sync region | Reservation region | Segment information | Zone information | Parity information | Groove track information | Land track information | Unity region ⇒ NPW in its entirety |
|---|---|---|---|---|---|---|---|
| 3 address bits | 3 bits | 6 address bits | 5 bits | 1 bits | 12 bits | 12 bits | 9 address bits |

580  604  601  602  605  606  607  608

610  Wobble address information

NPW                    IPW        Outside ↑

Start                   Start      ↓ Inside

# FIG. 20

Synchronized region

| | Address field | Unity field |
|---|---|---|
| 0 | 1 | 2 | 3 | 4 | 5 | 6 | 7 | 8 | 9 | 10 | 11 | 12 | 13 | 14 | 15 | 16 |

WDU number in physical segment

# FIG. 21

(MSB) b38    b36 b35    b30 b29  b25  b24  b23    b12 b11    (LSB) b0

| Segment information | Segment | Zone | Parity | Groove track | Land track |
|---|---|---|---|---|---|
| 3 | 6 | 5 | 1 | 12 | 12 |

# FIG. 22

Binary                    Gray code

bit 11                    bit 11
(MSB)                     (MSB)

                    ⊕  →  bit 10

bit 10 ──────────

bit 3  ──────────

                    ⊕  →  bit 2

bit 2  ──────────

                    ⊕  →  bit 1

bit 1  ──────────

                    ⊕  →  bit 0
                          (LSB)
bit 0
(LSB)

F I G. 2 3

| | IPW | NPW | IPW | NPW |
|---|---|---|---|---|
| SYNC | 6 wobbles | 4 wobbles | 6 wobbles | 68 wobbles |

F I G. 2 4

| Address | IPW | bit 2 | bit 1 | bit 0 | NPW |
|---|---|---|---|---|---|
| | 4 wobbles | 4 wobbles | 4 wobbles | 4 wobbles | 68 wobbles |

## F I G. 2 5

| Unity | NPW |
|---|---|
| | 84 wobbles |

## F I G. 2 6

| NPW | SCM 1 | NPW | SCM 2 | NPW | NPW |
|---|---|---|---|---|---|
| 2 wobbles | 2 wobbles | 8 wobbles | 2 wobbles | 2 wobbles | 68 wobbles |

## F I G. 2 7

| NPW | SCM 1 | NPW | SCM 2 | NPW | NPW |
|---|---|---|---|---|---|
| 2 wobbles | 2 wobbles | 4 wobbles | 2 wobbles | 6 wobbles | 68 wobbles |

## F I G. 2 8

F I G. 29

F I G. 30

F I G. 3 1

Measured value of SCD

F I G. 3 2

EP 1 505 580 A2

Outside ↑

| | | | | | |
|---|---|---|---|---|---|
| L | Zone=m+1<br>Track=0<br>Segment=m+12 | Zone=m+1<br>Track=0<br>Segment=m+13 | Zone=m+1<br>Track=1<br>Segment=0 | Zone=m+1<br>Track=1<br>Segment=1 | |
| G | Zone= m+1<br>Track= 0<br>Segment= m+12 | Zone= m+1<br>Track= 0<br>Segment= m+13 | Zone= m+1<br>Track= 1<br>Segment= 0 | Zone=m+1<br>Track=1<br>Segment=1 | |
| L | Zone=m<br>Track=n<br>Segment=m+11 | Zone=m<br>Track=n<br>Segment=m+12 | Zone=m+1<br>Track=0<br>Segment=0 | Zone=m+1<br>Track=0<br>Segment=1 | |
| G | Zone=m<br>Track=n<br>Segment=m+11 | Zone=m<br>Track=n<br>Segment= m+12 | Zone=m+1<br>Track=0<br>Segment= 0 | Zone=m+1<br>Track=0<br>Segment= 1 | |
| L | Zone=m<br>Track=n-1<br>Segment=m+11 | Zone=m<br>Track=n-1<br>Segment=m+12 | Zone=m<br>Track=n<br>Segment=0 | Zone=m<br>Track=n<br>Segment=1 | |
| G | Zone=m<br>Track=n-1<br>Segment=m+11 | Zone=m<br>Track=n-1<br>Segment=m+12 | Zone=m<br>Track=n<br>Segment=0 | Zone=m<br>Track=n<br>Segment=1 | |

Inside ↓

# FIG. 33

EP 1 505 580 A2

**F I G. 3 4 A**

410 — ECC block #0
433 Sync frame length — Rewritable type guard region #1 — 461
411 — ECC block #1
433 Sync frame length — Rewritable type guard region #2 — 462
412 — ECC block #2

**F I G. 3 4 B**

540 ~ Recording cluster

**F I G. 3 4 C**

529 ~
520 ~

546 | 544 | 547 | 532 | 533 | 521 | 536 | 534 | 537 | 530

| Data region in ECC block #0 | Postamble region SY1 | Extra region | Buffer region | VFO region | Presync region | Data region in ECC block #0 | Postamble region SY1 | Extra region | Buffer region | Expanded guard region |
|---|---|---|---|---|---|---|---|---|---|---|
| 77376 data bytes | 2 data bytes | 4 data bytes | 16 data bytes | 67 data bytes | 4 data bytes | 77376 data bytes | 2 data bytes | 4 data bytes | 16 data bytes | 24 data bytes |

Data segment (546–547) — Data segment (532 ... 537)

~ 528

522

**F I G. 3 4 D**

541
Overlapping location in rewrite

523 | 525

| VFO region | Presync region | Data region in ECC block #0 |

Data segment

531 ~ 541

**F I G. 3 4 E**

Recording cluster

590

**F I G. 3 4 F**

580 —
Wobble sync region

Non/modulation region

Modulation start mark

581

| Recording cluster | | ~ 540 |
|---|---|---|
| Data segment × n | Expanded groove field | ~ 528 |
| 77496 × n | 24 | |

# FIG. 35

\* Signal in region in which
track width changes

Groove n+2 — 1    1    0    X2 — \* Groove track

— \* Laser beam

Land n+1 — 1    X    0    0 — \* Land track

Groove n+1 — 1    0    0    X1

— \* Groove track

# FIG. 37

FIG.36

| Groove track | G-S 1101 | L-S 11X1 | G-S 1101 | L-S 11X1 | |
|---|---|---|---|---|---|
| Land track | | L-S 1101 | | L-S 1100 | |
| Groove track | G-S 1100 | L-S X100 | G-S 1100 | L-S X100 | |
| Land track | | L-S 0101 | | L-S 0100 | |
| Groove track | G-S 0101 | L-S 010X | G-S 0100 | L-S 010X | |

# FIG. 38

| Groove/land track | Track number | Track number determination standard |
|---|---|---|
| Groove      : G(n+2) | 1101X | Groove effective only at leading 4 bits |
| Odd land    : L(n+1) | 110X0 | Any of 11010 or 11000 is employed in odd land only in this location |
| Groove      : G(n+1) | 1100X | Groove effective only at leading 4 bits |
| Even land   : L(n) | X1001 | Any of 11001 or 01001 is employed in even land only in this location |
| Groove      : G(n) | 0100X | Groove effective only at leading 4 bits |

# FIG. 39

EP 1 505 580 A2

501  groove region

503  land region

502  groove region

507  land region

505  groove region

714  land region

506  groove region

ε

710 Indefinite bit
region in groove

ζ

η

FIG.40

| Identification of land/groove | Track Number | Track number information A606 | Track number information B607 |
|---|---|---|---|
| Groove | 2n+3 | 2n+4 | 2n+3 |
| Land | 2n+3 | Indefinite (2n+2 or 2n+3) | 2n+3 |
| Groove | 2n+2 | 2n+2 | 2n+3 |
| Land | 2n+2 | 2n+2 | Indefinite (2n+1 or 2n+3) |
| Groove | 2n+1 | 2n+2 | 2n+1 |
| Land | 2n+1 | Indefinite (2n or 2n+2) | 2n+1 |
| Groove | 2n | 2n | 2n+1 |

# FIG. 41

Groove n+1 · 1 · 1 · 0 — * Groove track
Land n · 1 · X · 0 — * Laser Beam
Groove n · 1 · 0 · 0 — * Land track
— * Signal in region in which track width changes
— * Groove track

# FIG. 42

| Type of track | Track number to be detected |
|---|---|
| Groove | n+3 |
| Even land (n+2) | (n+2) or (n+3) |
| Groove | n+2 |
| Even land (n+1) | (n+1) or (n+2) |
| Groove | n+1 |
| Even land (n) | (n) or (n+1) |
| Groove | n |

# F I G. 4 3

| Groove/land track | Track number | Track number determination standard |
|---|---|---|
| Groove : G(n+2) | 1101 | |
| Odd land : L(n+1) | 110* | Any of 1101 or 1100 is employed in odd land only in this location |
| Groove : G(n+1) | 1100 | |
| Even land : L(n) | *100 | Any of 1100 or 0100 is employed in even land only in this location |
| Groove : G(n) | 0100 | |

# F I G. 4 4

Physical sector
number

Address

02 6AFFh    03 00000h    →Diameter

☐ : Data area          ▦ : Middle area
▨ : System lead-in area ◩ : Data lead-out area
▩ : Connection area    ▥ : System lead-out area
▤ : Data lead-in area

# FIG. 45A

Physical sector
number

Addresses optical
beam both layers

02 6AFFh    03 00000h    →Diameter

☐ : Data area          ▦ : Middle area
▨ : System lead-in area ◩ : Data lead-out area
▩ : Connection area    ▥ : System lead-out area
▤ : Data lead-in area

# FIG. 45B

Address of layer 1

*X

Physical sector
number

*X

Address of
layer 0

02 6AFFh    03 00000h    →Diameter

☐ : Data area          ▦ : Middle area
▨ : System lead-in area ◩ : Data lead-out area
▩ : Connection area    ▥ : System lead-out area
▤ : Data lead-in area

# FIG. 45C

EP 1 505 580 A2

$\Phi 44.6\ {}^{0.0}_{-0.8}$ mm

Burst cutting area

$\Phi 46.3 \pm 0.10$mm

$\Phi 46.6\ {}^{0.0}_{-0.4}$ mm

System lead-in area

Connection area

Information area

Max. diameter of data area $\Phi 116.0$mm

Data area

| SL or PTP | Data-lead-in area |
|-----------|-------------------|
| OTP | Data-lead-out area |

| SL or PTP | Data lead-out area |
|-----------|--------------------|
| OTP | Middle area |

| $\Phi 47.6\ {}^{0.0}_{-0.4}$ mm | |
|------------------|-------------------------|
| SL or PTP | Start of data-lead-in area |
| Layer 1 of OTP | Smallest data-lead-out area |

| Outside diameter of information area $\phi$ |
|---|
| less than 68.0→70.0min. |
| 68.0 to (A−1.0)→$\Phi$ of Data area+20min |
| (A−1.0) to A→(A+1.0) min. |

A : Maximum diameter of data area

Note :
SL: Single layer
PTP: Parallel track path
OTP: Opposite track path

FIG.46

| | Zone | Normal (mm) | Physical segment per 1 track | Number of track | System/land | | Groove | |
|---|---|---|---|---|---|---|---|---|
| | | | | | Number of start physical sector (hex value) | Number of end physical sector (hex value) | Number of start physical sector (hex value) | Number of end physical sector (hex value) |
| System lead-in area | Initial zone | | | | 022640 | 024AFF | | |
| | Buffer zone | | | | 024B00 | 024EFF | | |
| | Control data zone | | | | 024F00 | 0266FF | | |
| | Buffer zone | | | | 026700 | 026AFF | | |
| Connection area | Connection zone | 23.78~23.80 | ... | ... | ... | ... | ... | |
| Data lead-in area | Guard track zone | | | | 029A00 | 02A3FF | 829A00 | 82A3FF |
| | Disk test zone | | | | 02A400 | 02B3FF | 82A400 | 82B3FF |
| | Drive test zone | 23.80~24.10 | 13 | 5404 | 02B400 | 02C9FF | 82B400 | 82C9FF |
| | Guard track zone | | | | 02CA00 | 02CCFF | 82CA00 | 82CCFF |
| | Disk ID zone | | | | 02CD00 | 02CDFF | 82CD00 | 82CDFF |
| | DMA1 & DMA2 | | | | 02CE00 | 02FFFF | 82CE00 | 82FFFF |
| Data area | Zone 0 | 24.10~25.64 | 13 | | 030000 | 050D3F | 830000 | 850D3F |
| | Zone 1 | 25.64~27.47 | 14 | 5390 | 050D40 | 07AEFF | 850D40 | 87AEFF |
| | Zone 2 | 27.47~29.30 | 15 | 5390 | 07AF00 | 0A80DF | 87AF00 | 8A80DF |
| | Zone 3 | 29.30~31.14 | 16 | 5390 | 0A80E0 | 0D82DF | 8A80E0 | 8D82DF |
| | Zone 4 | 31.14~32.97 | 17 | 5390 | 0D82E0 | 10B4FF | 8D82E0 | 90B4FF |

# FIG. 47A

EP 1 505 580 A2

| | Zone 5 | 32.97~34.80 | 18 | 5390 | 10B500 | 14173F | 90B500 | 94173F |
|---|---|---|---|---|---|---|---|---|
| | Zone 6 | 34.80~36.63 | 19 | 5390 | 141740 | 17A99F | 941740 | 97A99F |
| | Zone 7 | 36.63~38.47 | 20 | 5390 | 17A9A0 | 1B6C1F | 97A9A0 | 9B6C1F |
| | Zone 8 | 38.47~40.30 | 21 | 5390 | 1B6C20 | 1F5EBF | 9B6C20 | 9F5EBF |
| Data area | Zone 9 | 40.30~42.13 | 22 | 5390 | 1F5EC0 | 23817F | 9F5EC0 | A3817F |
| | Zone 10 | 42.13~43.97 | 23 | 5390 | 238180 | 27D45F | A38180 | A7D45F |
| | Zone 11 | 43.97~45.80 | 24 | 5390 | 27D460 | 2C575F | A7D460 | AC575F |
| | Zone 12 | 45.80~47.63 | 25 | 5390 | 2C5760 | 310A7F | AC5760 | B10A7F |
| | Zone 13 | 47.63~49.46 | 26 | 5390 | 310A80 | 35EDBF | B10A80 | B5EDBF |
| | Zone 14 | 49.46~51.30 | 27 | 5390 | 35EDC0 | 3B011F | B5EDC0 | BB011F |
| | Zone 15 | 51.30~53.13 | 28 | 5390 | 3B0120 | 40449F | BB0120 | C0449F |
| | Zone 16 | 53.13~54.96 | 29 | 5390 | 4044A0 | 45B83F | C044A0 | C5B83F |
| | Zone 17 | 54.96~56.79 | 30 | 5390 | 45B840 | 4B5BFF | C5B840 | CB5BFF |
| | Zone 18 | 56.79~57.89 | 31 | 3220 | 4B5C00 | 4ED73F | CB5C00 | CED73F |
| Data lead-in area | DMA3 & DMA4 | 57.89~58.6 | 31 | 1792 | 4ED740 | 4F093F | CED740 | CF093F |
| | Guard track zone | | | | 4F0940 | 4F0C3F | CF0940 | CF0C3F |
| | Drive test zone | | | | 4F0C40 | 4F223F | CF0C40 | CF223F |
| | Disk test zone | | | | 4F2240 | 4F323F | CF2240 | CF323F |
| | Guard track zone | | | | 4F3240 | 50C73F | CF3240 | D0C73F |

F I G. 4 7 B

| L/G | Zone | Number of ECC block | Number of start physical sector number | Guard area Number of physical sector | | Groove Spare area Number of physical sector | | Groove Spare area Number of ECC block | Groove User area Number of physical sector | | Groove User area Number of ECC block | Guard area Number of physical sector | | Number of end physical sector | Start of zone (LSN) |
|---|---|---|---|---|---|---|---|---|---|---|---|---|---|---|---|
| L | 0 | 4202 | 30000 | | | 30000 | - 41F7F | 2300 | 41F80 | - 50C7F | 1896 | 50C80 | - 50D3F | 50D3F | 0 |
| L | 1 | 5390 | 50D40 | 50D40 | - 50DBF | | | 0 | 50DC0 | - 7AE3F | 5380 | 7AE40 | - 7AEFF | 7AEFF | ED00 |
| L | 2 | 5775 | 7AF00 | 7AF00 | - 7AF9F | | | 0 | 7AFA0 | - A7FFF | 5763 | A8000 | - A80DF | A80DF | 38D80 |
| L | 3 | 6160 | A80E0 | A80E0 | - A817F | | | 0 | A8180 | - D81EF | 6148 | D8200 | - D82DF | D82DF | 65DE0 |
| L | 4 | 6545 | D82E0 | D82E0 | - D837F | | | 0 | D8380 | - 10B3FF | 6532 | 10B400 | - 10B4FF | 10B4FF | 95E60 |
| L | 5 | 6930 | 10B500 | 10E500 | - 10B5BF | | | 0 | 10B5C0 | - 14163F | 6916 | 141640 | - 14173F | 14173F | C8EE0 |
| L | 6 | 7315 | 141740 | 141740 | - 1417FF | | | 0 | 141800 | - 17A87F | 7300 | 17A880 | - 17A99F | 17A99F | FEF60 |
| L | 7 | 7700 | 17A9A0 | 17A9A0 | - 17AA5F | | | 0 | 17AA60 | - 1B6AFF | 7685 | 1B6B00 | - 1B6C1F | 1B6C1F | 137FE0 |
| L | 8 | 8085 | 1B6C20 | 1B6C20 | - 1B6CDF | | | 0 | 1B6CE0 | - 1F5D9F | 8070 | 1F5DA0 | - 1F5EBF | 1F5EBF | 174080 |
| L | 9 | 8470 | 1F5EC0 | 1F5EC0 | - 1F5F9F | | | 0 | 1F5FA0 | - 23803F | 7453 | 238040 | - 23817F | 23817F | 1B3140 |
| L | 10 | 8855 | 238180 | 238180 | - 23825F | | | 0 | 238260 | - 27D31F | 8838 | 27D320 | - 27D45F | 27D45F | 1F51E0 |
| L | 11 | 9240 | 27D460 | 27D460 | - 27D53F | | | 0 | 27D540 | - 2C55FF | 9222 | 2C5600 | - 2C575F | 2C575F | 23A2A0 |
| L | 12 | 9625 | 2C5760 | 2C5760 | - 2C585F | | | 0 | 2C5860 | - 31091F | 9606 | 310920 | - 310A7F | 310A7F | 282360 |
| L | 13 | 10010 | 310A80 | 310A80 | - 310B7F | | | 0 | 310B80 | - 35EC3F | 9990 | 35EC40 | - 35EDBF | 35EDBF | 2CD420 |
| L | 14 | 10395 | 35EDC0 | 35EDC0 | - 35EEBF | | | 0 | 35EEC0 | - 3AFF9F | 10375 | 3AFFA0 | - 3B011F | 3B011F | 31B4E0 |
| L | 15 | 10780 | 3B0120 | 3B0120 | - 0B021F | | | 0 | 3B0220 | - 40431F | 10760 | 404320 | - 40449F | 40449F | 36C5C0 |
| L | 16 | 11165 | 4044A0 | 4044A0 | - 4045BF | | | 0 | 4045C0 | - 45B69F | 11143 | 45B6A0 | - 45B83F | 45B83F | 3C06C0 |
| L | 17 | 11550 | 45B840 | 45B840 | - 45B95F | | | 0 | 45B960 | - 4B5A5F | 11528 | 4B5A60 | - 4B5BFF | 4B5BFF | 4177A0 |
| L | 18 | 7130 | 4B5C00 | 4B5C00 | - 4B5D1F | | | 0 | 4B5D20 | - 4ED73F | 7121 | | | 4ED73F | 4718A0 |

FIG. 48A

EP 1 505 580 A2

| G | # | | | | | | | | | | | | | | | | | | | |
|---|---|---|---|---|---|---|---|---|---|---|---|---|---|---|---|---|---|---|---|---|
| G | 0 | 4202 | 830000 | | | | | | | | | 0 | 830000 | - | 850C7F | 1896 | 850C80 | - | 850D3F | 850D3F | 4A92C0 |
| G | 1 | 5390 | 850D40 | 850D40 | - | 850DBF | | | | | | 0 | 850DC0 | - | 87AE3F | 5380 | 87AE40 | - | 87AEFF | 87AEFF | 4C9F40 |
| G | 2 | 5775 | 87AF00 | 87AF00 | - | 87AF9F | | | | | | 0 | 87AFA0 | - | 8A7FFF | 5763 | 8A8000 | - | 8A80DF | 8A80DF | 4F3FC0 |
| G | 3 | 6160 | 8A80E0 | 8A80E0 | - | 8A817F | | | | | | 0 | 8A8180 | - | 8D81FF | 6148 | 8D8200 | - | 8D82DF | 8D82DF | 521020 |
| G | 4 | 6545 | 8D82E0 | 8D82E0 | - | 8D837F | | | | | | 0 | 8D8380 | - | 90B3FF | 6532 | 90B400 | - | 90B4FF | 90B4FF | 5510A0 |
| G | 5 | 6930 | 90B500 | 90B500 | - | 90B5BF | | | | | | 0 | 90B5C0 | - | 94163F | 6916 | 941640 | - | 94173F | 94173F | 584120 |
| G | 6 | 7315 | 941740 | 941740 | - | 9417FF | | | | | | 0 | 941800 | - | 97A87F | 7300 | 97A880 | - | 97A99F | 97A99F | 5BA1A0 |
| G | 7 | 7700 | 97A9A0 | 97A9A0 | - | 97AA5F | | | | | | 0 | 97AA60 | - | 9B6AFF | 7685 | 9B6B00 | - | 9B6C1F | 9B6C1F | 5F3220 |
| G | 8 | 8085 | 9B6C20 | 9B6C20 | - | 9B6CDF | | | | | | 0 | 9B6CE0 | - | 9F5D9F | 8070 | 9F5DA0 | - | 9F5EBF | 9F5EBF | 62F2C0 |
| G | 9 | 8470 | 9F5EC0 | 9F5EC0 | - | 9F5F9F | | | | | | 0 | 9F5FA0 | - | A3803F | 7453 | A38040 | - | A3817F | A3817F | 66E380 |
| G | 10 | 8855 | A38180 | A38180 | - | A3825F | | | | | | 0 | A38260 | - | A7D31F | 8838 | A7D320 | - | A7D45F | A7D45F | 6B0420 |
| G | 11 | 9240 | A7D460 | A7D460 | - | A7D53F | | | | | | 0 | A7D540 | - | AC55FF | 9222 | AC5600 | - | AC575F | AC575F | 6F54E0 |
| G | 12 | 9625 | AC5760 | AC5760 | - | AC585F | | | | | | 0 | AC5860 | - | B1091F | 9606 | B10920 | - | B10A7F | B10A7F | 73D5A0 |
| G | 13 | 10010 | B10A80 | B10A80 | - | B10B7F | | | | | | 0 | B10B80 | - | B5EC3F | 9990 | B5EC40 | - | B5EDBF | B5EDBF | 788660 |
| G | 14 | 10395 | B5EDC0 | B5EDC0 | - | B5EEBF | | | | | | 0 | B5EEC0 | - | BAFF9F | 10375 | BAFFA0 | - | BB011F | BB011F | 7D6720 |
| G | 15 | 10780 | BB0120 | BB0120 | - | BB021F | | | | | | 0 | BB0220 | - | C0431F | 10760 | C04320 | - | C0449F | C0449F | 827800 |
| G | 16 | 11165 | C044A0 | C044A0 | - | C045BF | | | | | | 0 | C045C0 | - | C5B69F | 11143 | C5B6A0 | - | C5B83F | C5B83F | 87B900 |
| G | 17 | 11550 | C5B840 | C5B840 | - | C5B95F | | | | | | 0 | C5B960 | - | CB5A5F | 11528 | CB5A60 | - | CB5BFF | CB5BFF | 8D29E0 |
| G | 18 | 7130 | CB5C00 | CB5C00 | - | CB5D1F | CED740-m | - | CED73F | | | M | CB5C20 | - | CED73F-m | 7121-M | | | | CED73F | 92CAE0 |
| Total | | | | | | | | | | | | 2300+M | | | | 307752-M | | | | | |

F I G. 4 8 B

EP 1 505 580 A2

FIG. 49

FIG. 50

201

211

204

Spindle motor

202

Optical head

203

Optical head movement mechanism

218

Objective lens actuator drive circuit

213

Amplifier

205

Semiconductor laser drive circuit

217

Focus/track error detection circuit

212

Binarization circuit

200

Record/reproduction/erase control waveform generation circuit

216

Feed motor drive circuit

211

PLL circuit

214

Information recording medium rotation speed detection circuit

210

Demodulation circuit

207

Modulation circuit

215

Spindle motor drive circuit

209

Error correction circuit

208

ECC encoding circuit

220

Controller

219

Semiconductor memory

222

Data input/output interface

Reproduced signal c
(Recorded signal d)

F I G. 5 1

EP 1 505 580 A2

|    | [1] | [2] | [3] | [4] | [5] | [6] | [7] | [8] | [9] | [10] | [11] | [12] | [13] | [14] | [15] | [16] | [17] | [18] | [19] | [20] | [21] | [22] |
|----|-----|-----|-----|-----|-----|-----|-----|-----|-----|------|------|------|------|------|------|------|------|------|------|------|------|------|
| A) |     |     |     |     |     |     |     |     |     |      |      |      | ○   | △   |     |     | ○   |     |      |      | △   |      |
| B) |     |     | ○   | ○   | ○   | ○   | △   | △   | ○   | △    | ○    | △    | ○   |     |     |     |      |      |      |      | ○   | ○   |
| C) |     |     | △   | △   | ○   | ○   |     |     | ○   |      |      |      |     | ○   |     |     |      |      |      |      |     | ○   |
| D) |     |     |     |     |     |     |     |     | ○   |      |      |      |     | △   |     |     |      |      |      |      |     | ○   |
| E) |     |     |     |     |     |     |     |     |     |      | ○    |      |     |     |     |     |      |      |      | ○   | ○   | ○   |
| F) | ○   | ○   | ○   | ○   |     |     |     |     |     |      |      | ○    |     |     |     |     |      |      | ○   | ○   | ○   | △   |
| G) |     |     |     |     |     |     |     |     |     | ○    |      | ○    |     |     |     |     |      |      |      | ○   | ○   |      |
| H) |     |     |     |     |     |     |     |     |     | ○    |      |      |     |     |     |     |      |      | ○   |      |     |      |
| I) |     |     |     |     |     |     |     |     |     | △    | ○    |      |     |     |     |     |      |      | ○   |      |     |      |
| J) | ○   | ○   |     |     |     |     | ○   | ○   |     |      |      |      |     |     | ○   | ○   | ○   | ○   |      | ○   |     |      |
| K) |     |     |     |     | ○   | ○   |     |     | ○   |      |      |      |     | ○   |     |     |      |      |      |      |     | ○   |

FIG.52

EP 1 505 580 A2

|  172 bytes | | | 172 bytes | |
| --- | --- | --- | --- | --- |
| 4 bytes | 2 bytes | 6 bytes | | |
| Data ID | IED | RSV | Main data (D0~D159) | Main data 172 bytes (D160~D331) |
| Main data 172 bytes (D332~D503) | | | Main data 172 bytes (D504~D675) | |
| Main data 172 bytes (D676~D847) | | | Main data 172 bytes (D848~D1019) | |
| Main data 172 bytes (D1020~D1191) | | | Main data 172 bytes (D1192~D1363) | |
| Main data 172 bytes (D1364~D1535) | | | Main data 172 bytes (D1536~D1707) | |
| Main data 172 bytes (D1708~D1879) | | | Main data 172 bytes (D1880~D2047) | EDC |

6 rows

4bytes

# FIG.53

(MSB)  b31            b24    b23                                              b0   (LSB)

| Data frame information | Data frame number |
|---|---|

| b31 | b30 | b29 | b28 | b27 | b26 | b25 | b24 |
|---|---|---|---|---|---|---|---|
| Sector format type | Tracking method | Reflectance | Type of recording | Area type | | Data type | Layer number |

# FIG. 5 4

EP 1 505 580 A2

FIG.55

F I G. 5 6

Even recorded data fields (F)

| 24 | 1092 | 24 | 1092 | 24 | 1092 | 24 | 1092 |
|---|---|---|---|---|---|---|---|
| SY0 | | SY1 | | SY1 | | SY1 | |
| SY2 | | SY1 | | SY1 | | SY3 | |
| SY1 | | SY2 | | SY2 | | SY1 | |
| SY3 | | SY2 | | SY1 | | SY2 | |
| SY3 | | SY3 | | SY3 | | SY2 | |
| SY2 | | SY2 | | SY3 | | SY2 | |
| SY3 | | SY1 | | SY3 | | SY2 | |

Sync frame  Sync frame  Sync frame  Sync frame

7 rows

F I G. 5 7 A

Odd recorded data fields (F)

| 24 | 1092 | 24 | 1092 | 24 | 1092 | 24 | 1092 |
|---|---|---|---|---|---|---|---|
| SY1 | | SY1 | | SY0 | | SY1 | |
| SY1 | | SY3 | | SY2 | | SY1 | |
| SY2 | | SY1 | | SY1 | | SY2 | |
| SY1 | | SY2 | | SY3 | | SY2 | |
| SY3 | | SY2 | | SY3 | | SY3 | |
| SY3 | | SY2 | | SY2 | | SY2 | |
| | | | | SY3 | | SY1 | |

Sync frame  Sync frame  Sync frame  Sync frame

7 rows

F I G. 5 7 B

101

| | State 0 | State 1 or State 2 |
|------|--------------------------------|--------------------------------|
| SY0 | 1000#0 01000 00000 001001 | 0100#0 01000 00000 001001 |
| SY1 | 10100# 01000 00000 001001 | 00100# 01000 00000 001001 |
| SY2 | 10010# 01000 00000 001001 | 00010# 01000 00000 001001 |
| SY3 | 00000# 01000 00000 001001 | 00#010 01000 00000 001001 |

# FIG. 58

| Lates SYNC frame number | 00 | 01 | 02 | 03 | 04 | 05 | 06 | 07 | 08 | 09 | 10 | 11 | 12 | |
|---|---|---|---|---|---|---|---|---|---|---|---|---|---|---|
| SYNC code number before 2 SYNC codes | 2 | 1 | 0 | 1 | 1 | 2 | 1 | 2 | 2 | 3 | 1 | 3 | 3 | |
| SYNC code number before 1 SYNC code | 1 | 0 | 1 | 1 | 2 | 1 | 2 | 2 | 3 | 1 | 3 | 3 | 1 | |
| Latest SYNC code number | 0 | 1 | 1 | 2 | 1 | 2 | 2 | 3 | 1 | 3 | 3 | 1 | 2 | |
| | | | | | | | | | | | | | | |
| Number of codes changed between adjacent frames | 3 | 2 | 2 | 2 | 3 | 2 | 2 | 2 | 3 | 2 | 2 | 2 | 3 | |
| Number of codes shifted one frame | 2 | 2 | 2 | 1 | 1 | 2 | 3 | 2 | 2 | 2 | 3 | 3 | 2 | |

| | 13 | 14 | 15 | 16 | 17 | 18 | 19 | 20 | 21 | 22 | 23 | 24 | 25 |
|---|---|---|---|---|---|---|---|---|---|---|---|---|---|
| | 1 | 2 | 3 | 2 | 2 | 1 | 3 | 1 | 1 | 3 | 2 | 3 | 3 |
| | 2 | 3 | 2 | 2 | 1 | 3 | 1 | 1 | 3 | 2 | 3 | 3 | 2 |
| | 3 | 2 | 2 | 1 | 3 | 1 | 1 | 3 | 2 | 3 | 3 | 2 | 1 |
| | | | | | | | | | | | | | |
| | 3 | 2 | 2 | 2 | 3 | 2 | 2 | 2 | 3 | 2 | 2 | 2 | 3 |
| | 2 | 2 | 3 | 2 | 2 | 2 | 3 | 2 | 2 | 2 | 3 | 3 | 2 |

# FIG.59

EP 1 505 580 A2

| Lates SYNC frame number | 00 | 01 | 02 | 03 | 04 | 05 | 06 | 07 | 08 | 09 | 10 | 11 | 12 |
|---|---|---|---|---|---|---|---|---|---|---|---|---|---|
| SYNC code number before 2 SYNC codes | 1 | 1 | 0 | 1 | 1 | 2 | 1 | 2 | 2 | 3 | 1 | 3 | 3 |
| SYNC code number before 1 SYNC code | 1 | 0 | 1 | 1 | 2 | 1 | 2 | 2 | 3 | 1 | 3 | 3 | 1 |
| Latest SYNC code number | 0 | 1 | 1 | 2 | 1 | 2 | 2 | 3 | 1 | 3 | 3 | 1 | 2 |
| | | | | | | | | | | | | | |
| Number of codes changed between adjacent frames | 2 | 2 | 2 | 2 | 3 | 2 | 2 | 2 | 3 | 2 | 2 | 2 | 3 |
| Number of codes shifted one frame | 2 | 2 | 2 | 1 | 1 | 2 | 3 | 2 | 2 | 2 | 3 | 3 | 2 |

| 13 | 14 | 15 | 16 | 17 | 18 | 19 | 20 | 21 | 22 | 23 | 24 | 25 | PA |
|---|---|---|---|---|---|---|---|---|---|---|---|---|---|
| 1 | 2 | 3 | 2 | 2 | 1 | 3 | 1 | 1 | 3 | 2 | 3 | 3 | 2 |
| 2 | 3 | 2 | 2 | 1 | 3 | 1 | 1 | 3 | 2 | 3 | 3 | 2 | 1 |
| 3 | 2 | 2 | 1 | 3 | 1 | 1 | 3 | 2 | 3 | 3 | 2 | 1 | 1 |
| | | | | | | | | | | | | | |
| 3 | 2 | 2 | 2 | 3 | 2 | 2 | 2 | 3 | 2 | 2 | 2 | 2 | 2 |
| 2 | 2 | 3 | 2 | 2 | 2 | 3 | 2 | 2 | 2 | 3 | 3 | 3 | 2 |

F I G. 6 0

EP 1 505 580 A2

| Contents of abnormal phenomenon → | Frame shift | | Erroneous detection | | Off-track |
|---|---|---|---|---|---|
| Contents of detected pattern ↓ | Case 1 | Case 2 | Case 3 | Case 4 | Case 5 |
| Different from planned pattern at only one location | × | ○ | ○ | × | — |
| In coincidence with pattern shifted +/- SYNC frame with respect to planned pattern | ○ | ○ | × | × | × (△) |
| (1,1,2) or (1,2,1) or (1,2,2) or (2,1,2) | — | ○ | — | — | — |
| Continuity in data ID | (○) | (○) | ○ | ○ | × |
| Continuity of wobble address | (○) | (○) | ○ | ○ | × |

FIG. 61

EP 1 505 580 A2

| 431 | | 432 |
|---|---|---|
| Sync code | | Sync data |

433
Sync frame length

433
Sync frame length

429

| Sync frame #0 | Sync frame #1 | Sync frame #2 | Sync frame #3 | ...... | Sync frame #25 |
|---|---|---|---|---|---|

230    231    420    421  233   422  234    235   423   236    237    238    241

| Sector #0 | Sector #1 | Sector #2 | Sector #3 | Sector#4 | Sector #5 | Sector #6 | Sector #7 | .... | Sector #8 | Sector#31 |
|---|---|---|---|---|---|---|---|---|---|---|

232

401

| ECC block |
|---|

223 Recording layer B

226 Inside hole

222 Recording layer A

222 Recording layer A

223 Recording layer B

221
Information recording medium

FIG.62

| Parameter | | Single layer |
|---|---|---|
| · User data capacity | | 20 Gbytes/side |
| · Wavelength of laser diode | | 405 nm |
| · Numerical aperture of objective lens | | 0.65 |
| · Data bit length | System lead-in area | 0.306 $\mu$m |
| | Data lead-in area<br>Data area<br>Data lead-out area | 0.130 to 0.140 $\mu$m |
| · Channel bit length | System lead-in area | 0.204 $\mu$m |
| | Data lead-in area<br>Data area<br>Data lead-out area | 0.087 to 0.093 $\mu$m |
| · Minimum mark length (2T) | System lead-in area | 0.408 $\mu$m |
| | Data lead-in area<br>Data area<br>Data lead-out area | 0.173 to 0.187 $\mu$m |
| · Maximum mark length (13T) | System lead-in area | 2.652 $\mu$m |
| | Data lead-in area<br>Data area<br>Data lead-out area | 1.126 to 1.213 $\mu$m |
| · Track pitch | System lead-in area | 0.68 $\mu$m |
| | Data lead-in area<br>Data area<br>Data lead-out area | 0.34 $\mu$m |
| · Physical address | Data lead-in area<br>Data area<br>Data lead-out area | *WAP<br>*WAP= Wobble Address in Periodic position<br>(Cyclic wobble address) |
| · Disk diameter<br>· Disk thickness<br>· Center hole diameter<br>· Inside diameter of data area<br>· Diameter of data area | | 120 mm<br>1.20 mm<br>15.0 mm<br>24.1 mm<br>57.89 mm |
| · User data/sector<br>· Error correction code<br>· ECC restriction sector<br>· Modulation | | 2048 bytes<br>Reed-Solomon product code<br>RS (208, 192, 17)<br>× RS (182, 172, 11)<br>32 sector<br>ETM, RLL (1, 10) |
| · Correction possible burst error length | | 7.1 mm |
| · Reference scan speed | Data lead-in area<br>Data area<br>Data lead-out area | 6.0 mm |
| | System lead-in area | 6.61 m/s |
| | Data lead-in area<br>Data area<br>Data lead-out area | 5.64 to 6.03 m/s |
| · Channel bit rate to reference speed | System lead-in area | 32.40 Mbps |
| | Data lead-in area<br>Data area<br>Data lead-out area | 64.80 Mbps |
| · User bit rate to reference speed | System lead-in area | 18.28 Mbps |
| | Data lead-in area<br>Data area<br>Data lead-out area | 36.55 Mbps |

# FIG. 63

EP 1 505 580 A2

```
                                                    ST1
  ┌──────────────────────────────────────────────┐  No        ┌──────────────────────────────┐
  │ Is detected pattern different from predicted pattern ├──────────►│ Repeat continuous reproduction │
  │ as a result of ST66 ?                          │            └──────────────────────────────┘
  └──────────────────────────────────────────────┘
                      │ Yes        ST3
                      ▼
  ┌──────────────────────────────────────────────┐  Yes
  │ Is detected pattern different from predicted pattern ├──────────────────────┐
  │ at one location ?                              │                        ▼        ST4
  └──────────────────────────────────────────────┘         ┌──────────────────────────────────────────────┐
                      │ No          Yes                     │ Is detected pattern any of (1,1,2),(1,2,1),(1,2,2),(2,1,2) ? │
   ST5                ▼                                      └──────────────────────────────────────────────┘
  ┌──────────────────────────────────────────────┐  No                          │ No
  │ Is in coincidence with pattern shifted +/-1 SYNC ├──────────┐                 ▼                ST7
  │ frame with respect to planned pattern ?        │          ▼        ┌──────────────────────────────────────────┐
  └──────────────────────────────────────────────┘                   │ It is regarded that synchronization code is │
                      │ Yes         ST6                               │ erroneously detected, and correction to planned │
                      ▼                                               │ pattern is automatically executed.         │
  ┌──────────────────────────────────────────────┐                   └──────────────────────────────────────────┘
  │ It is regarded that frame shift occurs, and    │
  │ synchronization is applied again.              │
  └──────────────────────────────────────────────┘
   ST8                │
  ┌──────────────────────────────────────────────┐  No
  │ Is continuity of data ID is secured ?          ├──────────┐
  └──────────────────────────────────────────────┘          │
                      │ Yes         ST9                       │
  ┌──────────────────────────────────────────────┐  No       │
  │ Is continuity of wobble address is secured ?   ├────────┐ │
  └──────────────────────────────────────────────┘        │ │
                      │ Yes        ST11             ST10     ▼ ▼
  ┌──────────────────────────────────────────────┐  Yes   ┌──────────────────────────────────────────┐
  │ Is continuous reproduction finished ?          ├─────┐ │ It is regarded that off-track occurs, and process │
  └──────────────────────────────────────────────┘     │ │ moves to access control of ST62.          │
                      │ No                              ▼ └──────────────────────────────────────────┘
                                              ┌───────────────────┐
                                              │ End of reproduction │─ ST12
                                              └───────────────────┘
```

# FIG. 64